# EUROPÄISCHE PATENTANMELDUNG

(11) **EP 1 708 097 A1**
(43) Veröffentlichungstag der Anmeldung: **04.10.2006**
(21) Anmeldenummer: 05007075.4
(22) Anmeldetag: 31.03.2005
(51) Int. Cl.: G06F 17/30

(54) **Rechnernetzwerksystem zum Synchronisieren einer zweiten Datenbank mit einer ersten Datenbank sowie Vorgehensweise hierfür**

(71) Anmelder: UBS AG, 8001 Zürich (CH)
(72) Erfinder: Bank, Marcel, 5452 Oberrohrdorf (CH); Loacker, Hansbeat, 8132 Egg (CH)
(74) Vertreter: Schmidt, Steffen J.

(57) **Zusammenfassung**

Rechnernetzwerksystem zum Aufbauen und/oder Synchronisieren einer zweiten Datenbank aus/mit einer ersten Datenbank, wobei wenigstens auf die erste Datenbank Zugriffe durch Arbeitseinheiten von wenigstens einer Applikations-Arbeitsstation ausgeführt werden um Inhalte der Datenbank zu erzeugen, zu verändern oder zu löschen, mit wenigstens einem ersten Server zum Vorhalten und Pflegen der ersten Datenbank, der mit der wenigstens einen Applikations-Arbeitsstation verbunden ist, wenigstens einem zweiten Server zum Vorhalten und Pflegen der zweiten Datenbank, wenigstens einer die beiden Server verbindenden Datenverbindung, wobei die Zugriffe durch die Arbeitseinheiten auf die erste Datenbank vermittels eines Kapselungsmoduls erfolgen, das dazu eingerichtet und programmiert ist, dass ihm die Arbeitseinheiten übergeben werden, von ihm übernommene Arbeitseinheiten in eine oder mehrere Nachrichten aufgelöst werden, die Nachrichten in der ersten Datenbank eingetragen werden und die Nachrichten an die zweite Datenbank versendet werden.

## Beschreibung

### Hintergrund der Erfindung

Die vorliegende Erfindung betrifft ein Rechnernetzwerksystem sowie Vorgehensweisen zum Aufbauen und/oder Synchronisieren einer zweiten Datenbank aus/mit einer ersten Datenbank. Insbesondere betrifft die Erfindung solche Rechnernetzwerksysteme, bei denen eine erste, bereits bestehende Datenbank in eine zweite, neu aufzubauende Datenbank überführt werden soll. In komplexen Systemen mit einer oder mehreren Front-End-Stationen/Applikationen und einem Back-End erfolgen Migrationen in herkömmlicher Weise derart, dass zuerst das Front-End migriert wird und anschliessend erst das Back-End. Eine gleichzeitige Migration von sowohl Front- als auch Back-End ist in der Praxis aus verschiedenen Gründen (hohe Komplexität, lange Ausfallzeiten des Systems) häufig nicht angezeigt. Vor allem bei EDV-Großprojekten, bei denen eine einschrittige Migration (sog. "big bang") von einer bestehenden Datenbankplattform zur neuen Datenbankplattform aus den unterschiedlichsten Gründen ausscheidet - zum Beispiel weil für den Zugriff auf die neue Datenbank noch nicht alle Anwendungen fertig gestellt sind, weil aus Sicherheitsgründen ein vollständiges Wechseln zur neuen Datenbank noch nicht angezeigt ist, weil noch das Betriebsverhalten der neuen Datenbank ausführlich zu untersuchen ist, oder dergl. - besteht Bedarf an einer Systematik, die einen kontrollierten, allmählichen Wechsel von der bestehenden Datenbank zur neuen Datenbank erlaubt.

Weiterhin besteht oftmals die betriebliche Anforderung, zu bestimmten, festgelegten Zeitpunkten, zum Beispiel zum Tagesende die beiden Datenbanken auf dem praktisch übereinstimmenden Stand zu haben. Mit anderen Worten sollen auf beiden Datenbank-Systemen die Daten kontinuierlich synchron gehalten und die Daten auch durch Anwender zum Beispiel mittels Applikationssoftware-Programmen bewirtschaftet werden können.

Da auch nach der erstmaligen Übertragung der Daten aus der ersten Datenbank in die zweite Datenbank (initial load) durch die kontinuierlich weitergeführte Bewirtschaftung der ersten Datenbank in kurzer Zeit eine sehr große Anzahl von Mutationen der darin gehaltenen Daten auftreten kann, sind Konzeptionen erforderlich, die hinsichtlich Rechenzeit und Transferaufwand (erforderlicher Kommunikationsbandbreite, anfallender Kosten) effizient sind. Außerdem erhöht sich die Anforderung an das System, wenn die Mutationen in die erste Datenbank online eingepflegt werden und möglichst zeitnah (zumindest nahezu in Echtzeit) auch in der zweiten Datenbank zur Verfügung zu stellen sind. Gegebenenfalls sind für Sammel- oder Gruppenmutationen auch offline Einpflegungen - zu betriebsarmen Zeiten - erforderlich und zu ermöglichen.

Da die Migration von der ersten Datenbankplattform zu der zweiten Datenbankplattform in der Regel neben applikatorischen Gründen (Betriebsablaufoptimierung, Betriebsumstrukturierung, etc.) meist aus technischen oder Informatik-Gesichtspunkten heraus vorgenommen wird (schnellerer Zugriff, komplexere Abfragemöglichkeiten, Wechsel der Hardware-Systemplattform, etc.) bestehen meist erhebliche Unterschiede hinsichtlich der physischen Implementierung, der Strukturen und der Organisationsformen zwischen der ersten und der zweiten Datenbank. Dieser Aspekt verschärft sich insbesondere, wenn zwischen der ersten Datenbank und der zweiten Datenbank hinsichtlich System-Architektür (Hardware, Betriebssystem, Datenbankdesign und Datenbank-Implementierung strukturell erheblich Unterschiede bestehen. In diesem Fall können in die erste Datenbank einzupflegende Mutationen (= Änderungen, Löschungen von bestehenden Einträgen, Anlegen und Befüllen von Neueinträgen) nicht in gleicher Weise, das heißt nicht identisch (1:1) in der zweiten Datenbank abgebildet werden. Außerdem sind Mutationen oftmals komplex, das heißt, sie betreffen eine erste Mehrzahl von Einträgen in der ersten Datenbank, aber aufgrund der abweichenden Strukturen und Organisationsformen eine andere Mehrzahl von Einträgen in der zweiten Datenbank bzw. ein Eintragen der Mutationen in anderen und/oder zusätzlichen Feldern in der zweiten Datenbank. Auch dieser Umstand schließt ein unmittelbares Einpflegen der Mutationen in identischer Weise wie sie in der ersten Datenbank erfolgt, in der zweiten Datenbank aus.

Schließlich ist zu berücksichtigen, dass bei EDV-Großprojekten in der Regel eine Mehrzahl von Computerprogramm-Applikationen auf die Datenbanken, diese mutierend, zugreift. Dieser Umstand - insbesondere bei hinsichtlich der Zugriffe quasi konkurrierenden Onlinesystemen - hat auf die Strategie des Aktuellhaltens der zweiten Datenbank erheblichen Einfluss.

Aufgrund von Laufzeiten von Nachrichten/Datenflüssen in den Netzwerken, in denen die beiden Datenbanken eingebunden sind bzw. durch die die beiden Datenbankplattformen miteinander verbunden sind, sowie anderer Einflüsse (Dateilänge, Prioritäten, etc.) in Echtzeit- bzw. Online-Umgebungen oder gar in gemischten (Echtzeit-und Stapelverarbeitungssystemen) kann nicht ohne weiteres sichergestellt werden, dass den auf die zweite Datenbank zugreifenden Applikations-Softwareprogrammen die Mutationen in exakt der gleichen Reihenfolge zur Verfügung gestellt werden, wie sie auch in der ersten Datenbank ausgeführt werden. Mit anderen Worten können Daten beim Transfer von einer Datenbank zur anderen Datenbank durch früher ausgesendete Daten überholt werden. Das hat zur unerwünschten Konsequenz, dass eine "ältere" Mutation die Daten einer "neueren" Mutation auf den "alten" Wert zurücksetzen kann. Außerdem kann durch diese Einflüsse das Problem auftreten, dass Datensätze noch nicht vollständig in der zweiten Datenbank eingepflegt sind, so dass den auf die zweite Datenbank zugreifenden Applikations-Softwareprogrammen unvollständig mutierte und damit letztlich falsche Daten zur Verfügung gestellt werden.

Nicht zuletzt ist anzustreben, dass die Qualität, die Betreibbarkeit, und Performance etc. der Ausgangsdatenbank durch den Migrationsprozess nicht erheblich - idealerweise gar nicht - eingeschränkt ist.

### Der Erfindung zugrunde liegendes Problem

Die Erfindung hat die Aufgabe, ein Rechnernetzwerksystem bereitzustellen, das die Synchronisation zweier Datenbankplattformen in effizienter Weise erlaubt und dabei Nachteile und Probleme bisheriger Konzepte, wie sie vorstehend erläutert sind, vermeidet.

### Erfindungsgemäße Lösung

Zur Lösung dieser Aufgabe stellt die Erfindung ein Rechnernetzwerksystem mit den Merkmalen des Anspruchs 1 bereit.

Dieses Konzept bietet eine Reihe unerwarteter Vorteile bei/während der Migration(sphase) und auch im Betrieb:
Der Datenverkehr, sowohl hinsichtlich des Volumens, als auch hinsichtlich des Zeitbedarfs, ist geringer als bei anderen Konzepten, bei denen zum Beispiel die Applikationssoftwareprogramme während der Migrationsphase direkt in beide Datenbanken schreiben. Außerdem ist der Anpassungsaufwand an die Applikationssoftware-programme geringer. Schließlich ist der Aufwand bei der Fehlersuche in den Datenbanken bzw. Applikationssoftwareprogrammen überschaubarer, da eine klare Zuordnung vorhanden ist, wonach lediglich das Kapselungsmodul schreibend/mutierend auf die erste Datenbank zugreifen kann und Arbeitseinheiten nach festgelegten Regeln in Nachrichten umsetzt / auflöst, die dann der zweiten Datenbank zugesandt werden.

Hinzu kommt, dass das Kapselungsmodul dazu eingerichtet und programmiert ist zu prüfen, ob es effizienter ist, die ursprüngliche Arbeitseinheit, wie sie auf die erste Datenbank zugreift, inhaltlich unverändert (aber ggf. in die einzelnen Nachrichten aufgelöst oder verteilt) an die zweite Datenbank abzusenden, oder die aus der Arbeitseinheit resultierenden geänderten Einträge (ggf. in die einzelnen Nachrichten aufgelöst oder verteilt) aus der ersten Datenbank an die zweite Datenbank zu versenden. Abhängig vom Ergebnis dieser Prüfung kann dann der entsprechende Inhalt versendet werden. Sämtliche, die erste Datenbank mutierenden Zugriffe erfolgen ausschließlich durch das Kapselungsmodul. Dazu greifen die Applikationssoftwareprogramme und auch andere (zum Beispiel Dienst-) Programme nicht direkt auf die erste Datenbank zu. Vielmehr richten sie ihre für die erste Datenbank bestimmten Mutationsbefehle an das Kapselungsmodul, welches die eigentlichen Zugriffe auf die erste Datenbank koordiniert und ausführt. Außerdem sendet das Kapselungsmodul die Mutationen (in weiter unten im Detail beschriebener Weise) auch an die zweite Datenbank. Dadurch ist sichergestellt, dass keine Mutation der ersten Datenbank für die zweite Datenbank "verloren geht". Diese Vorgehensweise bewirkt, dass die beiden Datenbankplattformen übereinstimmen.

Dieses erfindungsgemäße Konzept erlaubt außerdem die Koexistenz von und Interaktion zwischen zwei Applikationswelten, also zweier unterschiedlicher komplexer EDV-System-Umgebungen, die jeweils auf einem eigenen Datenbank-Kern (also der ersten und der zweiten Datenbank) basieren. Dezentrale Arbeitsstationen aus beiden Applikationswelten und die auf ihnen ablaufenden Applikationssoftwareprogramme können während der Koexistenz- und Migrationsphase problemlos ihre jeweils benötigten Daten aus einer der beiden Datenbanken in Echtzeit holen, verarbeiten und ggf. veränderte Daten (zumindest auf die erste Datenbank) zurück schreiben. Dabei ist es sogar möglich, dass einem Anwender der Datenbanken nicht offenbar wird, dass er mit zwei Datenbanken kommuniziert. Mit anderen Worten, der Anwender bemerkt gar nicht, dass beide Datenbanken existieren, da auch die ihm auf der Nutzeroberfläche dargebotenen Inhalte wahlweise oder gezielt auf eine oder beide der Datenbanken zugreifen können ohne dass für den Anwender im Einzelfall erkennbar ist, auf welche Datenbank der Zugriff erfolgt. Dies erlaubt einen schleichenden, für die Anwender völlig unbemerkten Wechsel von einer auf die andere Datenbank. Dabei kann es sich bei der ersten Datenbank um eine hierarchische Datenbank handeln, deren Daten in eine relationale (zweite) Datenbank oder eine objekt-orientierte (zweite) Datenbank migriert werden. Gleichermaßen ist es auch möglich, dass es sich bei der ersten Datenbank um eine relationale Datenbank handelt, deren Daten in eine objekt-orientierte (zweite) Datenbank migriert werden.

Da lediglich auf eine der beiden Datenbanken, nämlich die erste, von außen durch die Applikationssoftwareprogramme verändernd zugegriffen wird, während die zweite entsprechend den Mutationen der ersten Datenbank nachgeführt wird, haben die beiden Datenbanken wenigstens zu bestimmten Stich-Zeitpunkten (zum Beispiel zum Tagesende) praktisch identischen Inhalt.

Während der Migrationsphase ist lediglich eine Vorwärts-Synchronisation von der ersten (Master)-Datenbank zu der zweiten (Slave)-Datenbank erforderlich, da alle Applikationssoftwareprogramme nur auf die erste Datenbank (durch das Kapselungsmodul) diese mutierend zugreifen. Dabei wird mit dem Kapselungsmodul das Ziel verfolgt, dass jeder mutierende Zugriff auf die erste Datenbank auch noch an einem anderen Ort vorgenommen wird. Dieser Ort kann entweder eine Nachrichtenliste (für die Echtzeit-Übertragung), oder eine Stapeltransportdatei (für die Verarbeitung im Stapelbetrieb) sein.

Durch das Auflösen der Arbeitseinheiten (das können von einem Applikationssoftwareprogramm ausgelöste komplexe Transaktionen, also Vorgaben für Mutationen der Datenbank, die sich auf einen Sachverhalt beziehen, der durch das Applikationssoftwareprogramm abgearbeitet wird, sein) in eine oder mehrere einzelne, oder auch ihrerseits gekapselte Nachrichten ist es möglich, die ggf. unterschiedliche Datenbankstrukturen auf beiden Seiten zu berücksichtigen. Damit kommt es nicht zu Verlusten des Informationsgehaltes beim Abarbeiten der Arbeitseinheiten bzw. dem Einpflegen der Mutationen in beide Datenbanken. Außerdem ist - abhängig von der Struktur der zweiten Datenbank im Verhältnis zur ersten Datenbank - ein effizienteres Zugreifen möglich, das weniger Kommunikationsbandbreite und Rechner-/Speicher-Resourcen benötigt.

Unter ihrerseits gekapselten Nachrichten sind dabei logisch oder vom Prozessablauf zusammengehörende Daten verstanden. Diese Daten können hierarchisch strukturiert sein:

| | |
|---|---|
| Kopfteil 1 | (zum Beispiel Neukunde anlegen) |
| M Pakete (1-m) | (Name, Vorname, Kundenbetreuer, etc.) |
| Kopfteil 2 | (zum Beispiel Adresse des Neukunden anlegen) |
| N Pakete (1 - n) | (Straße, Stadt, Land, etc.) |
| Kopfteil 3 | (zum Beispiel Zusatzdaten anlegen) |
| O Pakete (1- o) | (Hobby, Geburtstag, etc.) |
| Term 3 | |
| P Pakete | |
| Term 2 | |
| Q Pakete | |
| Term 1 | |

Weiterhin ist es möglich, neue bzw. andere Organisationsstrukturen oder -kriterien (Such- oder Sortierkriterien) in der zweiten Datenbank als in der ersten Datenbank zu generieren oder zu verwenden. Auch dies erleichtert das Betreiben der zweiten Datenbank und verbessert die Effizienz der Zugriffe darauf während gleichzeitig der Betrieb der ersten Datenbank basierend auf praktisch den identischen Daten möglich ist.

Ein weiterer Vorteil des erfindungsgemäßen Konzeptes ist, dass die Migration allmählich (d.h. in Schritten) durchgeführt werden kann, in dem Applikationssoftwareprogramme, die bisher auf die erste Datenbank zugreifen, lediglich ein neues Datenübergabeprotokoll (Interface) benötigen um auf die zweite Datenbank zuzugreifen. Damit kann für den Anwender der Applikationssoftwareprogramme unerkennbar die Migration sukzessive durchgeführt werden. Die für den Anwender der Applikationssoftwareprogramme sichtbare Bedienoberfläche kann unverändert bestehen bleiben.

Ein besonders geeignetes Verwendungsgebiet des Konzeptes gemäß der vorliegenden Erfindung sind Stammdatenbestände, also Kundendaten, Partnerdaten, Produktdaten, Prozessdaten, oder dergl., im Unterschied zu Transaktionsdatenbeständen, also Kontobewegungen, Bestellungen, Lieferungen, Produktionsvorgangsdaten, etc.

In einer bevorzugten Ausführungsform der Erfindung ist das Kapselungsmodul dazu eingerichtet und programmiert, die Nachrichten mit einem die jeweilige Nachricht kennzeichnenden ersten Bezeichner zu versehen, bevor sie durch das Kapselungsmodul an die zweite Datenbank versendet werden. Dabei ist das Kapselungsmodul dazu eingerichtet und programmiert, den ersten Bezeichner von einer vorzugsweise zentralen Instanz zu holen, die den ersten Bezeichner als Zeitstempel oder als Laufnummer ausgestaltet. Damit ist sichergestellt, dass die einzelnen Nachrichten in der korrekten Reihenfolge und Zusammengehörigkeit (zu einer Arbeitseinheit) abgearbeitet werden können.

Das Kapselungsmodul sendet mit jeder für die zweite Datenbank relevanten Mutation bzw. Nachricht einen Bezeichner mit. Dieser Bezeichner, in der Regel ein Zeitstempel, wird jeder bei Mutation der zweiten Datenbank nachgeführt, wenn der Ursprung der Mutation in der ersten Datenbank liegt.

Jede Nachricht enthält den zu mutierenden oder zu erzeugenden Inhalt der ersten Datenbank, und/oder den mutierten oder erzeugten Inhalt der ersten Datenbank und wird in der ersten und/oder der zweiten Datenbank abgelegt. Jede von dem Kapselungsmodul erzeugte Nachricht hat einen technischen Kopfteil, einen applikatorischen Kopfteil, sowie dem Inhaltsteil (alt und neu) zusammen. Der Inhaltsteil (alt und neu) besteht aus einer bis zu mehrere Kilobyte umfassenden Zeichenfolge. Der Inhalt ist abhängig von der Art der Kapselung, vom Aktualisierungstyp (speichern, modifizieren, löschen), sowie vom übermittelten Inhaltstyp.

Mit anderen Worten enthält die jeweilige Nachricht, eine Kennung der auszuführenden Aktion, den zu mutierenden oder zu erzeugenden Inhalt der ersten Datenbank, und/oder den mutierten oder erzeugten Inhalt der ersten Datenbank abhängig von der auszuführenden Aktion.

Die Nachrichtenstrukturen werden wie folgt von dem Kapselungsmodul befüllt und gelten vorzugsweise auch im Stapelbetrieb so:

| Aktualisierungstyp | Applikatorischer Kopfteil | Inhalt-alt | Inhalt-neu |
|---|---|---|---|
| Store (S) Speichern | X | x ! | |
| Modify (M) Modifizieren | X | X | X |
| Delete (D) Löschen | X | X | |

Die Bereitstellung der Daten erfolgt dabei in einer Weise, die sicherstellt, dass physisch in der Nachricht möglichst wenig 'leere' Daten bzw. initialisierte Strukturen über die Infrastruktur weitergereicht werden müssen. Dies ist für die Datensicherheit relevant.

Bei allen drei Aktualisierungstypen "Store", "Modify" und "Delete" sind der Kopfteil sowie der Inhalt-alt gefüllt. Bei "Modify" liegen die Daten vor der Mutation im Inhalt-alt und die Daten nach der Mutation im Inhalt-neu. Bei "Delete" ist der Inhalt-alt mit den letzten Daten, vor dem physischen Löschen, gefüllt. Dabei wird beim Aktualisierungstyp "Delete" nur der Inhalt-alt abgefüllt, beim Aktualisierungstyp "Store" hingegen wird nur der Inhalt-neu abgefüllt.

**Beschreibung der Schnittstelle:**

| Name | Inhalt |
|---|---|
| COEX-MUTPRG | Programm-Name des Mutationsprogramms |
| COEX-AGENTC | Agenturcode |
| COEX-APCDE | Applikationscode |
| COEX-NL | Verarbeitungsniederlassung |
| COEX-UFCC-E | Programmfunktionscode |
| COEX-UPTYP | Aktualisierungs-Typ |
| | S = STORE Speichern |
| | M = MODIFY Modifizieren |
| | D = DELETE (ERASE) Löschen |
| COEX-USERID | USERID des Sachbearbeiters |
| COEX-PAKET-TIME-STAMP | Datum und Zeit (JJJJMMTThhmmssuuuuuu) der Nachricht |
| COEX-REC-TIME-STAMP | Datum und Zeit (JJJJMMTThhmmssuuuuuu) der Mutation |
| COEX-NL-KD | Niederlassung |
| COEX-KDST | Kundenstammnummer |
| COEX-OBJID | Objektidentifikation / DB1 Schlüsselfelder |
| COEX-RECTYP | Record-Typ (Recordtyp aus DB1 resp. TERM, TERM-Records enthalten keinen Datenteil) |
| COEX-REC-SEQUENCE | Record-Sequenznummer (innerhalb eines Paketes, bei TERM = höchste Sequenz pro Paket) |
| COEX-ORIGIN | Herkunft des Records |
| | 0 = Initial Load |
| | 1 = Nachlieferung (aus DB1) |
| | 2 = Synchronisation |
| | 3 = Reconciliation |
| | 4 = Funktional (DB1) |
| | 5 = Online Schwester (DB2) |
| COEX-REQUEST-TYPE | O = Online Verarbeitung |
| | B = Batch Verarbeitung |
| COEX-RESYNC-ID | Primärschlüssel von TAPCONLINEPACKAGE, respektive TAPCONLINEDATA oder von TAPCBATCHPACKAGE, re- |
| | spektive TAPCBATCHDATA für die Nachlieferung |
| COEX-RESYNC-STATUS | Enthält den Returncode der DB1 Nachlieferfunktion |
| COEX-RESERVED | Reserve |
| COEX-DATA | Record alt und neu |

Das Feld COEX-RECTYP im Kopfteil beschreibt welcher Datentyp im Inhalt-alt und Inhalt-neu enthalten ist. Bei der weiter unten erläuterten funktionalen Kapselung enthält dieses Attribut einen speziellen Transaktions-Code; ebenso die sog. Term-Nachricht.

Jede Nachricht enthält also u.a. folgende Identifikationsdaten: Nachricht-Zeitstempel (identifiziert die Datenbank 1 -Transaktion) und Sequenz-Nummer (legt die richtige Verarbeitungsreihenfolge innerhalb der Transaktion fest). Es versteht sich, dass nicht alle der in der Tabelle oben aufgeführten Parameter für die Realisierung der Erfindung zwingend erforderlich sind.

Wie bereits erwähnt, ist das Kapselungsmodul dazu eingerichtet und programmiert, die Anzahl der Nachrichten, in die eine jeweilige Arbeitseinheit aufgelöst wird, und einen ersten Bezeichner in einer Abschlussnachricht (Term-Nachricht) abzulegen, die dann durch das Kapselungsmodul an die zweite Datenbank versendet wird. Damit wird sichergestellt, dass sämtliche, zu einer Arbeitseinheit gehörenden Nachrichten erst dann im Zusammenhang mit der zweiten Datenbank abgearbeitet werden, wenn sie alle zusammen an die zweite Datenbank abgeschickt - und auch dort angekommen sind. Damit wird wirksam verhindert, dass aufgrund von parallel oder zeitnah angestoßenen Stapelverarbeitungsprozessen, aufgrund von unterschiedlichen Laufzeiten in dem EDV-Netz wegen unterschiedlicher Dateilänge, etc., ältere Daten betreffend ein Datenbankfeld neuere Daten betreffend das selbe Datenbankfeld "überholen", so dass am Ende ein falscher Eintrag in der zweiten Datenbank erfolgen würde. Gleichermaßen wird verhindert, dass Daten, die funktionale Abhängigkeiten untereinander haben, nicht in der korrekten Reihenfolge abgearbeitet bzw. in der zweiten Datenbank eingetragen werden, so dass ihre sog. referenzielle Integrität erhalten bleibt. Auf diese Weise kann die Sequenz voneinander unabhängiger Aktualisierungen auf der Seite der zweiten Datenbank nachvollzogen werden.

Weiterhin ist das Kapselungsmodul dazu eingerichtet und programmiert, die auszusendenden Nachrichten sowie die Abschlussnachricht in eine Ausgangswarteschlange zu stellen, von wo sie an eine Eingangswarteschlange einer Steuerung der zweiten Datenbank gesendet werden.

Zumindest was das Aussenden der Daten von der ersten Datenbank in der vorstehend beschriebenen Weise betrifft, sieht das erfindungsgemäße Konzept auf der Seite der zweiten Datenbank die Steuerung vor, die vorzugsweise dazu eingerichtet und programmiert ist, die an sie gesendeten Nachrichten aus der Eingangswarteschlange zu lesen, zu prüfen, ob alle zu einer Arbeitseinheit gehörenden Nachrichten in der Eingangswarteschlange angekommen sind, die entsprechenden Mutationen in der zweiten Datenbank auszuführen, wenn alle zu einer Arbeitseinheit gehörenden Nachrichten in der Eingangswarteschlange angekommen sind, und ggf. die entsprechenden Mutationen oder die sie enthaltenden, zu einer Arbeitseinheit gehörenden Nachrichten abhängig von Bedingungsvorgaben zumindest teilweise an weitere Datenbank- oder Anwendungsprogramme zu verteilen.

Mit anderen Worten verhält sich die Eingangswarteschlange wie ein Sammelbehälter, in den die zu einer Arbeitseinheit gehörenden Nachrichten als einzelne Teile eingefüllt werden und die Steuerung mit dem Mutieren der zweiten Datenbank mit den Inhalten der Nachrichten erst beginnt, wenn alle zu der den Arbeitseinheit gehörenden Nachrichten eingegangen sind. Dies stellt sicher, dass beim Mutieren der zweiten Datenbank eingehenden Inhalte nicht überrollt von einander und damit fehlmutiert werden. Insbesondere bei Mutationen, die Folge-Mutationen auslösen, ist dies ein Mechanismus, der Fehlmutationen vermeidet.

Der Kopfteil jeder Nachricht wird dabei an die zweite Datenbank bzw. deren Steuerung vorzugsweise unverändert weitergereicht, wie er in der Steuerung der zweiten Datenbank ankommt. Ebenso der Datenteil alt/neu. Zwischen dem Kopfteil und dem Datenteil kann ein für die zweite Datenbank spezifisches Teil eingefügt werden. Dies kann ein einziges Attribut sein, nämlich eine zum Beispiel 16-stellige für die zweite Datenbank spezifische Kennung des jeweiligen Datenbankeintrages. Je nach Nachrichtentyp kann dies eine Konto-ID, eine Geschäftsbeziehungs-ID, oder eine Adress-ID, oder dergl. sein. Wichtig ist, dass von der Steuerung an alle Koexistenzprogrammelemente die es im Einzelfall betrifft, dieselbe Schnittstelle, also die identische Information im identischen Format, weitergereicht wird.

Für eine (teil-)automatisierte Bewirtschaftung der verwalteten Daten stehen in der ersten Datenbank so genannte Stapelverarbeitungsprogramme zur Verfügung. Die Verwaltung (Kontrolle und Steuerung) dieser Stapelverarbeitungsprogramme erfolgt durch unabhängig von der Echtzeit-Bewirtschaftung der ersten Datenbank. Stapelverarbeitungsprogramme dienen hauptsächlich zur Verarbeitung von großen Datenmengen. Durch diese Programme werden unter anderem Files für Dritte aufbereitet, Listen produziert und interne Prozesse durchgeführt, wie zum Beispiel Massenmutationen bei allen Konti mit der Objektart xyz.

Da auch diese Massenmutationen über das Kapselungsmodul auf die erste Datenbank zuzugreifen haben, sieht die Erfindung analog zu dem Einzelzugriff durch Applikationssoftwareprogramme vor, dass erfindungsgemäß das Kapselungsmodul vorzugsweise dazu eingerichtet und programmiert ist, abhängig von dem Erreichen eines vorbestimmten Parameters von einem Stapelverarbeitungslauf kommende Arbeitseinheiten in entsprechende Nachrichten aufzulösen und in eine Transferdatenbank zu schreiben, damit nach dem Erreichen des vorbestimmten Parameters der Inhalt der Transferdatenbank an die zweite Datenbank übertragen wird.

Schließlich gibt es noch eine Zwischenlösung zwischen den Massenmutationen, die als Stapelverarbeitungslauf ausgeführt werden und den Einzelmutationen, die üblicherweise durch Applikationssoftwareprogramme ausgeführt werden. Bei dieser Zwischenlösung wird über eine Makro-Routine eine die erste Datenbank mehrfach mutierendes Applikationssoftwareprogramm aufgerufen. Damit ist es möglich, eine kleinere Anzahl (etwa in der Größenordnung von 100) von Mutationen in der Art eines Stapelverarbeitungslaufes über ein Applikationssoftwareprogramm von einer Arbeitsplatz-Station aus vorzunehmen ohne einen tatsächlichen Stapelverarbeitungslauf erstellen und abarbeiten zu lassen.

Das Kapselungsmodul ist weiterhin dazu eingerichtet und programmiert, abhängig von dem Erreichen eines vorbestimmten Parameters von einem Stapelverarbeitungslauf kommende Arbeitseinheiten in entsprechende Nachrichten aufzulösen und in eine Transferdatenbank zu schreiben. Weiterhin ist ein Monitorsoftwaremodul vorgesehen, das dazu eingerichtet und programmiert ist, nach dem Erreichen des vorbestimmten Parameters den Inhalt der Transferdatenbank an die zweite Datenbank zu übertragen. Dazu initiert das Monitorsoftwaremodul das Versenden des Inhaltes der Transferdatenbank an die zweite Datenbank nach dem Erreichen des vorbestimmten Parameters. Der vorbestimmte Parameter kann dabei eine vorbestimmte Zeit (zum Beispiel alle 10 - 30 min, oder eine bestimmte Uhrzeit, zum Beispiel eine datenverkehrsarme Nachtzeit), eine vorbestimmte Datenmenge, oder dergl. sein.

Dabei wird der Inhalt der Transferdatenbank dann vorzugsweise als eine oder mehrere geschlossene Stapeltransportdatei(en) an die zweite Datenbank übertragen. Dabei können Gruppen zusammengehöriger Nachrichten stets in eine geschlossene Stapeltransportdatei eingetragen und nicht auf zwei separate Stapeltransportdateien verteilt werden. Die Reihenfolge der einzelnen Stapeltransportdateien ist erkennbar, da sie eine entsprechende Kennung aufweisen. Dazu hat jede der Stapeltransportdateien einen Dateikopf, aus dem ersichtlich ist, in welchem Kontext, auf welche Befehlsanforderung hin, zu welchem Datum, Uhrzeit, etc. die jeweilige Stapeltransportdatei erstellt wurde. Außerdem kann der Monitor bei Fehlern bestimmte Stapeltransportdateien auf Anforderung erneut versenden.

In analoger Weise, wie auf der Seite der ersten Datenbank sämtliche Zugriffe auf die erste Datenbank durch das Kapselungsmodul verhindert, bzw. vorgenommen werden, sorgt vorzugsweise auf der Seite der zweiten Datenbank deren Steuerung erfindungsgemäß dafür, dass die zweite Datenbank ausschließlich in durch die Steuerung kontrollierter Weise mutiert wird. Deshalb werden vorzugsweise auch Stapeltransportdateien, die den Inhalt der Transferdatenbank enthalten, an die Steuerung der zweiten Datenbank - zur weiteren Verarbeitung - übertragen.

Die Steuerung der zweiten Datenbank hat vorzugsweise zu jedem Datenbank- oder Anwendungsprogramm, das Daten aus der ersten Datenbank empfängt, ein Koexistenz-Elementprogramm-Modul, das dazu eingerichtet und programmiert ist, diese Daten für das jeweilige Datenbank- oder Anwendungsprogramm spezifisch zu synchronisieren, und entsprechend den zu einer Arbeitseinheit gehörenden Nachrichten in der Eingangswarteschlange Mutationen in der zweiten Datenbank oder dem Anwendungsprogramm bzw. der zu dem jeweiligen Anwendungsprogramm gehörenden Datenbank, auszuführen. In diesem Zusammenhang ist - im Sinne einer vereinheitlichten Schnittstellengestaltung - die zweite Datenbank gleich zu behandeln, wie ein Datenbank- oder Anwendungsprogramm, das Daten aus der ersten Datenbank empfängt. Ein wesentlicher Unterschied besteht lediglich darin, dass die zweite Datenbank vor allen anderen Datenbank- oder Anwendungsprogrammen aktualisiert wird.

Dabei wird für die Steuerung der zweiten Datenbank bzw. der anderen Datenbank-oder Anwendungsprogrammen vorzugsweise in Tabellen die Information geführt, welches der Koexistenz-Elementprogramme mit welchen Inhalten zu beliefern ist. Dazu wird für jedes Datenbank- oder Anwendungsprogramm, zu der ein Koexistenz-Elementprogramm-Modul existiert eine Zeile in einer zweidimensionalen Tabelle geführt, in der das Datenbank- oder Anwendungsprogramm mit seiner Bezeichnung (Name) identifiziert ist. Damit können auf einfache Weise neue Datenbank- oder Anwendungsprogramme hinzugefügt werden. Für jede Mutation bzw. Nachricht, d.h. für jedes Attribut der Datenbank gibt es eine Spalte. In diese Spalten können drei unterschiedliche Werte eingetragen werden: {0, 1, 2}. "0" bedeutet, dass das entsprechende Datenbank- oder Anwendungsprogramm dieses Attribut nicht benötigt oder verarbeiten kann; "1" bedeutet, dass das entsprechende Datenbank- oder Anwendungsprogramm dieses Attribut verarbeiten kann, jedoch nur damit beliefert wird, falls sich dessen Wert geändert hat; und "2" bedeutet, dass das entsprechende Datenbank- oder Anwendungsprogramm dieses Attribut verarbeiten kann, und in jedem Fall damit beliefert wird.

In einer zweiten, dreidimensionalen Tabelle werden vorzugsweise "Nachrichten-Typ", "Datenbank- oder Anwendungsprogramm" und " Attribut der Datenbank" geführt. Für jeden Nachrichten-Typ gibt es erfindungsgemäß eine vorzugsweise zweidimensionale Untertabelle. Für jedes Datenbank- oder Anwendungsprogramm, zu dem es ein Koexistenz-Elementprogramm-Modul gibt, kann in der zweidimensionalen Untertabelle eine Spalte geführt werden. Das Datenbank- oder Anwendungsprogramm mit seiner Bezeichnung (Name) ist identifiziert. Damit können auf einfache Weise neue Datenbank- oder Anwendungsprogramme hinzugefügt werden. Für jedes Attribut kann es in der zweidimensionalen Untertabelle eine Zeile geben. Hier können zwei unterschiedliche Werte eingetragen werden: {0, 1}. "0" bedeutet, dass das Datenbank-oder Anwendungsprogramm von diesem Attribut der Nachricht nicht betroffen ist. "1" bedeutet, dass das Datenbank- oder Anwendungsprogramm von diesem Attribut der Nachricht betroffen ist. Die Erfindung umfasst auch die Möglichkeit, in den jeweiligen Tabellen Zeilen und Spalten zu vertauschen.

Es liegt auch im Bereich der vorliegenden Erfindung, diese die Information für die Steuerung der zweiten Datenbank bzw. der anderen Datenbank- oder Anwendungsprogramme anstatt in Tabellen zu führen, in verketteten, ggf. mehrdimensional organisierten Datenobjekt-Strukturen vorzuhalten und zu pflegen.

Die Steuerung der zweiten Datenbank ist erfindungsgemäß weiterhin dazu eingerichtet und programmiert, dass die zu einer Arbeitseinheit gehörenden Nachrichten an die jeweiligen Koexistenz-Elementprogramm-Modüle übertragen werden können, von denen diese Nachrichten weiterverarbeitet werden, wobei die jeweiligen Koexistenz-Elementprogramm-Module vorzugsweise dazu eingerichtet und programmiert sind, nach einer erfolgreichen Weiterverarbeitung durch ein jeweiliges Koexistenz-Elementprogramm ein OK-Flag in einer Tabelle zu setzen, und/oder ein NOK-Flag (nicht OK-Flag) zusammen mit der Bezeichnung des jeweiligen Koexistenz-Elementprogramms in einer Fehlerbehandlungstabelle einzutragen, damit sie einer Visualisierung und/oder Nacharbeitung bzw. Fehlerbehebung zur Verfügung stehen.

Erfindungsgemäß ist vorgesehen, dass die Nacharbeitung bzw. Fehlerbehebung von nicht erfolgreich durch Koexistenz-Elementprogramme weiterverarbeiteten Nachrichten vorzugsweise entweder durch ein wiederholtes Versenden der nicht erfolgreich durch Koexistenz-Elementprogramme weiterverarbeiteten Nachrichten durch die Steuerung der zweiten Datenbank an das jeweilige Koexistenz-Elementprogramm zur erneuten Weiterverarbeitung, durch eine Nachlieferung der nicht erfolgreich durch Koexistenz-Elementprogramme weiterverarbeiteten Nachrichten aus der ersten Datenbank - durch die Steuerung der zweiten Datenbank - an das jeweilige Koexistenz-Elementprogramm zur erneuten Weiterverarbeitung, oder ein Löschen der nicht erfolgreich durch Koexistenz-Elementprogramme weiterverarbeiteten Nachrichten aus der zweiten Datenbank erfolgt.

Erfindungsgemäß enthält ein Nachrichten-Paket vorzugsweise 1 bis n Nachrichten einer Transaktion, die auf die erste Datenbank angewandt wurde. Eine Nachricht kann für eine Vielzahl von Koexistenzprogrammelemente relevant sein. Alle Nachrichten einer Transaktion der ersten Datenbank (sog. Pakete) können auch im Kontext der zweiten Datenbank in einer Transaktion verarbeitet werden. Die Nachlieferung erlaubt es, alle Nachrichten eines Paketes der ersten Datenbank an die zweite Datenbank nachzuliefern. Solche Pakete können als für die Nachlieferung bestimmt gekennzeichnet werden. Ein periodischer Stapelverarbeitungslauf kann alle gekennzeichneten Pakete selektieren, die nachzuliefernden Nachrichten in eine Datei schreiben und dieses an die erste Datenbank übermitteln. In der ersten Datenbank kann die Datei eingelesen werden und die entsprechenden Nachrichten über die Synchronisationsinfrastruktur an die zweite Datenbank übermittelt werden. Im Kontext der zweiten Datenbank kann das nachgelieferte Paket verarbeitet werden und das gekennzeichnete, sowie das nachgelieferte Paket können den Fehlerstatus "Nachgeliefert" erhalten.

Die Wiederholen-Funktion erlaubt es erfindungsgemäß, ein Paket, welches durch die Steuerung nicht erfolgreich verarbeitet werden konnte, pro Koexistenzprogrammelement erneut zu verarbeiten. Ein Anwenden dieser Funktion bietet sich bei Sequenz-und/oder Infrastrukturproblemen an.

Die Abschließen-Funktion ermöglicht es erfindungsgemäß, den Fehlerstatus eines Paketes auf den Fehlerstatus "Erledigt" zu setzen. Dabei können Pakete für jedes einzelne der Koexistenzprogrammelemente auf "Erledigt" gesetzt werden.

Die Nacharbeitung bzw. Fehlerbehebung erlaubt es erfindungsgemäß, die Eingangsdaten (sowohl die in Echtzeit bereitgestellten Daten, als auch die durch Stapelverarbeitung bereitgestellten Daten) der Steuerung der zweiten Datenbank mit in einer Fehlerdatenbank protokollierten Fehlerereignissen zu verknüpfen und in einer Fehlerberichts-Datenbank zu speichern. Die Daten der Nacharbeitung bzw. Fehlerbehebung sind in der Datenbank der Steuerung der zweiten Datenbank integriert. Können die Nachrichten aus einer Transaktion von der ersten in die zweite Datenbank in letzterer nicht appliziert werden, so verbleiben diese vorzugsweise in der Datenbank der Steuerung der zweiten Datenbank, wo sie durch die Nacharbeitung bzw. Fehlerbehebung bearbeitet werden.

Beim Aufzeichnen von Fehlerereignissen wird bevorzugt als Primärschlüssel die Nachricht, bei der das Fehlerereignis aufgetreten ist, abgelegt. Dadurch ist in der Fehleranalyse die Zuordnung der Fehlerereignis-Einträge zu dieser Nachricht möglich. Dies ist notwendig, weil bzw. wenn die Fehlerereignis-Einträge nicht auf eine Nachricht, sondern auf ein Paket in der Nacharbeitung bzw. Fehlerbehebung verweisen.

Damit die Fehleranalyse nicht übermäßig viel Zeit in Anspruch nimmt, schreiben die Fremdapplikations-Softwareprogramme erfindungsgemäß im Fehlerfall möglichst differenzierte und aussagefähige Fehlermeldungen in die Fehlerereignis-Einträge schreiben. Dies erleichtert die Fehlersuche in den Programmen.

Den Koexistenz-Elementprogrammen stehen erfindungsgemäß zwei Rückmeldungen an die Steuerung zur Verfügung. Je nach dem, welche Rückmeldungen zurückgegeben werden, verhält sich die Steuerung der zweiten Datenbank unterschiedlich.

| **Fehler** | **Unterstützende Funktionen** |
|---|---|
| 1. Fehler-Erkennung | • differenzierte Erkennung von möglichen Fehlerzuständen. |
| | • Schnittstelle zur Fehler-Registrierfunktion, welcher die Fehler-Aufzeichnung ausführt. |
| 2. Fehler-registrierung | • **Fehler-Registrierfunktion** |
| | • Aufzeichnung des Fehlerereignisses |
| | • Speichern der nicht verarbeitbaren eingehenden Nachricht, dabei wird die Verknüpfung der nicht verarbeitbaren Nachricht mit allen dazugehörenden Fehler Einträgen sichergestellt. |
| 3. Fehler-analyse | • **Anzeige Fehler Übersicht** |
| | Liste mit allen eingehenden Nachrichten der Fehler-Tabelle anzeigen. |
| | • Filter setzen nach Fehlerstatus, Datum und Zeit von, Datum und Zeit bis, Niederlassung, Kundenstamm Nr., Objekt ID, Nachrichten-Typ, Mutationsprogramm. |
| | **• Anzeige Detail fehlerhafte Mutation** |
| | Die Visualisierung der eingehenden Nachricht respektive de-ren Inhalt. |
| | • **Generierte Fehlermeldungen** |
| | Alle zu einer eingehenden Nachrichten gehörenden Fehler Einträge anzeigen. |
| | **• Aufruf Wiederholen-Funktion** |
| | **• Aufruf Nachlieferung** |
| 4. Fehler- behebung | **• Wiederholen-Funktion** |
| | Die Wiederholen-Funktion erlaubt es, ein Paket, welches durch die Steuerung der zweiten Datenbank nicht erfolgreich verarbeitet werden konnte, erneut zu verarbeiten. |
| | **• Nachlieferung** |
| | Die Nachlieferung erlaubt es, ein Paket, welches durch die Steuerung der zweiten Datenbank nicht erfolgreich verarbeitet werden konnte, erneut aus der ersten Datenbank nachzuliefern. |
| | **• Abschliessen** |
| | Die Abschliessfunktion erlaubt es, ein Paket, welches durch die Steuerung der zweiten Datenbank nicht erfolgreich verarbeitet werden konnte, manuell auf den Fehlerstatus "Erledigt" zu setzen. |

Bei Sequenzproblemen stellt die Nacharbeitung bzw. Fehlerbehebung die Wiederholen-Funktion zur Verfügung. Falls ein Koexistenz-Elementprogramm ein Sequenzproblem feststellt, so kann es durch die Rückmeldung einen automatischen Wiederholen-Versuch veranlassen. Die Rückmeldung, sowie deren erlaubten Werte und deren Bedeutung sind nachstehend beschrieben.

Die Softwareprogramm-Komponenten, welche im Umfeld der zweiten Datenbank verwendet werden, benutzen erfindungsgemäß bei allen "Warnung" und "Ausnahme" Fehlerereignissen die Fehlerberichts-Datenbank um Fehler einzutragen und die betriebliche Überwachung weiterzuleiten. Folgende Tabelle beschreibt, wie die Fehlerereignisse klassifiziert werden.

| **Status** | **Rückmeldung** | **Beschreibung** |
|---|---|---|
| **OK** | **00** | Erfolgreiche Verarbeitung. Die Fehlerbehandlung/ Nachbearbeitung war nicht involviert. |
| **Warnung** | **04** | Die Verarbeitung wurde durchgeführt, soll jedoch nochmals überprüft werden. |
| **Ausnahme** | **08** | Die gewünschte Verarbeitung konnte nicht durchgeführt werden und wurde abgebrochen. Sämtliche Ressourcen wurden auf den ursprünglichen Zustand zurückgesetzt. Im Falle einer Eingabenvalidierung können vor Abbruch der Verarbeitung mehrere Fehler protokolliert werden. |
| **ErzwungenerAbbruch (Aus nahme)** | **12** | Dieser Status ist für Stapeldateiverarbeitungen vorgesehen. Bei seinem Auftreten soll die ganze Verarbeitung abgebrochen werden (Programm Stopp). |

Um eine Adaptierbarkeit des Kapselungsmoduls an unterschiedliche Anforderungen zu erreichen, ist dieses dazu eingerichtet und programmiert, seine Funktionalität durch Referenzdaten zu steuern. Dabei können die Referenzdaten das Kapselungsmodul so steuern, dass die erste Datenbank mutiert wird, und/oder eine oder mehrere Nachrichten an die zweite Datenbank versendet wird.

In einer bevorzugten Ausführungsform der Erfindung ist das Kapselungsmodul dazu eingerichtet und programmiert, das Versenden von Nachrichten an die zweite Datenbank in Abhängigkeit von logischen Schaltern durchzuführen, die vorzugsweise extern und/oder von einem Programm gesteuert sind.

Das Kapselungsmodul stellt die Funktionalität bereit um die von einem Applikationssoftwareprogramm initiierten Online- oder Stapelverarbeitungsmutationen im Kontext der ersten Datenbank an die zweite Datenbank senden zu können. Die Funktionalität des Kapselungsmoduls wird durch Referenzdaten-Tabellen gesteuert. Die Referenzdaten steuern ob eine Nachricht an die zweite Datenbank gesendet werden soll. Die Nachführung der zweiten Datenbank wird erfindungsgemäß durch zwei (oder mehr) Schalter gesteuert. Mit dem ersten Schalter wird zum Beispiel pro Geschäftseinheit definiert, ob die zweite Datenbank nachgeführt werden soll oder nicht. Der zweite Schalter steuert für jedes Applikationssoftwareprogramm, ob die hierdurch angestoßene Mutation auch in der zweiten Datenbank nachgeführt werden soll. Die zweite Datenbank wird also nur nachgeführt, wenn beide Schalter "an" sind. Das heißt, wenn die zweite Datenbank für diese Geschäftseinheit nachzuführen ist (1. Schalter) und wenn das aktuelle Applikationssoftwareprogramms einen Eintrag enthält, dass die zweite Datenbank nachzuführen ist (2. Schalter). Durch diese Funktionalität ist eine präzise gesteuerte Migration der Datenbankplattform gewährleistet.

Unter funktionaler Kapselung ist hierin verstanden, sämtliche Mutationen einzelner Attribute auf die erste bzw. die zweite Datenbank zu übertragen. Dies ermöglicht, sämtliche Mutationen kontrolliert und mit geringerem Übertragungsaufwand an weitere Softwareprogrammkomponenten weiterzuleiten. Von diesen Softwareprogrammkomponenten wird dann die Funktion (Modify, Delete, Insert) in der zweiten Datenbankumgebung ausgeführt. Die aus der Anwendung der Arbeitseinheit auf die erste Datenbank resultiernden mutierten Einträge werden mittels einzelner Funktionen aus der ersten Datenbank an die zweite Datenbank versendet. Alternativ dazu werden die aus der Anwendung der Arbeitseinheit auf die erste Datenbank resultierenden mutierten Einträge mittels einzelner Nachrichten aus der ersten Datenbank an die zweite Datenbank versendet. Bei der letzgenannten, recordbasierten Synchronisation oder Kapselung werden bei Mutationen der ersten Datenbank sämtliche mutierten Records (=Datenbankeinträge) von der ersten auf die zweite Datenbank synchronisiert. Bei der funktionalen Synchronisation oder Kapselung werden bei Mutationen der ersten Datenbank nicht sämtliche mutierten Records von der ersten auf die zweite Datenbank synchronisiert, sondern auch die Ursprungsmeldung weitergereicht, welche an die Transaktion gesandt wurde. Dasselbe gilt auch bei einer Synchronisation von der zweiten Datenbank zurück in die erste Datenbank.

Die erfindungsgemäße Konzeption stellt sicher, dass die Dauer der unterschiedlichen Tagesendverarbeitungen (oder Abschlüsse zu anderen Zeitpunkten) sich nicht so sehr verändert, dass die abhängigen Verarbeitungen im vorgesehenen Zeitrahmen nicht abgeschlossen werden können. Die Nachführung der Online Mutationen ist mit dem erfindungsgemäßen Konzept innerhalb von wenigen Sekunden in der zweiten Datenbank erfolgreich abgeschlossen. Für die Nachführung der Batch (Stapelverarbeitungs-) Mutationen in der zweiten Datenbank sind einige zehn Minuten (20 - 40 min.) ausreichend.

Durch die Erfindung kann sichergestellt werden, dass jede für die erste Datenbank bestimmte Mutation auf durch das Kapselungsmodul erkannt und an die zweite Datenbank gesendet wird, wobei
- die Mutation während dem Transport zu der zweiten Datenbank nichts verfälscht wird,
- die Mutation in der zweiten Datenbank auch ankommt,
- die Mutation in der zweiten Datenbank in der richtigen Sequenz appliziert wird,
- bei abnormaler Beendigung der Verarbeitung auf der zweiten Datenbank nochmals aufgesetzt werden kann, respektive eine Fehlerbehandlung erfolgt. Eine durch Verarbeitungseinheiten gesteuerte Einführung ist möglich. Die Datenkonsistenz ist gewährleistet, und
- nicht vorhersehbare Unstimmigkeiten zwischen den beiden Datenbanken (zum Beispiel applikatorische Fehler) können durch Reconciliation behoben werden.

Insbesondere für die Fehlersuche und das Nachvollziehen von Vorgängen ist es vorteilhaft, wenn ein Mutationsnachweis für in der ersten Datenbank und/oder der zweiten Datenbank vorgenommene Mutationen vorzugsweise in der jeweiligen Datenbank oder in einer Arbeitsdatenbank registriert wird. Ein klassischer Fall hierfür ist der Domizilwechsel eines Kunden.

Der wesentliche Grund für die Anwendung der funktionalen Kapselung besteht darin, dass die Anzahl mutierter Records nicht vorhersehbar ist und bei einzelnen Mutationen eine erhebliche Anzahl von Folgemutationen nach sich ziehen kann. Sobald eine Transaktion eine größere Anzahl (etwa in der Größenordnung von 100 oder mehr) von Mutationsaufrufen absetzt, verschlechtert sich die Performance des Gesamtsystems beträchtlich. Dies bedeutet, dass sich die Antwortzeiten auf mehrere Sekunden verlängern und dadurch die Transaktion aufgrund eines time out (Zeitsperre) abgebrochen wird. Wenn die Infrastruktur der ersten Datenbank nicht mehr als 20 - 30 persistente Nachrichten pro Sekunde verarbeiten kann, führt ein Nachführen redundanter Daten durch eine Transaktion zu einem derartigen time out.

Es besteht eine funktionale Abhängigkeit, sobald die Mutation eines bestimmten Attributes der ersten Datenbank eine unbestimmte Anzahl Mutationen anderer Attribute der ersten Datenbank auslöst.

Erfindungsgemäß kann weiterhin wenigstens eine Softwareprogrammkomponente vorgesehen sein, durch die bei einer von einer Applikations-Arbeitsstation auf die erste Datenbank initiierten Transaktion eine Schwester-Transaktion auf zweite Datenbank aufgerufen werden kann und umgekehrt, wobei sich aus der Sicht der Applikations-Arbeitsstation die Schwester-Transaktion auf der Seite der zweiten Datenbank analog zu ihrem Pendant auf der Seite der ersten Datenbank verhält.

Das erfindungsgemäße Konzept der Schwester-Transaktionen hat in Verbindung mit der Koexistenz der ersten und der zweiten Datenbank den Vorteil, dass sowohl für Clients als auch für dezentrale Anwendungen die Migration der DatenbankPlattformen (des Back-Ends) transparent, das heißt unsichtbar ist. Ferner gestattet dieses Konzept eine Überprüfung der neuen Komponenten der zweiten Datenbank-plattform, indem z.B. die Datenbankinhalte beider Seiten verglichen werden. Inkonsistenzen deuten auf Fehler auf der Seite der zweiten Datenbank hin. Ein weiterer Vorteil ist, dass die Migration schrittweise (z.B. eine Niederlassung nach der anderen) vollzogen werden kann.

Das Ziel und der Zweck der Portierung von Transaktionen aus der ersten Datenbank-plattform in den Kontext der zweiten Datenbankplattform als sogenannte Schwestertransaktionen liegt darin, dass die zu der ersten Datenbankplattform existierenden Funktionalitäten, Dienste und Daten möglichst schnell im Kontext der zweiten Datenbankplattform zur Verfügung gestellt werden sollen. Dabei wird erfindungsgemäß mit den gleichen Quellprogrammen gearbeitet (sog. Single Source Concept). Dies ermöglicht, während der Migrationsphase nur einen Quellcode, nämlich den der ersten Datenbankplattform zu warten (und ggf. zu modifizieren). Bei der Aktivierung der Schwestertransaktionen im Kontext der zweiten Datenbankplattform werden die Schnittstellen der/zu den Applikationssoftwareprogramme/n nicht verändert. Damit sind die Applikationen von dieser Portierung und Aktivierung nicht betroffen.

Zudem wird durch die Portierung/Migrierung der Daten der ersten Datenbank und ihrer Funktionen auf die zweite Datenbankplattform die Ablösung der ersten Datenbank durch mehrere Softwareprogrammkomponenten erheblich vereinfacht, da etwaige technische Probleme einer systemübergreifenden Ablösung behebar sind.

Eine Schwestertransaktion besteht aus einem oder mehreren Software-Programm-Modulen. Ein Software-Programm- Modul ist zum Beispiel ein Cobol Programm, welches die Verarbeitungslogikanweisungen enthält und über Primitives auf das System zugreift. Ein Primitive besteht wiederum aus einem Makro, welches zum Beispiel in der Computersprache Delta geschrieben ist, und einem Programm-Modul, das zum Beispiel in der Computersprache Cobol geschrieben ist. Das Makro stellt dabei in der zweiten Datenbankumgebung dieselbe Schnittstelle wie in in der ersten Datenbankumgebung zur Verfügung, greift jedoch im Hintergrund auf neue Cobol Module zu. Das Cobol Modul benutzt die Infrastruktur der zweiten Datenbank-Komponenten, um die Verarbeitung im neuen Umfeld nach alter Funktion sicherzustellen.

Damit basiert eine Schwestertransaktion, die in die zweite Datenbankumgebung portiert ist, auf demselben Cobol-Programmcode wie die "ursprüngliche" Transaktion in der ersten Datenbankumgebung. Mit anderen Worten ist eine Schwestertransaktion in der zweiten Datenbankumgebung ein identisches Duplikat der jeweiligen Transaktion in der ersten Datenbankumgebung, mit dem - wesentlichen - Unterschied, dass die Systemumgebung auf der zweiten Datenbankseite simuliert wird.

Dies erlaubt, im Zusammenspiel mit der oben beschriebenen Portierung der Applikationssoftwareprogramme und der Transaktionsprogramme (zum Beispiel) in der Programmsprache Cobol, dass Wartungsarbeiten an der Software weiterhin im Kontext der ersten Datenbank betrieben und anschließend Code-Aktualisierungen - auch automatisiert - in den Kontext der zweiten Datenbank transferiert werden können.

Da die Schnittstellen der Schwestertransaktionen in der zweiten Datenbankumgebung genau den Originaltransaktionen in der ersten Datenbankumgebung entsprechen, kann präzise konfiguriert werden, ob und wie die Originaltransaktionen in der ersten Datenbankumgebung oder die Schwestertransaktionen in der zweiten Datenbankumgebung benutzt werden soll. Solange die erste Datenbankumgebung Master ist, werden sämtliche Mutationen des Datenbestandes über die Originaltransaktionen in der ersten Datenbankumgebung ausgeführt. Wahlweise können jedoch bereits einige nur lesende Schwestertransaktionen in auf der Seite der zweiten Datenbankumgebung aktiviert werden. Während dieser Zeit wird zwischen der zweiten Datenbankumgebung und der ersten Datenbankumgebung recordorientiert und funktional synchronisiert. Für eine funktionale Synchronisation können bereits vor dem Zeitpunkt, zu dem die zweite Datenbank als Master fungiert, einige modifizierende oder schreibende Schwestertransaktionen zum Einsatz kommen. Dazu wird dieselbe Nachricht übermittelt, die bereits Kontext der ersten Datenbank verarbeitet worden ist. Allerdings ist es nicht mehr erforderlich, auf der Seite der Schwestertransaktionen eine erneute Eingabenvalidierung durchzuführen.

Die in Echtzeit (online) ausgeführten Mutationen auf der Seite der ersten Datenbank benutzen bereits das Kapselungsmodul der ersten Datenbank. Dieses Kapselungsmodul erlaubt es, sämtliche mutierten Records aus der ersten Datenbank in die zweite Datenbank synchronisiert werden können (Record Synchronisation). Die Records werden auf der Seite der zweiten Datenbank an die Koexistenz-Hauptsteuerung geschickt, welche die Koexistenz-Elementprogramme und die entsprechenden Applikationsprogramm-Elemente (Softwarekomponenten) im Kontext der zweiten Datenbankplattform nachführt. Das Kapselungsmodul wird einmal portiert und anschliessend auf die Umgebung der zweiten Datenbank angepasst. So können Änderungen an den Datenbankinhalten über die Koexistenz-Hauptsteuerung an die Koexistenz-Elementprogramme und die entsprechenden Applikationsprogramm-Elemente (Softwarekomponenten) im Kontext der zweiten Datenbankplattform geschickt werden.

Modifizierende Schwestertransaktionen verwenden den selben Mechanismus wie die Record Synchronisierung, um auf in zweite Datenbank und die entsprechenden Applikationsprogramm-Elemente (Softwarekomponenten) im Kontext der zweiten Datenbankplattform zu schreiben.

Nachdem sämtliche Schwestertransaktionen mit der zweiten Datenbankumgebung zur Verfügung stehen, kann diese als Master definiert werden. Ab diesem Zeitpunkt erfolgen sämtliche Echtzeit- (aber auch die Stapelverarbeitungs-) Mutationen über die Schwestertransaktionen, welche nach erfolgreicher Mutation der zweiten Datenbank die Synchronisation zu der ersten Datenbank auslösen. Diese Synchronisation erfolgt in dieser Phase ausschliesslich funktional, d.h. sämtliche eingehenden Nachrichten oder Transaktionen werden unverändert an die erste Datenbank weitergeleitet und dort nachgeführt. Sobald diese Phase abgeschlossen ist, kann die Ablösung der Schwestertransaktionen erfolgen.

Die Schwestertransaktionen können aber auch für die funktionale Synchronisation der ersten Datenbank auf die zweite Datenbank verwendet werden, da damit dieselben Daten und Funktionen auf beiden Seiten zur Verfügung stehen. Wie oben erläutert können selbst für eine etwaige Rückwärts-Synchronisation von der zweiten zur ersten Datenbank somit sämtliche Nachrichten identisch benutzt werden, um die beiden Systeme synchron zu halten.

Das erfindungsgemäße Konzept der Schwester-Transaktionen hat in Verbindung mit der Koexistenz der ersten und der zweiten Datenbank den Vorteil, dass sowohl für Clients als auch für dezentrale Anwendungen die Migration der DatenbankPlattformen (des Back-Ends) transparent, das heißt unsichtbar ist. Ferner gestattet dieses Konzept eine Überprüfung der neuen Komponenten der zweiten Datenbankplattform, indem z.B. die Datenbankinhalte beider Seiten verglichen werden. Inkonsistenzen deuten auf Fehler auf der Seite der zweiten Datenbank hin. Ein weiterer Vorteil ist, dass die Migration stufenweise (z.B. eine Niederlassung nach der anderen) vollzogen werden kann.

Zusammenfassend ist festzustellen, dass das Konzept der Schwestertransaktionen eingesetzt werden kann, um die funktionale Synchronsiation der beiden Datenbanken sicherzustellen. Weiterhin werden Schwestertransaktionen eingesetzt, um die zweite Datenbank als Master zu bewirtschaften und zwar identisch wie die erste Datenbank und ohne Auswirkungen in den Echtzeit-Schnittstellen. Schwestertransaktionen können eingesetzt werden, um den Aufbau einzelner Software-Programmkomponenten schrittweise zu ermöglichen. Sie dienen zur Sicherung falls einige Software*-Programmkomponenten noch nicht als Master im Umfeld der zweiten Datenbank zur Verfügung stehen.

Die erste Datenbank ist Master, solange Mutationen zuerst in ihr und erst danach in der zweiten Datenbank erfolgen. Während dieser Zeit wird die zweite Datenbank als Slave von der ersten Datenbank geführt.

Die zweite Datenbank ist Master, sobald die Mutationen zuerst auf sie und ggf. erst danach in der ersten Datenbank erfolgen. Ab diesem Zeitpunkt kann die erste Datenbank als Slave von der zweiten Datenbank geführt, wenn und soweit dies erforderlich ist. Um diesen Schritt durchführen zu können, müssen sämtliche Schwestertransaktionen vorhanden sein. Zudem dürfen keine Applikations-Softwareprogramme mehr schreibend auf dier erste Datenbank zugreifen, weder in Echtzeit, noch im Stapelverarbeitungsbetrieb.

Software-Programmkomponenten können Master sein, sobald sämtliche Mutationen, welche im Kontext der zweiten Datenbank relevant sind, zuerst in den Software-Programmkomponenten durchgeführt und erst danach in der zweiten und ggf. in der ersten Datenbank nachgeführt werden. In diesem Fall werden sowohl die zweiten Datenbank als auch die erste Datenbank als Slave geführt. Um diesen Stand zu erreichen, müssen sämtliche Daten der zweiten und der ersten Datenbank in den Software-Programmkomponenten vorhanden sein und auch durch diese Software-Programmkomponenten verwaltet werden.

Die Bewirtschaftung der ersten Datenbank kann erst beendet werden, wenn keine Applikations-Softwareprogramme im Umfeld der ersten Datenbank mehr Daten aus dieser benötigen.

Abhängig von der Herkunft der Mutation - aus dem Kontext der ersten oder aus dem Kontext der zweiten - wird zwischen den beiden zwei Synchronisationsrichtungen unterschieden. Die Herkunft der Mutation definiert somit, ob die erste oder die zweite Datenbank Master für eine spezifische Transaktion und eine bestimmte Verarbeitungseinheit bzw. Niederlassung ist. Während der Migration ist es möglich, dass für eine Transaktion die erste Datenbank bei gewissen Verarbeitungseinheiten Master ist, und gleichzeitig die zweite Datenbank für andere Verarbeitungseinheiten.

Bei der Synchronisation in der Richtung von der ersten zur zweiten Datenbank wird entweder recordorientiert oder funktional synchronisiert. Dabei wurden dieTransaktionen in drei Kategorien unterteilt. Dies gestattet eine Priorisierung der zu portierenden Applikations-Softwareprogramme.

Ein erster Typ von Transaktionen löst eine Record-orientierte (d.h. Datenbankeintrags-orientierte) Synchronisation aus. Diese Transaktionen sind insbesondere einzusetzen, wenn nur wenige Einträge der ersten Datenbank von einer solchen Mutation betroffen sind.

Ein zweiter Typ von Transaktionen löst eine funktionale Synchronisation aus. Diese Transaktionen sind insbesondere einzusetzen, wenn eine grössere Anzahl von Einträgen der ersten Datenbank von einer solchen Mutation betroffen sind.

Bei der Record-orientierten Synchronisation werden sämtliche durch eine Transaktion der ersten Datenbank mutierten Einträge durch das Kapselungsmodul zur Koexistenz-Hauptsteuerung übermittelt. Die Koexistenz-Hauptsteuerung ruft dabei zuerst das oder die Koexistenz-Dienstprogramme des Koexistenz-Elementes der zweiten Datenbankumgebung auf, um die Einträge bzw. die Mutationen der ersten Datenbank in die zweite Datenbankumgebung zu bringen. Nach erfolgreicher Mutation der zweiten Datenbankeinträge wird von Koexistenz-Hauptsteuerung das oder die Koexistenz-Elemente bzw. die Koexistenz-Dienstprogramme der Applikationssoftware-Programme (z.B. Partner) aufgerufen, welche die Adaptionsregeln (Mappinglogik) von der ersten auf die zweite Datenbank bzw. auf die Applikationssoftware-Programme in der zweiten Datenbankumgebung enthalten.

In diesem Fall werden die Schwestertransaktionen der ersten Datenbankumgebung nicht benötigt, um die Daten erfolgreich in die zweiten Datenbankumgebung zu bringen.

Bei einer funktionalen Synchronisation werden die durch eine oder mehrere Transaktionen mutierten Einträge der ersten Datenbank nicht über das Kapselungsmodul und die Synchronisationsinfrastruktur in Echtzeit zur Koexistenz-Hauptsteuerung übermittelt, sondern die an die Transaktion(en) der ersten Datenbank gesandte originale Eingangsnachricht. Die Koexistenz-Hauptsteuerung erkennt aufgrund der Nachrichtenbezeichnung, dass es sich um eine Eingangsnachricht und nicht um eine Record-Nachricht handelt, und leitet die Verarbeitung direkt an diejenige der Schwestertransaktionen der ersten Datenbank weiter, welche dieselbe Verarbeitung ausführt. Wenn auch das Kapselungsmodul der ersten Datenbank portiert ist, können sämtliche Mutationen der zweiten Datenbank ebenfalls über das Schwester-Kapselungsmodul der ersten Datenbank erfolgen. Dieses Schwester-Kapselungsmodul schickt die Mutation als Record Nachricht an die Koexistenz-Hauptsteuerung, die wie bei der Record Synchronisierung die Koexistenz-Elemente bzw. die Koexistenz-Dienstprogramme der Applikationssoftware-Programme (z.B. Partner) aufruft, welche die Adaptionsregeln (Mappinglogik) von der ersten auf die zweite Datenbank bzw. auf die Applikationssoftware-Programme in der zweiten Datenbankumgebung enthalten.

In diesem Fall werden die Schwestertransaktionen eingesetzt, um die Daten im richtigen Format (z.B. als abhängige Records) in die zweite Datenbank zu bringen und die Synchronisation zu den Applikationssoftware-Programmen auszulösen. Online Validierungen im Kontext der zweiten Datenbank werden jedoch nicht ausgeführt, da die Validierung des Inhaltes bereits im Kontext der ersten Datenbank bereits erfolgt ist. Die Validierung des Inhaltes im Kontext der zweiten Datenbank wird erst aktiviert, wenn die zweite Datenbank Master ist.
Dies ermöglicht später auch die funktionale (Rück-)Synchronisation von der zweiten zur ersten Datenbank. Bei dieser Synchronisationsrichtung wird ausschliesslich funktional von der zweiten zur ersten Datenbank synchronisiert, obwohl die Mutationen im Kontext der zweiten Datenbank bzw. von der zweiten Datenbank zu den dieser "nachgelagerten" Applikationssoftware-Programmen weiterhin recordorientiert erfolgen.

Da die Transaktionen auf beiden Seiten (der ersten und der zweiten Datenbankplattform) identisch sind, erfolgen sämtliche Mutationen ausschliesslich über ein Schwester- Kapselungsmodul im ersten Datenbankkontext. Das Kapselungsmodul modifiziert mittels Datenbank-Makros die zweiten Datenbank synchron. Danach werden vom Kapselungsmodul dieselben Records auch an die Koexistenz-Hauptsteuerung geschickt, die wie bei der Record Synchronisierung die Koexistenz-Elemente bzw. die Koexistenz-Dienstprogramme der Applikationssoftware-Programme (z.B. Partner) beschickt, damit diese synchronisiert werden können.

Das Konzept der vorliegenden Erfindung sieht nun abweichend vom konventionellen Ansatz vorteilhafterweise eine Migration vor, die beim Back-End beginnt. Dies hat den Vorteil, dass auf der Seite des Front-Ends, also der Applikations-Arbeitsstationen, der GUIs, der Benutzersoftware, etc. nichts (oder nur wenig) zu ändern ist, so dass der Benutzer von der Migration nicht tangiert ist.

Durch die erfindungsgemäße funktionale Kapselung wird die in den Folgeverarbeitungen enthaltene Logik unter Berücksichtigung der neuen Datenbank-Architektur und Datenstrukturen der zweiten Datenbank identisch so oder wenigstens so ähnlich wie möglich implementiert, wie dies bereits in der ersten Datenbank der Fall war. Dies erfolgt erfindungsgemäß vorzugsweise durch die Benutzung der Schwester-Transaktionen. Die Koexistenz-Hauptsteuerung kann entweder online oder als Stapeldatei die Mutationsnachricht(en) erhalten. Auf Grund des speziellen Record-Typs bzw. Nachrichten-Typs kann diese erkennen, dass es sich um eine Nachricht auf Grund einer funktionalen Kapselung handelt. Die Hauptsteuerung kann sodann ein Root-Programm aufrufen und die Nachricht übergeben. Das Root-Programm wiederum kann die entsprechende Schwester-Transaktion aufrufen. Die Schwester-Transaktion in Zusammenarbeit mit dem migrierten und angepassten Kapselungsprogramm kann nun die Records alt/neu (Nachrichten mit Datenbankeinträgen ast/neu bzw. Mutationsaufträgen) der ersten Datenbank so erstellen, wie sie die Hauptsteuerung normalerweise von der ersten Datenbank erhält. Diese Records können dann in die Ausgangswarteschlange gestellt werden und die Hauptsteuerung kann sie anschließend verarbeiten, als ob sie von der ersten Datenbank gekommen wären. Einzig im Kopfteil wird ein spezieller Code gesetzt (COEX ORIGIN), so dass erkannt werden kann, woher ein Record kommt. Dies ist für die Fehleranalyse wichtig.

Die Erfindung sieht weiterhin vor, zwischen der ersten und der zweiten Datenbank einen Vergleich auszuführen, um eine Aussage über den Gleichstand des Informationsgehaltes der beiden Datenbanken zu erhalten. Ausgehend von dem Datenvergleich wird erfindungsgemäß ein Bericht (Fehlerlog-Datei) über die fehlerhaften bzw. fehlenden Datensätze erstellt. Schließlich wird auch eine Funktion zur Verfügung gestellt, um die fehlerhaften bzw. fehlenden Datensätze zu korrigieren.

Dazu ist erfindungsgemäß ein Datencontainer vorgesehen, der eine Kontroll- und eine Datentabelle aufweist. Er dient dazu, die Transaktionsklammer im Kontext der ersten Datenbank im Kontext der zweiten Datenbank nachzubilden. Fehlerhafte Datensätze aus dem Datenvergleich werden ebenfalls in diesen Container geschrieben.

Diese Fehlererkennung und- behandlung ist eine Teilfunktion der Synchronisation zwischen den beiden Datenbanken. Sie basiert auf der Infrastruktur der Fehlerlog-Datei und des Datencontainers. Während der Synchronisation werden alle Nachrichten in den Datencontainer geschrieben und von da aus abgearbeitet. Entsteht bei der Synchronisation ein Fehler, werden die Daten als solche gekennzeichnet. Anschließend wird vom Datencontainer eine Verbindung zur Fehlerlog-Datei hergestellt und dann die Fehler angezeigt/dargestellt.

Dazu werden erfindungsgemäß die Software-Programm-Komponenten Fehlerlog-Datei, Datencontainer, Fehlerbehandlung bei der Synchronisation, Nachlieferung und Datenabgleich in eine logische Einheit zusammengefaßt. Dem/den Nutzern werden dabei die GUIs zur Verfügung gestellt, die ein konsolidiertes Berichtwesen der Komponenten Synchronisation, Erstbefüllung (Initial Load) und Datenabgleich erlauben. Dabei ist auch die Möglichkeit vorgesehen, eine Nachlieferung für die Datenkorrektur aufgrund eines Eintrages manuell auszulösen.

Dabei kann die Wiederholen-Funktion vorgesehen sein, um ein sofortiges Korrigieren einer festgestellten Differenz zwischen der ersten und der zweiten Datenbank auszuführen. Eine weitere Funktion, die Nachlieferungs-Funktion umfaßt einen Satz von Funktionen, um einen fehlerhaften oder fehlenden Datensatz im Kontext der zweiten Datenbank in einer Tabelle zu selektieren, eine entsprechende Mutation zu erzeugen und über den Synchronisationsprozess wieder nach in den Kontext der zweiten Datenbank zu propagieren. Die Nachlieferungs-Funktion korrigiert drei Fehlermöglichkeiten:
- Ein Datensatz ist in der ersten Datenbank nicht vorhanden, ist aber in der zweiten Datenbank vorhanden
- Ein Datensatz ist in der ersten Datenbank vorhanden, ist aber in der zweiten Datenbank nicht vorhanden
- Ein Datensatz ist in der ersten Datenbank vorhanden, ist aber in der zweiten Datenbank mit falschem Inhalt vorhanden

Das Datenvergleichs-System vergleicht die Datenbestände beiden Datenbanken miteinander und deckt dabei soviele Abweichungen wie nur möglich auf. Wenn die Datenstrukturen auf beiden Systemen nahezu identisch sind, ist ein Vergleich einfach auszuführen. Ein wesentliches Problem sind die sehr hohen Datenbestände, die miteinander zu einem bestimmten (zeitlichen) Stichpunkt zu vergleichen sind.

Das Datenvergleichs-System hat im Wesentlichen drei Komponenten: Fehlererkennung, Fehleranalyse und Fehlerbehebung.

Die Fehlererkennung umfaßt einerseits den Abzug und die Aufbereitung der Daten aus den beiden Datenbanken. Dazu werden Hashwerte berechnet und miteinander verglichen. Bei Differenzen werden die Daten aus den jeweiligen Datenbanken geholt. Ebenfalls Bestandteil der Fehlererkennung ist ein Vergleichs-Programm, welches die korrumpierten Daten aus der ersten und er zweiten Datenbank im Detail vergleicht und Abweichungen in die Fehlerlog-Datei der Synchronisation (und die Daten dazu in den Datencontainer) dokumentiert. Im Datencontainer wird dann unmittelbar versucht, die neuen Daten auf die entsprechende Datenbank durch Ausführen der Wiederholen-Funktion zu applizieren.

Die Fehleranalyse umfaßt Aufbereitungs-Funktionen der Fehlerbehandlung, um die Daten aus der Fehlerlog-Datei und dem Datencontainer zu analysieren und in Verbindung zueinander bringen. Diese Daten werden dann von einem GUI (Graphical User Interface) angezeigt. Die Analyse, um welche Fehler es sich handelt, kann dann ggf. manuell vorgenommen werden. Ebenfalls aus diesem GUI können dann sogenannte Nachlieferungsfunktionen Batch und eine Wiederholen-Funktion (Retry) angestossen werden.

Bei der Fehlerbehebung gibt es 3 Ausprägungen:
- Eine Nachlieferung von Einzel-Records bzw. die Wiederholen-Funktion (Retry). Die Fehlerbehebung schreibt die fehlerhaften Daten in den Datencontainer, von wo aus die Behebungs-Funktionen angestossen werden.
- Ein Teil-Initial-Load oder ein Massenaktualisierung ist identisch mit dem Initial Load.
- Bei einem Initial Load werden die betreffenden Tabellen zuerst gelöscht.

Im Rahmen der Fehlerbehebung werden unter Anderem folgende Datenstrukturen gelesen und geschrieben:
- Datencontainer
- Errorlogs
- Unload-Dateien
- Hash-Files
- Umsetz-Datei
- Vergleichs-Datei
- Nachlieferungsfile
- Q1-Datenbank

Für die Unload-Dateien werden dieselben Datenstukturen wie die der Initial-Load-Unload-Files verwendet.

Das Koexistenz-Steuerungsprogramm legt die Programme oder Programmkomponenten fest, welche für eine bestimmte Recordart aufgerufen werden. Das Koexistenz-Steuerungsprogramm wird dazu benötigt, die zu korrigierenden Daten aus der ersten Datenbank in den Kontext der zweiten Datenbank zu laden.

Bei erfolgreichen Nachlieferungen werden durch das Das Koexistenz-Steuerungsprogramm die fehlerhaften Einträge im Datencontainer auf "erledigt" gesetzt.

Die Fehlermeldungen und die fehlerhaften Daten können (ggf. sortiert) angezeigt werden. Es werden Funktionen zur Verfügung gestellt, um die Nachlieferservices anzustossen.

Im Datencontainer können die Fehler, die aus der Reconciliation der zweiten Datenbank stammen von denen unterschieden werden, die aus der Synchronisation zwischen den beiden Datenbank stammen. Außerdem sind Funktionen zur Visualisierung, zur Korrektur und zur Nachlieferung bzw. Retry der Daten zur Verfügung gestellt.

Durch die erfindungsgemäße Funktion reduzieren sich die Mengen und Fehlerarten, je länger die Systeme der beiden Datenbankumgebungen parallel geführt werden. Es kann nach Verarbeitungsende (Tag, Woche, oder dergl.) und nach Recordtyp rekonziliert werden. Weiterhin ist es möglich nur die Records zu überprüfen, die auf Seiten der zweiten Datenbank bereits benötigt (abgefragt) werden. Die noch nicht in der zweiten Datenbank bereits benötigt (abgefragt) werden. Die noch nicht in Benutzung befindlichen Records können beispielsweise nur einmal monatlich geprüft werden.

Die Reconciliation deckt Ungleichheiten zwischen den Systemen der beiden Datenbanken auf behebt sie. Dabei werden in erster Linie Fehler erkannt, die nicht bereits durch die Synchronisation entdeckt wurden. Dies können sein:
- Nicht-Kapselung eines Batch-/Online-Programmes auf dem System der ersten Datenbank
- Verlorengehende Nachrichten bzw. Dateien auf dem Transportweg
- Programmfehler in dem Umfeld des zweiten Datenbanksystems.
- Wiederherstellung auf einem der beiden Systeme
- Nachrichten Datensätze, welche im Kontext der zweiten Datenbank nicht appliziert werden können

Es ist davon auszugehen, dass die meisten Fehler durch die Nachlieferungsfunktion behoben werden können. Alternativ ist es auch möglich, durch einen weiteren Initial Load oder Teil-Initial Load (Massenupdate) die zweite Datenbank neu zu laden.

Von den zu vergleichenden Datenbankeinträgen und deren Attributen werden in einem ersten Schritt die Hashwerte ermittelt und miteinander verglichen. Sind diese unterschiedlich, werden in einem zweiten Schritt die originären Daten miteinander verglichen. Dazu werden zunächst die Hashwerte und in einem zweiten Schritt ggf. die originären Daten von dem Kapselungsmodul an die zweite Datenbank gesendet und dort verglichen.

### Kurzbeschreibung der Figuren

Fig. 1 zeigt eine schematische Darstellung der ersten und der zweiten Datenbanken in ihrem jeweiligen Kontext sowie die Mechanismen der Kommunikation zwischen den beiden Datenbanken.

Fig. 2 veranschaulicht ein konzeptionelles, normalisiertes Modell für Steuerungstabellen, die angeben, für welche Applikationsprogramm-Elemente (Softwarekomponenten) der zweiten Datenbankplattform eine Mutation relevant ist.

Fig. 3 - 7 erläutern anhand von Flussdiagrammen das Verhalten bei Speichern und Einfügen von Daten, das Verhalten bei Modifizieren von Daten, das Verhalten bei Mutation eines Falles, und das Verhalten bei Löschen eines Falles.

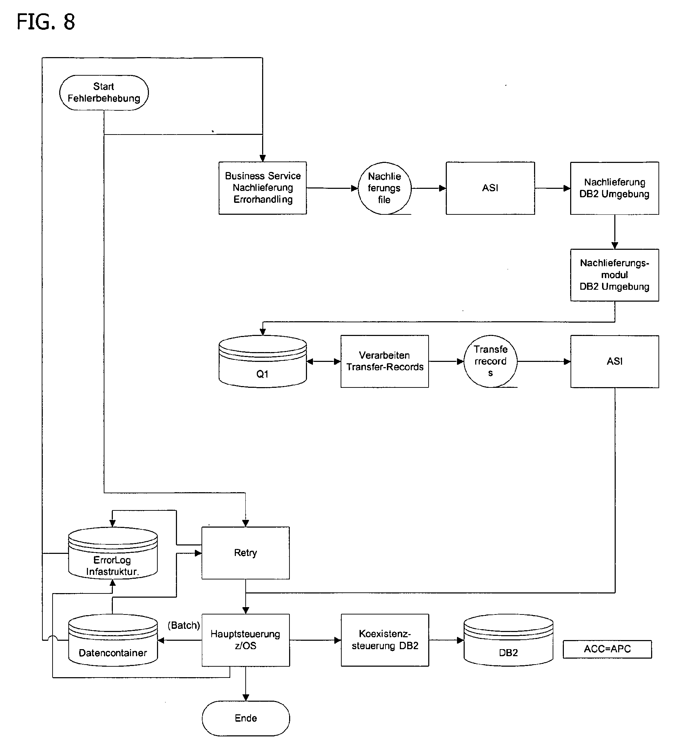

FIG. 8 erläutert anhand eines Flussdiagrammes die Fehlerbehebung bei Einzelrecords.

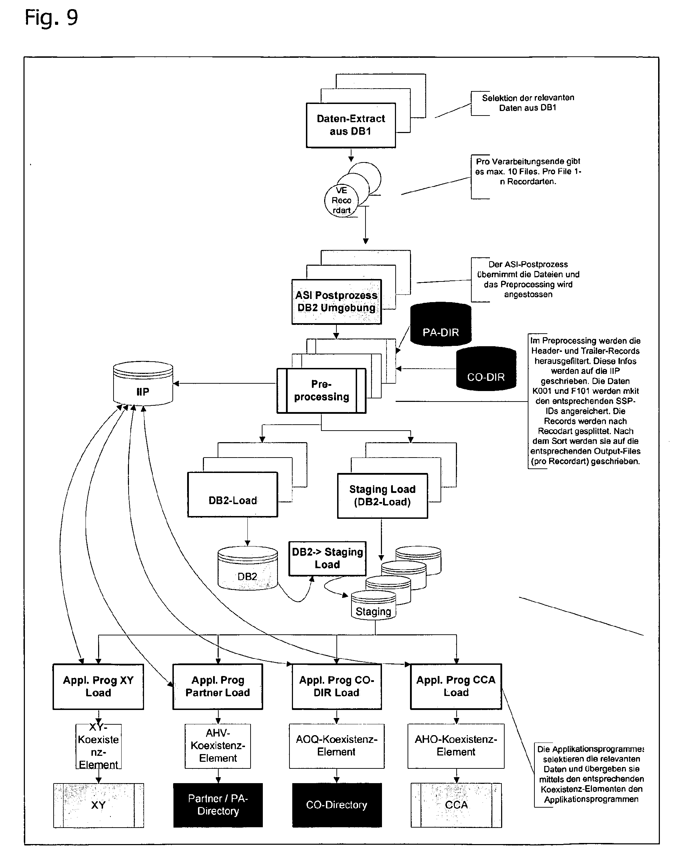

Fig. 9. erläutert anhand eines Flußdiagramms die Fehlerbehebung bei Dateien.

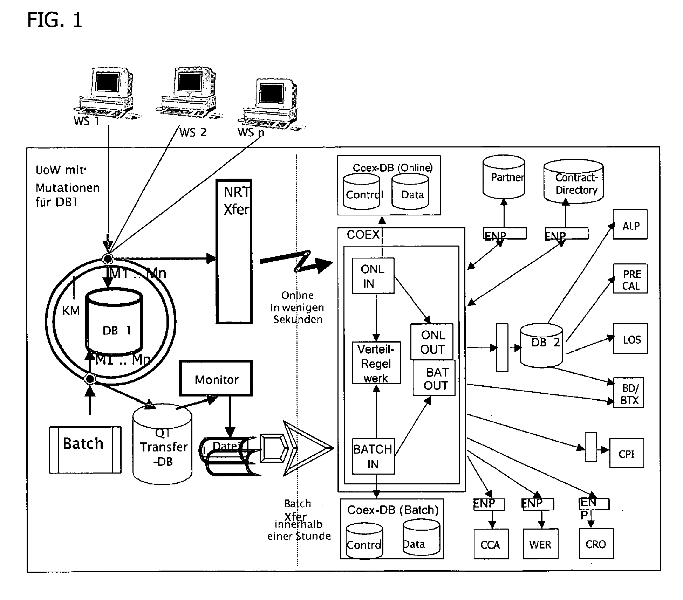

In Fig. 1 zeigt die linke Seite die Datenbankumgebung der ersten Datenbank DB1 und die rechte Seite die Datenbankumgebung der zweiten Datenbank DB2. Aus auf den Arbeitsstationen WS1 ... WSn werden durch auf ihnen ablaufende Applikations-softwareprogramme Mutationen der ersten Datenbank DB1 im Rahmen von Arbeitseinheiten UOW initiiert. Diese Mutationen werden an das sog. Kapselungsmodul KM (durch ein nicht weiter veranschaulichtes - unternehmensweites oder weltweites - Datennetzwerk) weitergeleitet. Das Kapselungsmodul KM ist dazu eingerichtet und programmiert, die ihm übergebenen Arbeitseinheiten UOW in eine oder mehrere Nachrichten M1 .. Mn aufzulösen, die entsprechenden Einträge in der ersten Datenbank DB1 vorzunehmen und die Nachrichten M1 .. Mn an die zweite Datenbank DB2 zu versenden. Dabei ist das Kapselungsmodul KM vorzugsweise dazu eingerichtet und programmiert, zu prüfen, ob es (hinsichtlich Übertragungsdauer und Übertragungsmenge bzw. Verarbeitungsaufwand im Kontext der zweiten Datenbank DB2) effizienter ist, die ursprüngliche Arbeitseinheit UoW so, wie sie von den Arbeitsstationen W1 .. Wn kommt um auf die erste Datenbank zuzugreifen, inhaltlich unverändert (aber ggf. in die einzelnen Nachrichten aufgelöst oder verteilt) an die zweite Datenbank DB1 abzusenden, oder die aus der Anwendung der Arbeitseinheit UoW auf die erste Datenbank DB1 resultierenden mutierten Einträge (ggf. in die einzelnen Nachrichten aufgelöst oder verteilt) aus der ersten Datenbank DB1 an die zweite Datenbank DB2 zu versenden. Abhängig vom Ergebnis dieser Prüfung wird dann der entsprechende Inhalt versendet.

Für dieses Versenden der Nachrichten M1 .. Mn an die zweite Datenbank DB2, das praktisch unmittelbar nach dem Eintreffen bei dem und Verarbeiten der entsprechenden Arbeitseinheit UoW durch das Kapselungsmodul KM erfolgt, dient ein Softwaremodul nrt Xfer (near real time Transfer) für plattformübergreifende Nachrichtenübertragung. Diese wird in der Datenbanksynchronisation eingesetzt, um die zeitkritischen, bei der Online-Verarbeitung anfallenden Mutationen beinahe in Echtzeit an die zweite Datenbank DB2 zu übermitteln so dass die von aus der ersten Datenbankplattform geschickten Nachrichten auf der zweiten Datenbankplattform auch verarbeitet werden können.

In analoger Weise wie der vorstehend beschriebene Transfer von online eintreffenden Mutationsaufträgen gibt es auch aus Stapelverarbeitungsaufträgen stammende Arbeitseinheiten UoW, die von einem Stapelverarbeitungsagenten Batch an das Kapselungsmodul KM angeliefert werden.

In gleicher Weise wie im online Fall ist das Kapselungsmodul KM dazu eingerichtet und programmiert, die ihm von dem Stapelverarbeitungsagenten Batch übergebenen Arbeitseinheiten UoW in eine oder mehrere Nachrichten M1 .. Mn aufzulösen, die entsprechenden Einträge in der ersten Datenbank DB1 vorzunehmen und die Nachrichten M1 .. Mn an die zweite Datenbank DB2 zu versenden. Dazu wird durch das Kapselungsmodul KM ebenfalls geprüft, ob es (hinsichtlich Übertragungsdauer und Übertragungsmenge bzw. Verarbeitungsaufwand im Kontext der zweiten Datenbank DB2) effizienter ist, die ursprüngliche Arbeitseinheiten UoW so, wie sie von dem Stapelverarbeitungsagenten Batch übergeben werden, um auf die erste Datenbank zuzugreifen, inhaltlich unverändert (aber ggf. in die einzelnen Nachrichten aufgelöst oder verteilt) an die zweite Datenbank DB1 abzusenden, oder die aus der Anwendung der Arbeitseinheit UoW auf die erste Datenbank DB1 resultierenden mutierten Einträge (ggf. in die einzelnen Nachrichten aufgelöst oder verteilt) aus der ersten Datenbank DB1 an die zweite Datenbank DB2 versendet werden. Abhängig vom Ergebnis dieser Prüfung wird dann der entsprechende Inhalt versendet. Dabei wird dieser Inhalt nicht unmittelbar an die zweite Datenbank DB2 versendet, sondern in eine Transferdatenbank Q1 geschrieben, von wo aus ein plattformübergreifender Dateitransfer erfolgt. Dazu dient ein auf die Transferdatenbank Q1 zugreifender Monitor und ein Dateitransferprogramm, das dateiorientiert die in Nachrichten umgesetzten Mutationen aus der Stapelverarbeitung in der Synchronisation an die zweite Datenbankplattform übermittelt.

Auf der Seite der zweiten Datenbankplattform DB2 dient eine Koexistenz-Hauptsteuerung COEX dazu, entweder online oder als Stapeldatei die Mutations-nachricht(en) erhalten. Die Koexistenz-Hauptsteuerung COEX enthält mehrere, miteinander interagierende Programm-Module: Das Modul ONL-IN, das Modul Modul ONL-OUT, das Modul BAT-OUT und das Modul VERTEIL-REGELWERK.

Das Modul ONL-IN wird vom Online - Softwaremodul nrt Xfer aus der ersten Datenbankplattform mit einer Nachricht aufgerufen und stellt die übergebene Nachricht aus der ersten Datenbank in eine Koexistenz-Datenbank COEX-DB. Da die Daten-und Term-Nachricht einer Transaktion in beliebiger Reihenfolge ankommen können, werden die Nachrichten in der Koexistenz-Datenbank COEX-DB solange gesammelt, bis alle Nachrichten der Transaktion übertragen wurden. Um über die Vollständigkeit der Nachrichten einer Transaktion entscheiden zu können, wird für jede Transaktion eine Paket-Nachricht in einer DB2 -Tabelle verwaltet, die die aktuell übertragene Anzahl der Nachrichten aus der ersten Datenbank sowie die Gesamtanzahl der Nachrichten aus der ersten Datenbank DB1 empfängt und aktuell hält.

Eine zweite, von der Koexistenz-Hauptsteuerung COEX angesprochene DB2 Tabelle dient dazu, die Nachrichten aus der ersten Datenbank für die weitere Verarbeitung zwischenzuspeichern.

Vor dem Zwischenspeichern der Nachrichten aus der ersten Datenbank DB1 wird das Modul VERTEIL-REGELWERK aufgerufen, dabei wird der Nachrichten aus der ersten Datenbank DB1 als Parameter mitgegeben. Das Modul weiter unten im Detail beschriebene VERTEIL-REGELWERK gibt eine OK- bzw. Must-Rollback-Condition zurück. Im OK-Fall wird zunächst die aktuelle Reihe des Zeigers in der COEX-Datenbank DB mit den Flags für die Belieferung der COEX-Softwarekomponenten aktualisiert. Im Fehlerfall wird die Must-Rollback-Condition ohne weitere Verarbeitung an das online Agent-Softwaremodul nrt Xfer zurückgeliefert.

Der Aufruf des Moduls ONL-OUT wird durch das Modul ONL-IN veranlasst, sobald festgestellt wird, dass Nachrichten aus der ersten Datenbank DB1 einer Transaktion vollständig auf die zweite Datenbankplattform transportiert worden sind.

Dabei erfolgt der Aufruf als asynchroner Aufruf mit SEND NEW REQUEST. Beim Aufruf wird der Schlüssel der Transaktion aus der ersten Datenbank übergeben, dabei handelt es sich um die Felder "Niederlassung" und/oder "Paket-Zeitstempel" der Transaktion aus der ersten Datenbank.

Das Modul ONL-OUT liest die Daten, d.h. die Nachrichten der von der ersten Datenbank DB1 kommenden Transaktion, die in der Koexistenz-Datenbank (online) zwischengespeichert sind, in der fachlich korrekten Reihenfolge in einer Programmschleife aus und reicht sie geordnet weiter. Dies wird durch eine Laufnummer im Kopfteil der Nachricht unterstützt. Eine auf zwei oder mehr Zeilen oder Spalten aufgeteilte Nachricht kann dabei nach dem Auslesen aus der Koexistenz-Datenbank (online) wieder zusammengesetzt werden.

Nach erfolgreicher Verarbeitung aller Nachrichten der von der ersten Datenbank kommenden Transaktion wird abschließend die Kontroll-Nachricht für die jeweilige Transaktion als erledigt markiert. Damit sind die Daten dieser Transaktion zur späteren logischen Reorganisierung freigegeben.

Das Modul BAT-OUT ist ein Stapelverarbeitungs-Agent, das die Leseroutine für das sequentielle Lesen der von dem Stapelverarbeitungsagenten Batch aus dem Kontext der ersten Datenbankplattform gelieferten Datei enthält, und die Arbeitseinheit UoW steuert. Nach jedem Lesen einer Nachricht (bestehend aus Kopfteil, Datenbankeintrag-alt, Datenbankeintrag -neu) wird das Modul VERTEIL-REGELWERK aufgerufen, dabei wird die Nachricht als Parameter mitgegeben. Für den TERM-Record wird dieses Modul nicht aufgerufen.

Um Zugriffe und Netzwerkbelastung zu minimieren, werden die Nachrichten bzw. die darin enthaltenen Datenbankeinträge nicht in jedem Fall in die Koexistenz-Datenbank (batch) geschrieben. Vielmehr Es wird ein ganzes Paket im Modul BAT-OUT eingelesen und im Programmspeicher gehalten, sofern das Paket eine festgelegte Grösse nicht übersteigt. Nur wenn das Paket zu gross wird, wird es in die Koexistenz-Datenbank (batch) geschrieben. Anschliessend erfolgt dieselbe Verarbeitung wie im ONL-OUT und es werden die entsprechenden Koexistenz-Applikationsprogramm-Elemente (Softwarekomponenten) beliefert, wobei die Daten je nach Lage aus dem Programmspeicher oder aus der Koexistenz-Datenbank (batch) geholt werden. Falls ein Paket nicht verarbeitet werden kann, muss es anschliessend in die Koexistenz-Datenbank (batch) geschrieben werden.

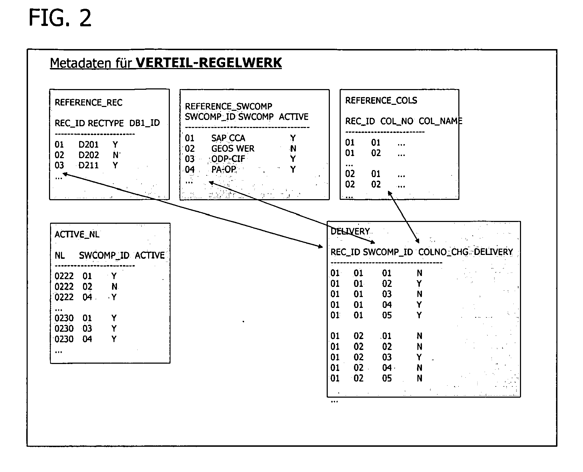

Das Modul VERTEIL-REGELWERK erhält als Eingangsdaten die Nachrichten aus der ersten Datenbankplattform alt (Zustand vor der Mutation) und die Nachrichten aus der ersten Datenbankplattform neu (Zustand nach der Mutation) Jedes Attribut "alt" wird mit "neu" verglichen, um festzustellen ob das Attribut mutiert wurde. Ist eine Mutation erfolgt, wird über Tabellen (siehe Fig. 2) festgestellt, für welche Applikationsprogramm-Elemente (Softwarekomponenten) diese Mutation relevant ist. Die Nachricht erhält pro Softwarekomponente ein Flag, mit dem gekennzeichnet wird ob sie für die Komponente relevant ist oder nicht. Dazu zeigt Fig. 2 ein konzeptionelles, normalisiertes Modell für die Steuerungstabellen. Je nach Performanceanforderungen können diese auch davon abweichend implementiert werden.

Die folgenden Schlüsseltabellen ermöglichen eine effiziente Parametrisierung der eigentlichen Steuerungsdaten:

### REFERENCE_REC

Bedeutung: In dieser Schlüsseltabelle werden für die Record-Arten die folgenden Felder geführt:
- REC_ID (PK)
- RECTYPE Recordtyp, z.B. D201
- DB2_ID Kennzeichnung, ob ein DB2 Schlüssel ermittelt werden muss.

### REFERENCE_ SWCOMP

Bedeutung: In dieser Schlüsseltabelle werden für die COEX-Applikationsprogramm-Elemente (Softwarekomponenten) (z.B. CCA) die folgenden Felder geführt:
- SWCOMP_ID,(PK)
- SWCOMP, Name der Softwarekomponenten, z.B. CCA
- ACTIVE, Flag (Wertebereich Y/N), (De)aktivierung der Softwarekomponente

### REFERENCE_COLS

Bedeutung: In dieser Schlüsseltabelle werden für die Recordarten die folgenden Felder geführt:
- REC_ID, PK, entspricht REFERENCE_REC.REC_ID
- COL_NO, PK, Lfd. Nr.
- COL_NAME, Name des Feldes in der Recordart

Für die Steuerung der Verarbeitung sind folgende Tabellen vorgesehen:

### ACTIVE_NL

Bedeutung: (De)aktivierung des Datentransfers an eine Softwarekomponente pro Niederlassung. Hiermit wird gesteuert, ob Daten einer Niederlassung (unabhängig von der Recordart) an eine Softwarekomponente weitergeleitet werden.

### Felder:

NL, PK, Niederlassung, z.B. 0221
- SWCOMP_ID, PK, entspricht REFERENCE_SWCOMP.SWCOMP _ID
- ACTIVE, Flag (Wertebereich Y/N),
- (De)aktivierung der Kombination NL und SWCOMP_ID

### DELIVERY

Bedeutung: Festlegung, unter welchen Bedingungen Recordarten an die Softwarekomponenten weitergeleitet werden. Die Bedingungen sind feldweise definiert, z.B.: Wenn in Recordart 01 (=D201) das Feld 02 oder 04 oder 05 geändert ist, dann ist der Record an die Softwarekomponente 01 (=CCA) weiterzugeben.

### Felder:

- REC_ID, PK, entspricht REFERENCE_REC.REC_ID
- SWCOMP_ID, PK, entspricht REFERENCE_SWCOMP.SWCOMP _ID
- COLNO_CHG PK, entspricht REFERENCE_COLS.COL_NO
- DELIVERY Flag (Wertebereich Y/N)
- (De)aktivierung der Kombination REC_ID, SWCOMP_ID, COL_NO

Eine von dem Kapselungsmodul der ersten Datenbank erstellte Nachricht hat in einer bevorzugten Ausführungsform der Erfindung die folgenden Attribute. Als Attribute werden hier Felder geführt, welche eine Verarbeitungssteuerung über alle Komponenten der ersten und der zweiten Datenbank hinweg zulassen.

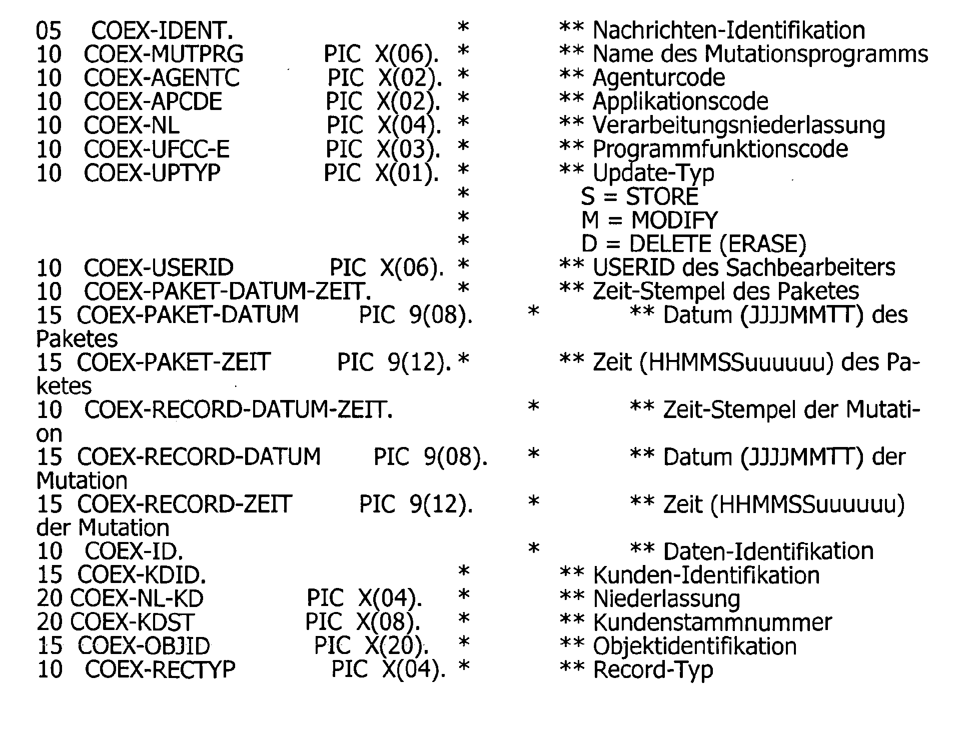

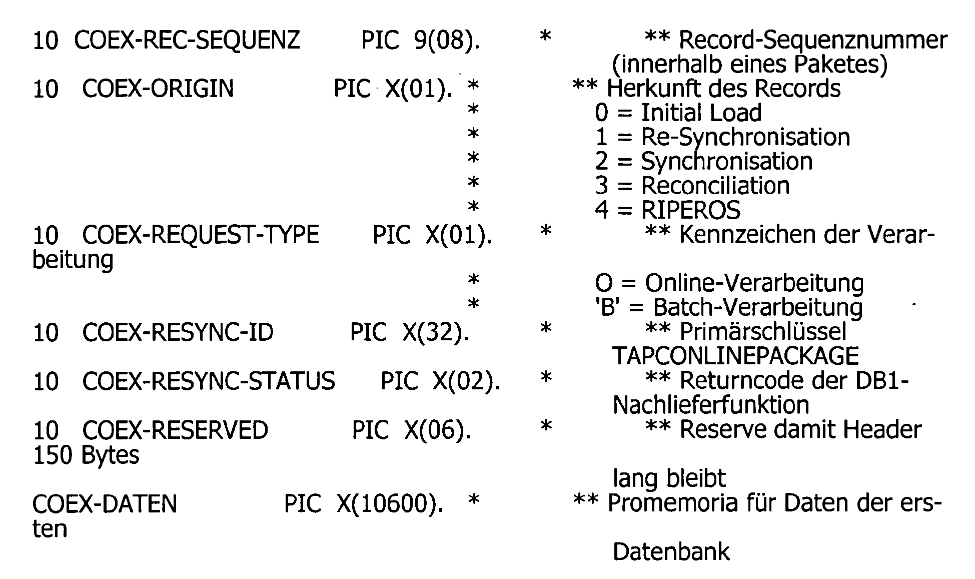

In dem Feld COEX-PAKET-ZEIT wird ein Zeitstempel beim Beginn der Transaktionsklammer eingeführt. In dem Feld COEX-REC-ZEIT wird ein Zeitstempel der Mutation eingeführt, dabei muss die Eindeutigkeit pro Recordtyp und pro Datensatz gewährleistet werden. Das Feld COEX-OBJID wird mit Leerzeichen initialisiert. In dem Feld COEX-REC-SEQUENCE wird eine Record-Sequenznummer (innerhalb eines Paketes, bei TERM = höchste Sequenz pro Paket) eingetragen. In dem Feld COEX-REQUEST-TYPE wird bei Ausgabe über Stapelverarbeitung ein "B" = Batch-Verarbeitung eingetragen oder ein "O" = Online Verarbeitung eingetragen.
Das Feld COEX-RESYNC-OF wird bei Initial Load mit Leerzeichen abgefüllt, darf bei Re-Synchronisation nicht verändert werden, und wird bei Reconciliation mit der Fehlerkennung befüllt. Das Feld COEX-USERID enthält die User ID, welche die Mutation ausgelöst hat. Muss neu durch das Kapselungsmodul auch für eine Stapelverarbeitungsübertragung gefüllt werden. Das Feld COEX-PAKET-ZEIT enthält Datum und Zeit (JJJJMMTThhmmssuuuuuu) des Pakets, bzw. des Beginns der Transaktionsklammer. Alle Records einer Transaktionsklammer weisen denselben Zeitstempel auf. Das Feld COEX-REC-ZEIT enthält Datum und Zeit (JJJJMMTThhmmssuuuuuu) der Mutation. Dabei muss die Eindeutigkeit pro Recordtyp und pro Datensatz gewährleistet sein. Dieser Zeitstempel wird für den Erkenntniszeitpunkt der bitemporalen Datenhaltung verwendet. Das heisst, dieser Wert wird in das BiTemp Feld BTMP_UOW_START abgefüllt. Das Feld COEX-REC-TYPE enthält neu bei von dem Kapselungsmodul den "TERM" Record. Dieser kennzeichnet das Ende einer Transaktionsklammer. Das Feld COEX-REC-SEQUENCE enthält die Record-Sequenznummer (innerhalb eines Paketes, bei TERM = höchste Sequenz pro Paket). Mit der Record-Sequenznummer in einem Paket kann die Sequenz der Mutationen innerhalb einer Transaktionsklammer wieder hergestellt werden. Das Feld COEX-ORIGIN enthält, abhängig von der Herkunft des Records: {0, 1, .., 4} für Initial Load, Re-Synchronisation aus der ersten Datenbank, Synchronisation, Reconciliation, und Applikationssoftware. Dies wird für die Koexistenzdienste, die Applikationssoftware, sowie für die Fehlerbehandlung benötigt. Das Feld COEX-REQUEST-TYPE enthält {O, B} abhängig von der Art der Verarbeitung in der zweiten Datenbank-Umgebung: O = Online Verarbeitung, B = Batch (Stapel-)Verarbeitung. Dadurch können die Services in der zweiten Datenbank-Umgebung betreffend die (Stapel-)Verarbeitung optimiert werden. Das Feld COEX-RESYNC-OF enthält bei der Re-Synchronisation die Fehler-ID und kennzeichnet den Eintrag in der Fehlertabelle, auf den sich eine Re-Synchronisation bezieht. Dadurch kann der Status des Eintrages in der Fehlertabelle beim Eintreffen der Re-Synchronisation aktualisiert werden. Das Feld COEX-BTX-ID bezeichnet die Re-Synchronisation für Initial Load und kennzeichnet den Eintrag in der Table, auf den sich eine Re-Synchronisation bezieht. Dadurch kann der Status des Eintrages in der Fehlertabelle beim Eintreffen der Re-Synchronisation aktualisiert werden. Das Kapselungsmodul beschreibt die Felder COEX-PAKET-ZEIT, COEX-REC-ZEIT, COEX-REC-SEQUENCE, welche die Transaktionsklammer aus der ersten Datenbank abbilden.

Für die Daten der ersten Datenbank alt-neu stehen die im Kopfteil als 'pro memoria' erwähnten 10600 Bytes zur Verfügung. Die physische Grenze zwischen Record-alt und Record-neu ist abhängig von der verwendeten Infrastruktur beweglich. Die Längen sind nicht fix sondern werden jeweils vorgegeben. Als Beispiel ist nachstehend der Record bzw. das Copybook zum CIF-Mainrecord D201 aufgeführt. Das Copybook entspricht der Datenbeschreibung des Datenbankrecords der ersten Datenbank.

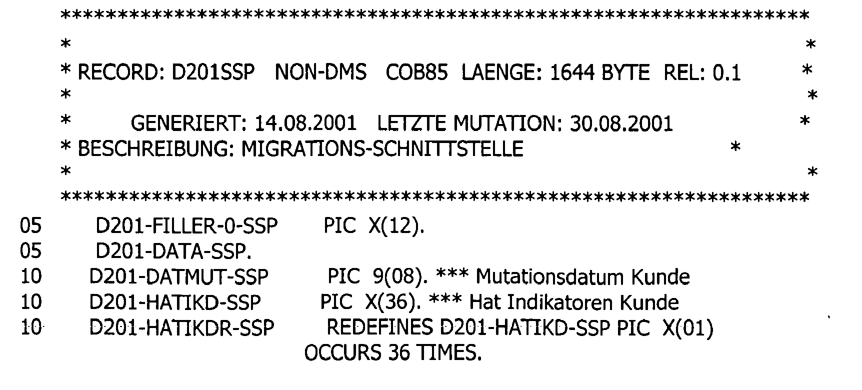

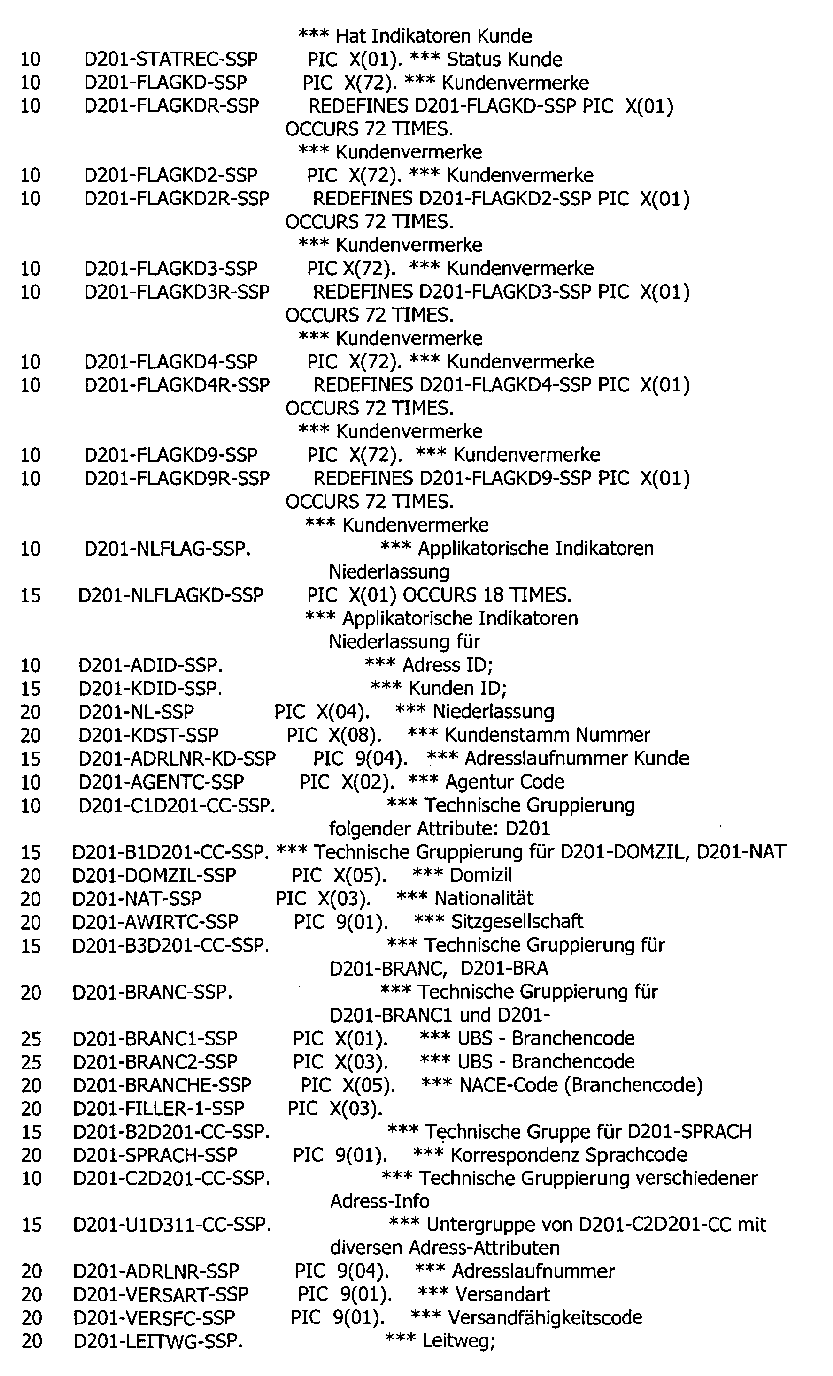

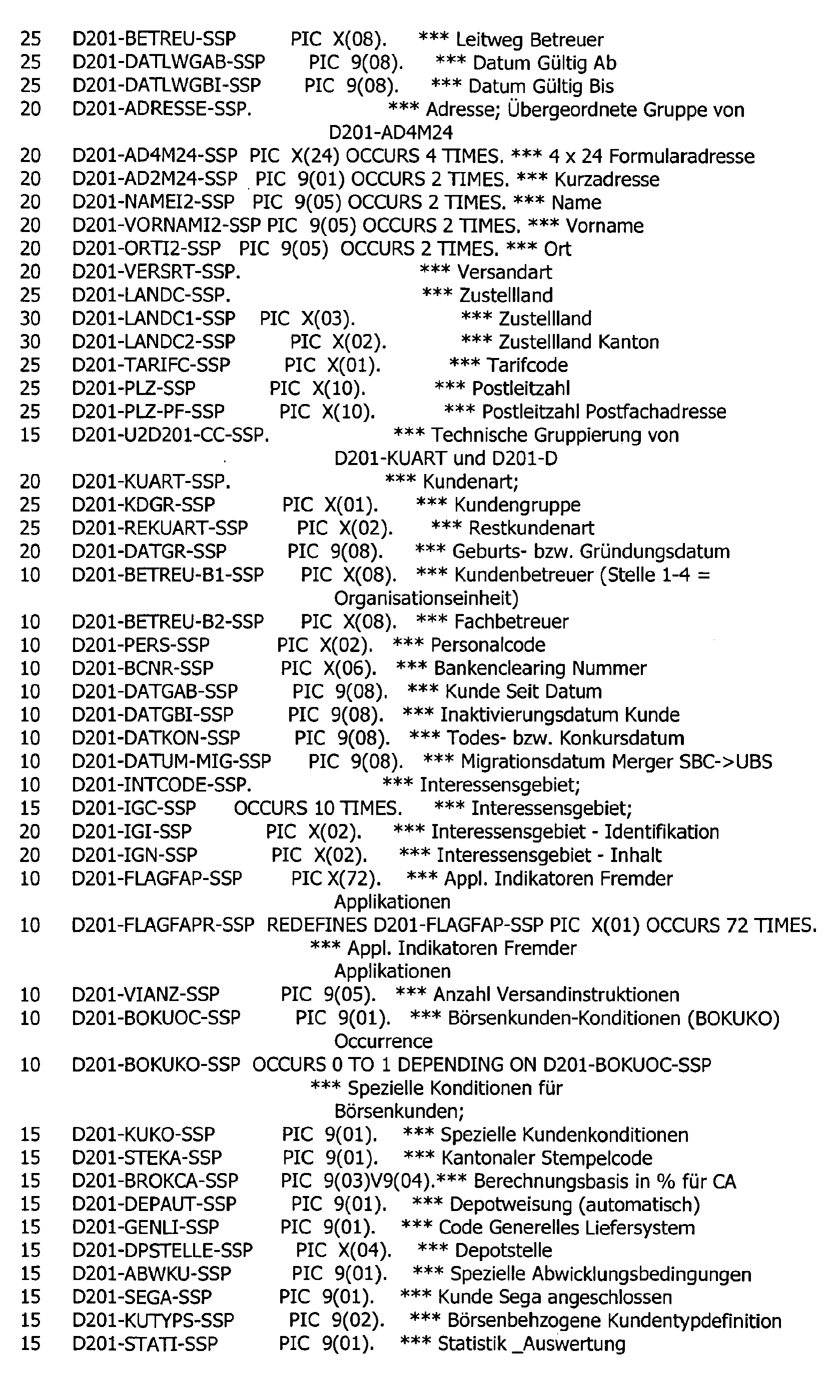

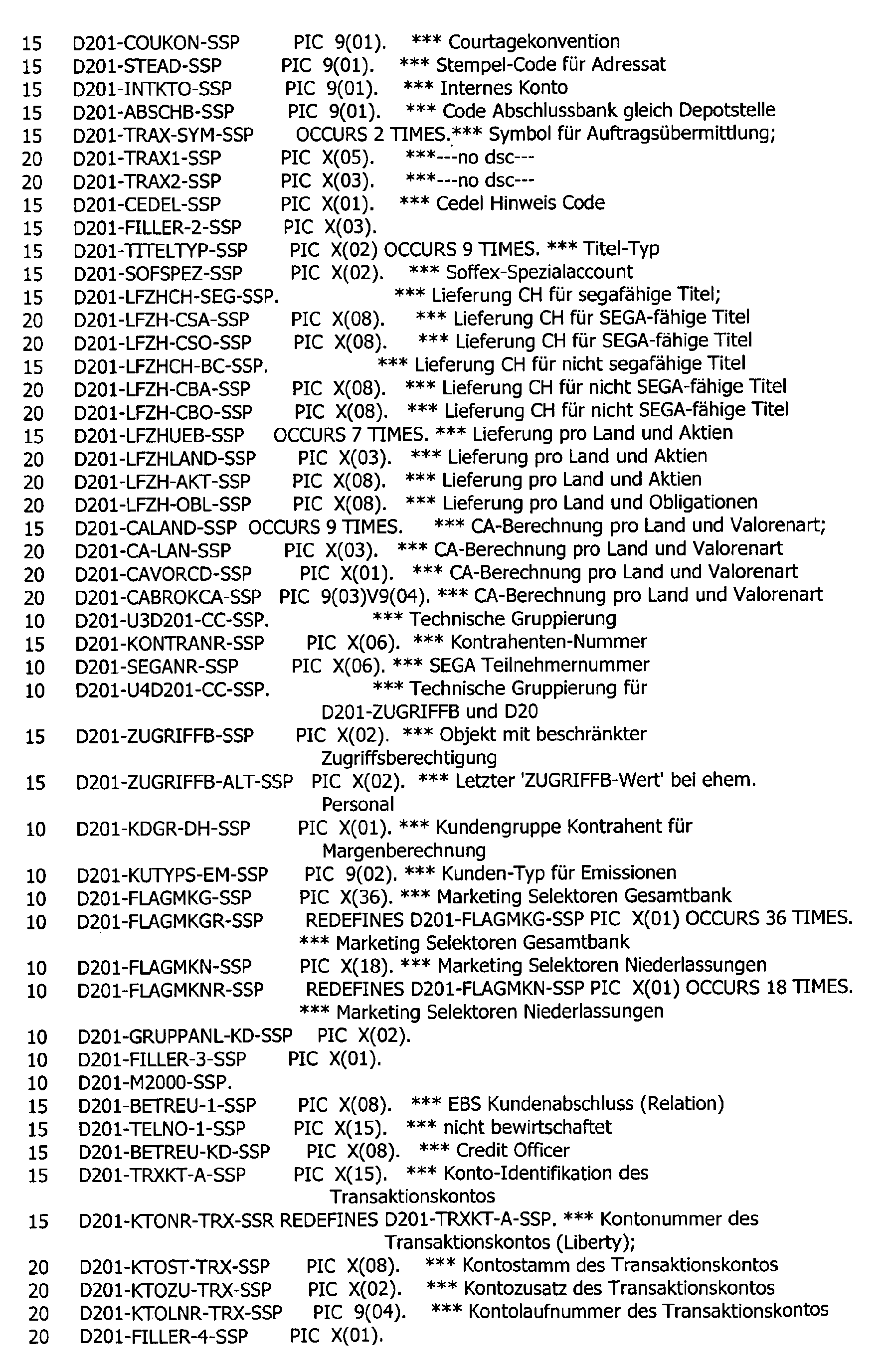

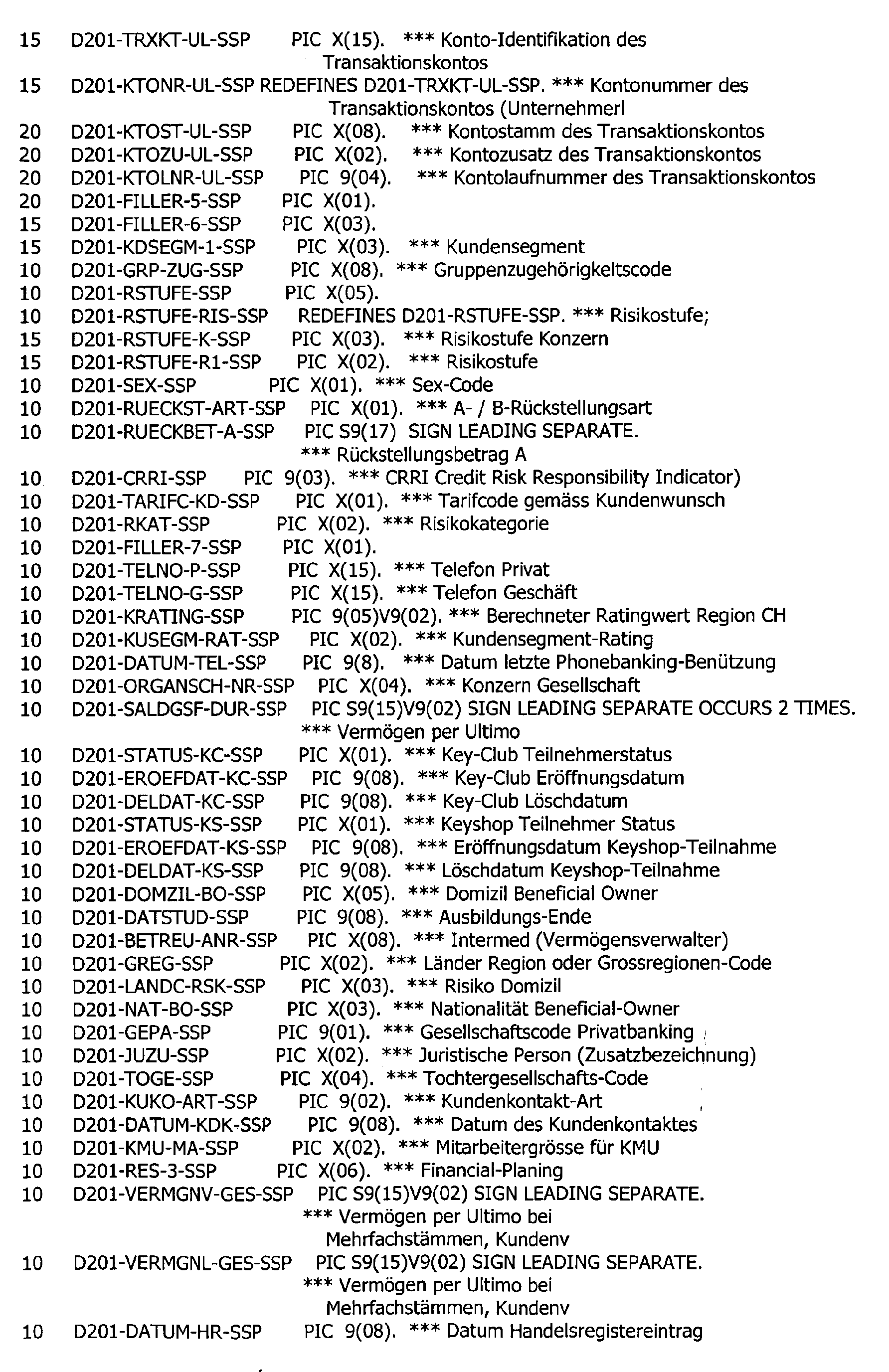

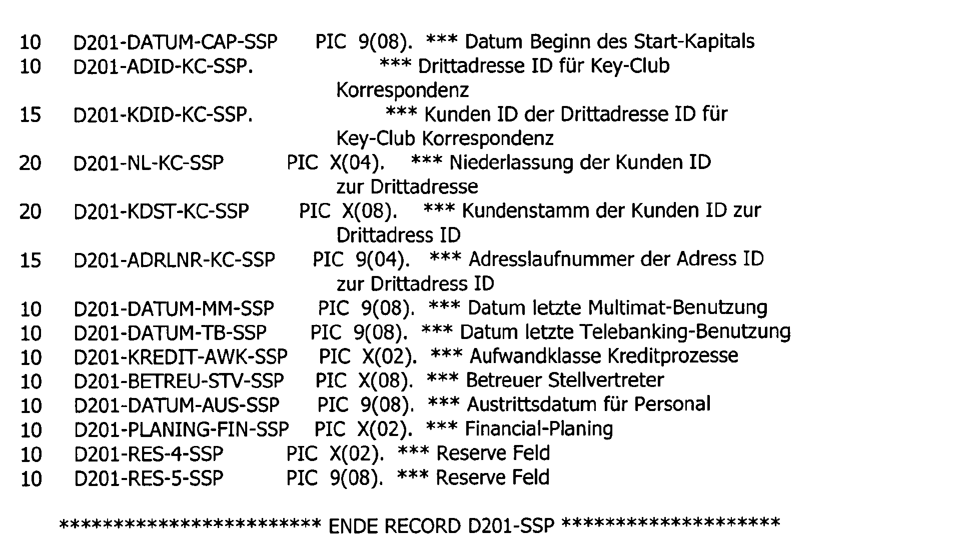

Diese Schnittstelle wird im COBOL-Programm zweimal angezogen, einmal als 'alt' und einmal als 'neu':

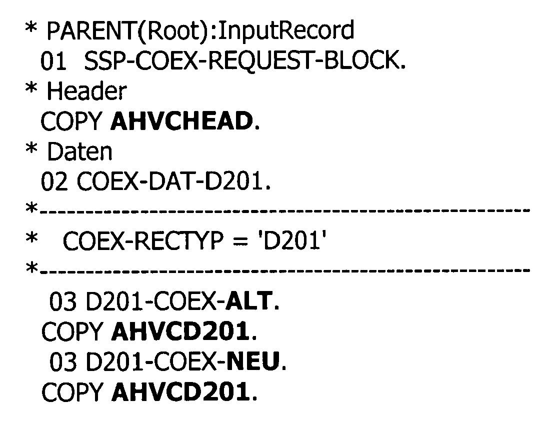

Für Datenbankänderungen (Write, Rewrite, Erase) dienen üblicherweise folgende DB-Primitive :
.ADD DBWRITE,RECORD
.ADD DBREWR,RECORD
.ADD DBERASE,RECORD

Ein Primitive besteht wiederum aus einem Makro, welches in Delta geschrieben ist, und einem Cobol Modul. Das Makro stellt dabei der ersten Datenbank dieselbe Schnittstelle wie der zweiten Datenbank zur Verfügung, kann jedoch im Hintergrund auch auf neue Cobol Module zugreifen. Das Cobol Modul benutzt Infrastruktur-Komponenten der zweiten Datenbank, um die Verarbeitung im neuen Umfeld (der zweiten Datenbank) nach alter Funktion (also wie in der ersten Datenbankplattform-Umgebung) sicherzustellen.

Das Kapselungsmodul dient zur Kapselung aller auf die erste Datenbank zugreifenden Software-Programme, welche mittels den Primitiven DBWRITE, DBREWRITE und DBERASE auf die (Unter-)Datenbanken der ersten Datenbank mutierend einwirken.

Sobald die erste Datenbank bzw. eine ihrer (Unter-)Datenbanken mutiert wird, wird erfindungsgemäß ein Generalmodul aufgerufen, das plausibilisiert und Untermodule (DBWRITE-Modul, DBREWRITE-Modul, DBERASE-Modul: Mutationsnachweis-Modul) anstelle der oben erwähnten DB-Primitivs aufruft. Ein Parameterfeld beschreibt, um welchen Mutationstyp es sich handelt. Das Generalmodul enthält die entsprechenden DB-Primitive und ist verantwortlich für die Nachführung auf der zweiten Datenbank. Um sicherzustellen, dass sich die Mutationen von mehreren Programmen nicht mischen, wird für jeden logischen Verarbeitungsprozess ein Paket gebildet. Ein logischer Verarbeitungsprozess wird in der Regel einer Arbeitseinheit entsprechen. Dies wird anhand des nachstehenden Beispiels für ein Modul mit der Bezeichnung CI0010 verdeutlicht:
Modul CI0010

### Parameter

- T001ACA
- P005PPVC
- CI0010-RECORD-ALT
- CI0010-RECORD-NEU

P005PPVC enthält unter anderem folgende Felder:
- P005PPVC-DB1-UPDATE erste Datenbank nachführen (Y/N)
- P005PPVC-SSP-UPDATE zweite Datenbank nachführen (Y/N)
- P005PPVC-MUTPRG Programm oder Transaktions-Name
- P005PPVC-NL Verarbeitungsniederlassung
- P005PPVC-NL-S Niederlassung Sachbearbeiters (ONLINE)
- P0O5PPVC-TZE Terminalzentraleinheit (ONLINE)
- P005PPVC-TRID Terminalidentifikation (ONLINE)
- P005PPVC-UFCC-E Programm-Funktionscode (ONLINE)
- P005PPVC-UPTYP DB-Update-Typ
   D = DELETE (ERASE)
   M = MODIFY (REWR)
   S = STORE (WRITE)
- P005PPVC-USERID User-ID des Sachbearbeiters (ONLINE)
- P005PPVC-SACHBKZ Kurzeichen des Sachbearbeiters (ONLINE)
- P005PPVC-KDID Kunden-ID
- P005PPVC-OBJID Objekt-ID/Adresslaufnummer
- P005PPVC-RECTYP 4-stelliger Record-Typ (z.B. K001)
- P005PPVC-FUNKTION Aufruf-Funktion
   I = Init Arbeitseinheit
   P = Process Arbeitseinheit
   T = Terminate Arbeitseinheit
   A = IPT (Nur wenn ein Record pro Unit)
- P005PPVC-TRANSFER-KEY Key der logischen Arbeitseinheit
- P005PPVC-STATUS Rückgabestatus (entspricht T001-STATUS)

### Aufruf CI0010

CALL "CI0010" USING T001ACA
P005PPVC
CI0010-RECORD-ALT
CI0010-RECORD-NEU

Jede logische Arbeits-Einheit beinhaltet erfindungsgemäß folgende Modul-Aufrufe:
- Einen Aufruf mit Funktion "Initialisieren" (Öffnet ein Paket für die zweite Datenbank).
- N - 1 Aufrufe mit einer Verarbeitungs- Funktion "Process" (Write, Rewrite, Erase, die im Paket eingefügt werden).
- Einen Aufruf mit der Funktion "Terminieren" (Schliesst das Paket für die zweite Datenbank).

DB-Mutationen welche über Stapelverarbeitungsprogramme erfolgen, werden nicht direkt (online) an die zweite Datenbank übermittelt, sondern werden zuerst in einer Transferdatenbank Q1 gespeichert. Die Eröffnung und das Schliessen dieser Datenbank übernimmt das Kapselungsmodul.

Der Inhalt der Transferdatenbank Q1 wird durch einen Monitor gesteuert in Dateien zusammengefaßt und via Filetransfer an die zweite Datenbankplattform geschickt.

Nachstehend wird der Ablauf in einer Datenbank-Komponente im Umfeld der zweiten Datenbankplattform als Beispiel erläutert. Die Koexistenz-Elemente können für Online-Synchronisation, Stapelverarbeitungs-Synchronisation und Erstbefüllung der zweiten Datenbank (initial load) verwendet werden.

Sequenzprobleme (sich gegenseitig überholende Meldungen in der Online-Synchronisation oder Differenzen zwischen Online- und Batch-Synchronisation) können wie folgt behandelt werden:
- Durch Lesen der Daten der zweiten Datenbank vor deren Mutation. Dazu werden in den Applikationsprogrammen und (Unter-)Datenbanken der zweiten Datenbank-Plattform die Daten vor der Mutation gelesen und die relevanten Felder mit denen aus der Nachricht verglichen. Zu mutierende Felder müssten den gleichen Stand in der zweiten Datenbank wie in der Nachricht 'alt' haben.
- Alternativ dazu kann ein Vergleich des Zeitstempels der ersten Datenbank mit dem Zeitstempel der zweiten Datenbank erfolgen. Der Mutations-Zeitstempel der ersten Datenbank wird in der zweiten Datenbank 'mitgespeichert'. Vor der Mutation werden die Zeitstempel verglichen. Der mitgespeicherte Mutations-Zeitstempel der ersten Datenbank in der zweiten Datenbank muss älter sein als der neue Zeitstempel der ersten Datenbank aus der Nachricht.
- Schließlich können die Daten in einer weiteren Alternative in der zweiten Datenbank DB2 parallel (bitemporär) gehalten werden. In diesem Fall kann einfach jeder Satz eingeschoben werden. Die Zeitreihen in der zweiten Datenbank DB2 werden aufgrund der Mutations-Zeitstempel der ersten Datenbank geführt. Die Prüfung von DB1-alt gegenüber DB2-aktuell schließenallfällige Sequenzprobleme aus. Die Verarbeitung ist dabei über eine Codetabelle gesteuert. Die Steuerung ist dazu für die Applikationsdatenbankprogramme der zweiten Datenbank auf 'Aus' zu stellen.

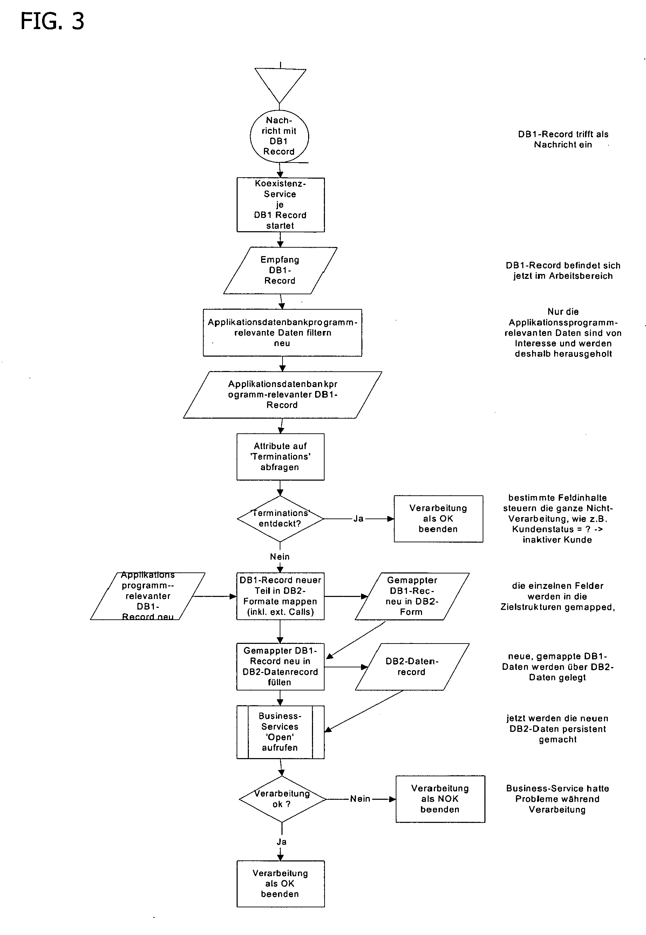

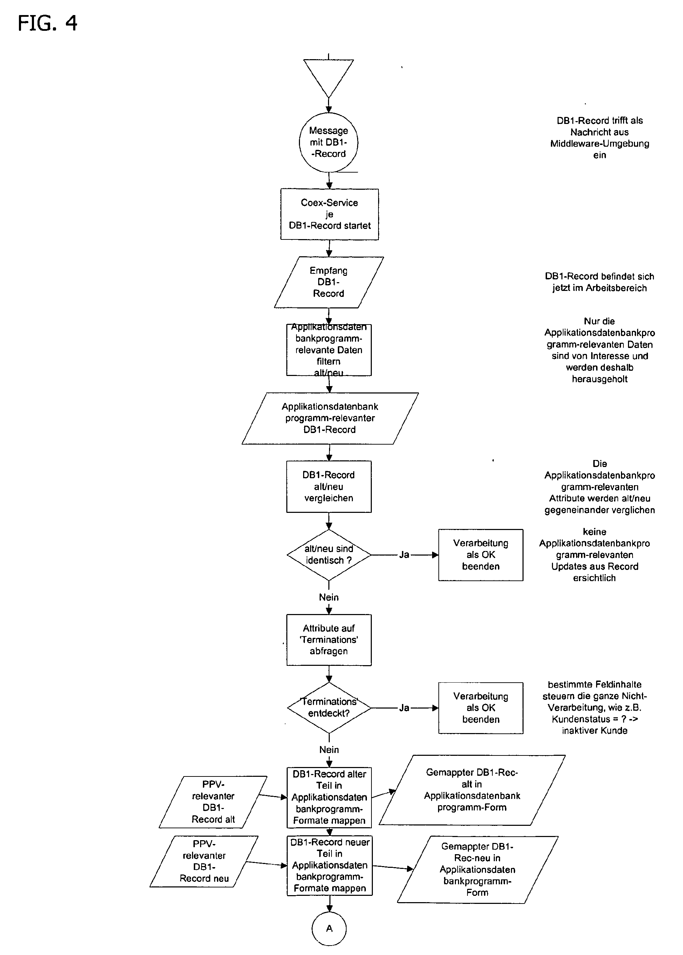

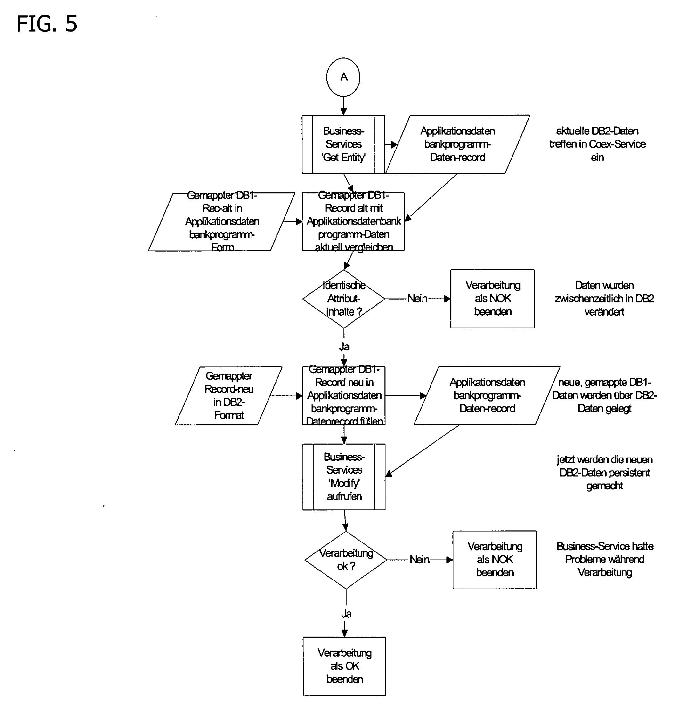

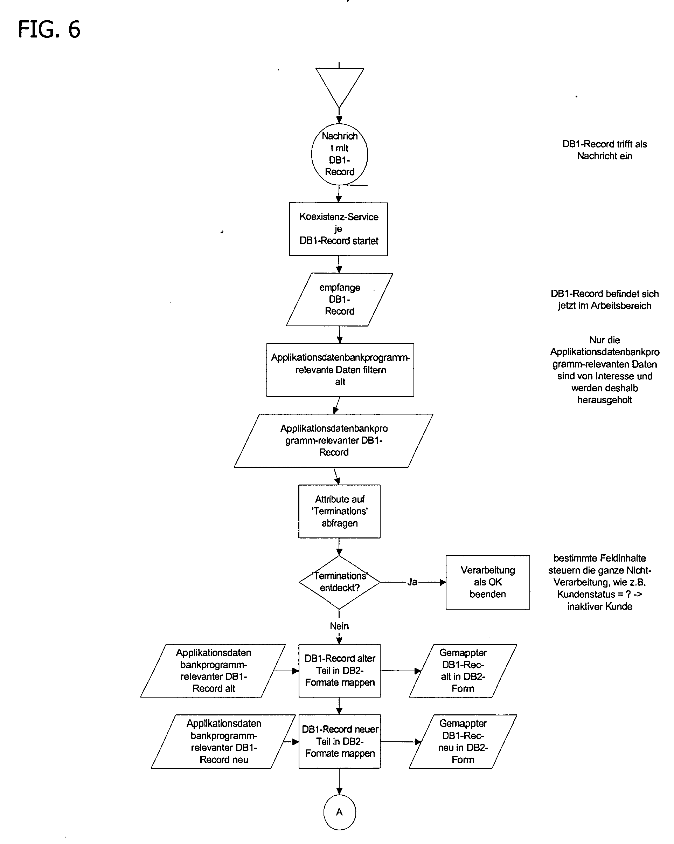

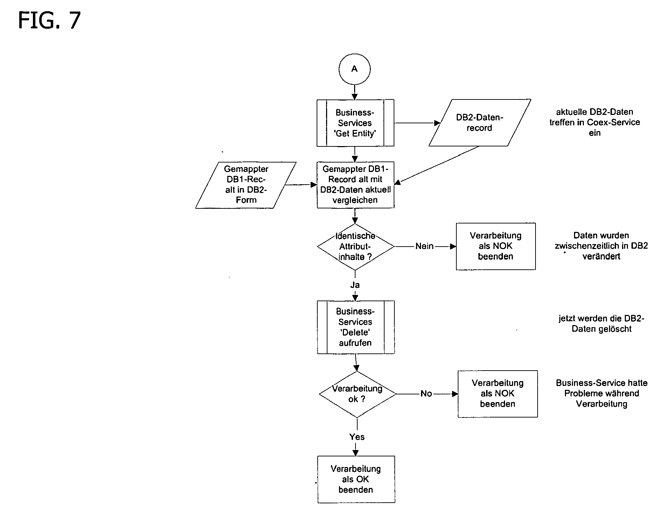

Das Verhalten bei Speichern und Einfügen von Daten, das Verhalten bei Modifizieren von Daten, das Verhalten bei Mutation eines Falles, und das Verhalten bei Löschen eines Falles, ist anhand der Flussdiagramme der Fig. 3 - 7 erläutert.

In der ersten Datenbankplattform DB1 sind die Einträge (Stammdaten, Personen, etc.) über "Kundennummern" eindeutig identifiziert, wobei ein Kunde mit mehreren Kundennummern letztlich als mehrere unterschiedliche Kunden geführt ist. Dazu sind Objekte (Konto, Safe, Depot, ...) definiert, die mit analog aufgebauten Konto-, Depot, Safe-Nummern ... identifiziert werden. Diese Objekte sind dann stets einem Kunden zugeordnet.

Im Gegensatz dazu sind in der zweiten Datenbankplattform DB2 sind die Einträge sowohl die Kunden, als auch die Objekte einheitlich mit "DB2-Identifizierern" eindeutig gekennzeichnet. Diese "DB2-Identifizierer" sind völlig unabhängig von den "Kundennummern" der ersten Datenbankplattform DB1.

Während der gesamten Koexistenzphase der beiden Datenbankplattformen wird eine stabile Übersetzung zwischen den Nummern der ersten Datenbank und den "DB2-Identifizierern" bereitgestellt. Dazu dienen "Übersetzungstabellen", die von der Koexistenz-Steuerung geführt werden.

Die Relation DB1 Kundennummer <-> "DB2-Identifizierer"-(Kunde) erfolgt durch eine besondere Softwareprogramm-Komponente "Partner-Directory" (siehe Fig. 1). Die Relation DB1-Objektnummer <-> "DB2-Identifizierer"-(Objekte) erfolgt in der Softwareprogramm-Komponente "Contract-Directory" (siehe Fig. 1).

Diese Relationen werden mit der ersten produktiven Datenübernahme (initial load) von der ersten Datenbank in der zweiten Datenbank aufgebaut und mit jeder Datenübernahme und/ oder Datennachführung erweitert.

Ab dem Zeitpunkt der ersten produktiven Datenübernahme werden diese Relationen nicht mehr mutiert; sie werden nur "erweitert" oder ergänzt.

Der Verlust einer dieser Relationen bedingt einen Recovery des entsprechenden Directory.

Bei der Übersetzung einer DB1-Nummer in den zugehörigen "DB2-Identifizierer" wird nach dem folgenden Algorithmus vorgegangen:
Existiert zu einer DB1-Nummer schon der entsprechende "DB2-Identifizierer" in der Softwareprogramm-Komponente "Partner-Directory" oder in der SoftwareprogrammKomponente "Contract-Directory"?.
   - Falls "JA":: Den gefundenen DB2-Identifizierer benützen.
   - Falls "NEIN":: Einen "neuen", ein-eindeutigen DB2-Identifizierer erzeugen und zusammen mit der DB1-Nummer in die betreffende Relation der Softwareprogramm-Komponente "Partner-Directory" oder "Contract-Directory"eintragen.

Beim Neueröffnen eines DB2-Identifizierer die absolut notwendigen, begleitenden Attribute dazu in der zweiten Datenbankplattform eintragen. Dieser neu eröffnete kann DB2-Identifizierer verwendet werden.

Dieser Algorithmus wird an jeder Stelle im Umfeld der zweiten Datenbankplattform aufgerufen und abgearbeitet, an der zu einer DB1-Nummer der entsprechende DB2-Identifizierer ermittelt werden muss. Das sind (unter anderem) die oben beschriebenen Migrationszugriffe, die "Schwester"-Transaktionen, Applikationssoftwareprogramme CCA, SPK, ALP, BD/BTX, DB2 (siehe Fig. 1), alle benutzerorientierten Dienste, die auf Stammdaten auf der Seite der zweiten Datenbank operieren.

Für diesen Vorwärts-Umsetzungsalgorithmus wird vorzugsweise sowohl eine Variante für den Gebrauch im Stapelverarbeitungsbetrieb, als auch eine Variante für den Gebrauch im Online-Betrieb bereitgestellt. Für beide Implementierungen gilt, dass sie für mehrfach parallelen Einsatz ausgelegt sind.

Für die, die Koexistenz sichernden Abläufe und Transaktionen, zum Beispiel "Schwester"- Transaktionen ist auch eine Übersetzung vom DB2-Identifizierer zur zugehörigen DB1-Nummer erforderlich. Dazu wird vorzugsweise sowohl eine Variante für den Gebrauch im Stapelverarbeitungsbetrieb, als auch eine Variante für den Gebrauch im Online-Betrieb bereitgestellt. Für beide Implementierungen gilt ebenfalls: Sie sind für mehrfach parallelen Einsatz ausgelegt und im Resultat dieser Rückwärtsübersetzung werden vorzugsweise noch die wichtigsten Attribute des Kunden, bzw. Objekts mit ausgegeben.

Die Verteilung der Mutations-Nachrichten an die unterschiedlichen koexistierenden Applikationssoftwareprogramme CCA, SPK, ALP, BD/BTX, DB2 (siehe Fig. 1) erfolgt durch die Module ONL OUT und BAT OUT in der Koexistenz-Steuerung (siehe Fig. 1), je nach dem, auf welchem Weg die Nachrichten von der ersten Datenbank DB1 in der zweiten Datenbankplattform ankommen. Dabei erhalten diejenigen Applikationssoftwareprogramme CCA, SPK, ALP, BD/BTX, die eine eigene, nur von ihnen bewirtschaftete Datenhaltung (Datenbank) haben, neben der zweiten Datenbank DB2 die Mutationsnachrichten übermittelt. Das sind im vorliegenden Beispiel die Datenbanken der Applikationssoftwareprogramme Partner, die Directories Contract und Product, Core Cash Accounting (CCA), und andere. In ähnlicher Weise wie die Koexistenzsteuerung hat jedes der einzelnen Applikationssoftwareprogramme, dem die Mutationsnachrichten übermittelt werden, einen Eingangs-Nachrichten-Puffer ENP. Darin sind Gruppen zusammengehörigen Nachrichten erkennbar. Sie werden in der Koexistenz-Steuerung gesammelt, gemeinsam als ganze Gruppe in den Eingangs-Nachrichten-Puffer ENP der betroffenen Applikationssoftwareprogramme gestellt. Die Logik der Verteilung an die Applikationssoftwareprogramme erfolgt nach folgenden Prinzipien:
- Es werden nur ganze, das heißt vollständige, Mutationsnachrichten in die Eingangs-Nachrichten-Puffer ENP der betroffenen Applikationssoftware-programme gestellt. Einen Ausschluss von einzelnen Attributen gibt es nicht.
- Bei Gruppen zusammengehöriger Records werden nur die ganze, zusammengefasste Nachricht gesandt.
- Ein Applikationssoftwareprogramm bekommt die Nachricht nur dann in seinen Eingangs-Nachrichten-Puffer ENP, falls es von der Mutation bzw. von der Nachricht "betroffen" ist.

Bei jeder eingehenden Mutation bzw. der Nachricht wird anhand des Record "alt"/"neu" festgestellt, welche Attribute geändert sind. Dies wird als Eingangsparameter benötigt, um in einer weiter unten im Detail beschriebenen Tabelle "Attributbetrifft-Applikationssoftwareprogramm" festzustellen, an welche Applikationssoftwareprogramme die jeweilige Mutation/ Nachricht - außer der zweiten Datenbank DB2 noch zu senden ist. Dies gilt nicht für "Einfügen-" und "Löschen"-Nachrichten. Des Weiteren wird noch eine ebenfalls weiter unten im Detail beschriebene Tabelle "Record-Typ-Verteilen" geführt, um festzustellen, ob ein Applikationssoftwareprogramm von der jeweiligen Nachricht/Mutation "betroffen" ist. Dementsprechend wird die Verteilung der jeweiligen Nachricht/Mutation von der Koexistenz-Steuerung gesteuert.

Die Tabelle "Record-Typ-Verteilen" ist eine statische Tabelle, die manuell bewirtschaftet wird. Die Module ONL OUT und BAT OUT lesen für jedes der Applikationssoftwareprogramme diese Tabelle, sie schreiben aber nie darauf.

Die Tabelle hat zwei Dimensionen: Komponenten und Record-Typ.
- Für jede Komponente (Applikationssoftwareprogramm), gibt es eine Zeile. Die Komponenten sind mit ihren Namen identifiziert, zum Beispiel Partner, die Directories Contract und Product, Core Cash Accounting (CCA) und andere. Es können jederzeit neue Komponenten aufgenommen werden.
- Für jeden von dem Kapselungsmodul KM gesendeten Record-Typ gibt es eine Spalte. Die funktional gekapselten Transaktions-Nachrichten gelten jeweils als ein separater Record-Typ.

In den einzelnen Feldern der Tabelle können die Werte {0, 1, 2} stehen. Sie haben folgende Bedeutung:
- "0": Die Komponente ist am Record-Typ NICHT interessiert.
- "1": Die Komponente ist am Record-Typ grundsätzlich interessiert, sie erhält die Nachricht jedoch nur, wenn sie von einem geänderten Attribut betroffen ist (sie unten).
- "2": Die Komponente ist am Record-Typ interessiert, sie erhält die Nachricht immer.

Die Tabelle "Attribut- betrifft- Applikationssoftwareprogramm" ist eine statische Tabelle, die manuell bewirtschaftet wird. Die Module ONL OUT und BAT OUT lesen für jedes der Applikationssoftwareprogramme diese Tabelle, sie schreiben aber nie darauf. Die Tabelle hat drei Dimensionen: Record-Typ, Komponenten und Attribute.
- Für jeden von dem Kapselungsmodul KM gesendeten Record-Typ gibt es eine zweidimensionale Unter-Tabelle.
- Für jede Komponente (Applikationssoftwareprogramm), gibt es in der zweidimensionalen Unter-Tabelle eine Spalte. Die Komponenten sind mit ihren Namen identifiziert, zum Beispiel Partner, die Directories Contract und Product, Core Cash Accounting (CCA) und andere. Es können jederzeit neue Komponenten aufgenommen werden.
- Für jedes Attribut des Record-Typ gibt es in der zweidimensionalen Unter-Tabelle eine Zeile.

In den einzelnen Feldern der zweidimensionalen Unter-Tabelle können die Werte {0, 1} stehen. Sie haben folgende Bedeutung:
- "0": Die Komponente ist vom Attribut des Record-Typ nicht abhängig. Das heißt, dass das betreffenden Attribut weder in den lokalen Daten der Komponente geführt, noch in einer Mapping-Regel verwendet wird. Die Komponente ist vom Attribut des Record-Typ NICHT "betroffen".
- "1": Die Komponente ist vom Attribut des Record-Typ abhängig. Das kann heißen, dass das betreffende Attribut in den lokalen Daten der Komponenten geführt wird; es kann auch heißen, dass das Attribut in den Mapping-Regeln für die Bewirtschaftung der lokalen Daten der Komponente verwendet wird. Die Komponente ist vom Attribut des Record-Typ "betroffen".

Ein weiterer Aspekt der Erfindung ist wenigstens eine Softwareprogrammkomponente, durch die bei einer von einer Applikations-Arbeitsstation auf die erste Datenbank initiierten Transaktion eine sog. Schwester-Transaktion auf zweite Datenbank aufgerufen wird und umgekehrt. Dabei verhält sich aus der Sicht der Applikations-Arbeitsstation die Schwester-Transaktion auf der Seite der zweiten Datenbank analog zu ihrem Pendant auf der Seite der ersten Datenbank.

Durch die Portierung von Transaktionen als sogenannte Schwestertransaktionen werden die zu der ersten Datenbankplattform existierenden Funktionalitäten, Dienste und Daten möglichst schnell im Kontext der zweiten Datenbankplattform zur Verfügung gestellt. Dabei wird erfindungsgemäß mit den gleichen Quellprogrammen gearbeitet. Dies ermöglicht, während der Migrationsphase nur einen Quellcode, nämlich den der ersten Datenbankplattform zu pflegen (und ggf. zu modifizieren). Bei der Aktivierung der Schwestertransaktionen im Kontext der zweiten Datenbankplattform werden die Schnittstellen der/zu den Applikationssoftwareprogramme/n nicht verändert.

Eine Schwestertransaktion besteht aus einem oder mehreren Software-Programm-Modulen. Ein Software-Programm-Modul ist ein Cobol Programm, welches die Verarbeitungslogikanweisungen enthält und über Primitives auf das System zugreift. Ein Primitive besteht wiederum aus einem Makro, welches in der Computersprache Delta geschrieben ist, und einem Programm-Modul, das in der Computersprache Cobol geschrieben ist. Das Makro stellt dabei in der zweiten Datenbankumgebung dieselbe Schnittstelle wie in in der ersten Datenbankumgebung zur Verfügung, greift jedoch im Hintergrund auf neue Cobol Module zu. Das Cobol Modul benutzt die Infrastruktur der zweiten Datenbank-Komponenten, um die Verarbeitung im neuen Umfeld nach alter Funktion sicherzustellen.

Eine Schwestertransaktion in der zweiten Datenbankumgebung ist ein identisches Duplikat der jeweiligen Transaktion in der ersten Datenbankumgebung, mit dem Unterschied, dass die Systemumgebung (Autorisierung, Transaktionsverarbeitung-Middleware, Datenbank- und Hilfsmakros) auf der zweiten Datenbankseite simuliert wird.

Die Schnittstellen der Schwestertransaktionen in der zweiten Datenbankumgebung entsprechen den Originaltransaktionen in der ersten Datenbankumgebung. Solange die erste Datenbankumgebung Master ist, werden sämtliche Mutationen des Datenbestandes über die Originaltransaktionen in der ersten Datenbankumgebung ausgeführt. Nur lesende Schwestertransaktionen können auf der Seite der zweiten Datenbankumgebung aktiviert werden. Während dieser Zeit wird zwischen der zweiten Datenbankumgebung und der ersten Datenbankumgebung recordorientiert und funktional synchronisiert. Für eine funktionale Synchronisation können bereits vor dem Umschalten auf die zweite Datenbank als Master, modifizierende oder schreibende Schwestertransaktionen zum Einsatz kommen. Dazu wird dieselbe Nachricht übermittelt, die bereits Kontext der ersten Datenbank verarbeitet worden ist. Dabei findet auf der Seite der Schwestertransaktionen eine erneute Eingabenvalidierung nicht statt.

Die in Echtzeit ausgeführten Mutationen auf der Seite der ersten Datenbank benutzen das Kapselungsmodul der ersten Datenbank. Damit können die mutierten Einträge (Records) aus der ersten Datenbank in die zweite Datenbank synchronisiert werden können. Die Records werden auf der Seite der zweiten Datenbank an die Koexistenz-Hauptsteuerung geschickt, welche die Koexistenz-Elementprogramme und die entsprechenden Applikationsprogramm-Elemente im Kontext der zweiten Datenbankplattform nachführt. Das Kapselungsmodul wird einmal portiert und anschliessend auf die Umgebung der zweiten Datenbank angepasst. So können Änderungen an den Datenbankinhalten über die Koexistenz-Hauptsteuerung an die Koexistenz-Elementprogramme und die entsprechenden Applikationsprogramm-Elemente im Kontext der zweiten Datenbankplattform geschickt werden. Modifizierende Schwestertransaktionen verwenden den selben Mechanismus wie die Record Synchronisierung, um auf in zweite Datenbank und die entsprechenden Applikationsprogramm-Elemente im Kontext der zweiten Datenbankplattform zu schreiben.

Nachdem alle Schwestertransaktionen in der zweiten Datenbankumgebung zur Verfügung stehen, wird diese als Master definiert. Ab diesem Zeitpunkt erfolgen sämtliche Echtzeit- (aber auch die Stapelverarbeitungs-) Mutationen über die Schwestertransaktionen, welche nach erfolgreicher Mutation der zweiten Datenbank die Synchronisation zu der ersten Datenbank auslösen. Diese Synchronisation erfolgt in dieser Phase ausschliesslich funktional, d.h. sämtliche eingehenden Nachrichten oder Transaktionen werden unverändert an die erste Datenbank weitergeleitet und dort nachgeführt. Sobald diese Phase abgeschlossen ist, kann die Ablösung der Schwestertransaktionen erfolgen.

Bei der Synchronisation in der Richtung von der ersten zur zweiten Datenbank wird entweder recordorientiert oder funktional synchronisiert. Dabei wurden dieTransaktionen in drei Kategorien unterteilt. Dies gestattet eine Priorisierung der zu portierenden Applikations-Softwareprogramme.

Ein erster Typ von Transaktionen löst eine Record-orientierte (d.h. Datenbankeintrags-orientierte) Synchronisation aus. Diese Transaktionen sind einzusetzen, wenn nur wenige Einträge der ersten Datenbank von einer solchen Mutation betroffen sind.

Ein zweiter Typ von Transaktionen löst eine funktionale Synchronisation aus. Diese Transaktionen sind einzusetzen, wenn eine grössere Anzahl von Einträgen der ersten Datenbank von einer solchen Mutation betroffen sind.

Bei der Record-orientierten Synchronisation werden sämtliche durch eine Transaktion der ersten Datenbank mutierten Einträge durch das Kapselungsmodul zur Koexistenz-Hauptsteuerung übermittelt. Die Koexistenz-Hauptsteuerung ruft dabei zuerst das oder die Koexistenz-Dienstprogramme des Koexistenz-Elementes der zweiten Datenbankumgebung auf, um die Einträge bzw. die Mutationen der ersten Datenbank in die zweite Datenbankumgebung zu bringen. Nach erfolgreicher Mutation der zweiten Datenbankeinträge wird von Koexistenz-Hauptsteuerung das oder die Koexistenz-Elemente bzw. die Koexistenz-Dienstprogramme der Applikationssoftware-Programme (z.B. Partner) aufgerufen, welche die Adaptionsregeln (Mappinglogik) von der ersten auf die zweite Datenbank bzw. auf die Applikationssoftware-Programme in der zweiten Datenbankumgebung enthalten.

In diesem Fall werden die Schwestertransaktionen der ersten Datenbankumgebung nicht benötigt, um die Daten erfolgreich in die zweiten Datenbankumgebung zu bringen.

Bei einer funktionalen Synchronisation werden die durch eine oder mehrere Transaktionen mutierten Einträge der ersten Datenbank nicht über das Kapselungsmodul und die Synchronisationsinfrastruktur in Echtzeit zur Koexistenz-Hauptsteuerung übermittelt, sondern die an die Transaktion(en) der ersten Datenbank gesandte originale Eingangsnachricht. Die Koexistenz-Hauptsteuerung erkennt aufgrund der Nachrichtenbezeichnung, dass es sich um eine Eingangsnachricht und nicht um eine Record-Nachricht handelt, und leitet die Verarbeitung direkt an diejenige der Schwester-transaktionen der ersten Datenbank weiter, welche dieselbe Verarbeitung ausführt. Wenn auch das Kapselungsmodul der ersten Datenbank portiert ist, können sämtliche Mutationen der zweiten Datenbank ebenfalls über das Schwester-Kapselungsmodul der ersten Datenbank erfolgen. Dieses Schwester-Kapselungsmodul schickt die Mutation als Record Nachricht an die Koexistenz-Hauptsteuerung, die wie bei der Record Synchronisierung die Koexistenz-Elemente bzw. die Koexistenz-Dienstprogramme der Applikationssoftware-Programme (z.B. Partner) aufruft, welche die Adaptionsregeln (Mappinglogik) von der ersten auf die zweite Datenbank bzw. auf die Applikationssoftware-Programme in der zweiten Datenbankumgebung enthalten.

In diesem Fall werden die Schwestertransaktionen eingesetzt, um die Daten im richtigen Format (z.B. als abhängige Records) in die zweite Datenbank zu bringen und die Synchronisation zu den Applikationssoftware-Programmen auszulösen. Online Validierungen im Kontext der zweiten Datenbank werden jedoch nicht ausgeführt, da die Validierung des Inhaltes bereits im Kontext der ersten Datenbank bereits erfolgt ist. Die Validierung des Inhaltes im Kontext der zweiten Datenbank wird erst aktiviert, wenn die zweite Datenbank Master ist.

Da die Transaktionen auf beiden Seiten identisch sind, erfolgen sämtliche Mutationen ausschliesslich über ein Schwester- Kapselungsmodul im ersten Datenbankkontext Das Kapselungsmodul modifiziert mittels Datenbank-Makros die zweiten Datenbank synchron. Danach werden vom Kapselungsmodul dieselben Records auch an die Koexistenz-Hauptsteuerung geschickt, die wie bei der Record Synchronisierung die Koexistenz-Elemente bzw. die Koexistenz-Dienstprogramme der Applikationssoftware-Programme (z.B. Partner) beschickt, damit diese synchronisiert werden können.

Wie vorstehend erläutert, gibt es grundsätzlich zwei verschiedene Arten um Schwestertransaktionen anzustossen.
1. Via HostLink
2. Via Nachrichten-basierter Synchronisation durch CART. CART ist eine Middleware-Lösung, die eine sichere, asynchrone, store-and-forward Kommunikation zwischen verteilten Applikationen auf unterschiedlichen Plattformen bietet.

Nachstehend wird erläutert, welche für die zweite Datenbankplattform wesentlichen Informationen/Daten an welcher Stelle im Gesamtsystem vorhanden sind und woher sie kommen.

Wenn eine Schwestertransaktion via Hostlink angefordert wird, so erreicht die Anforderung ein Online Root Programm. Im Online Root Programm wird ermittelt, welche Transaktion und Funktion angefordert wird. Aufgrund des gewünschten Transaktionscodes und dem entsprechenden Funktionscode wird dann die entsprechende Routine mittels Call aufgerufen.

Zum Beispiel: CALL CIFRoutine USING AQYGENERAL T371TPINFO

Die Routine kann in der Verarbeitung anschliessend mittels weiteren TP-Primitives zusätzlich Informationen wie Input Message oder Terminal Record anfordern. Auch diese Informationen werden von Hostlink bereitgestellt.

Bei der funktionalen Synchronisation wird im Kontext der ersten Datenbank eine CART Nachricht aufgebaut und in die Umgebung der zweiten Datenbank gesendet. Diese Nachricht enthält neben Kopfteilen sämtliche notwendigen Daten, damit die Schwestertransaktion ohne Verwendung von TP-Primitives die Verarbeitung durchführen kann.

Diese CART Nachricht wird von der Koexistenz-Hauptsteuerung empfangen. Im Koexistenz-Kopfteil erkennt die Koexistenz-Hauptsteuerung, dass es sich um eine Nachricht aus dem Umfeld der ersten Datenbank handelt und nicht um einen DatenbankEintrag. Daher wird die Message von der Koexistenz-Hauptsteuerung an das funktionale Root Programm im Kontext der zweiten Datenbank weitergeleitet.

In diesem Root Programm wird die Nachricht so zerlegt und aufbereitet, dass die entsprechende Schwesterroutine mittels CALL aufgerufen werden kann.

CALL CIFRoutine USING AQYGENERAL T371TPINFO MESSAGE-BUFFER

**Format der Synchronisationsmeldung:**

| Kopfteil | | USER TEIL | |
|---|---|---|---|
| CART | Koexistenz | TP Daten | Nachrichtenpuffer |

Im CART-Kopfteil sind technische Informationen enthalten, die für das Routing der Nachricht an die Koexistenz-Hauptsteuerung notwendig sind.

Im Koexistenz-Kopfteil steht neben weiteren technischen Daten der Funktionscode der Transaktion, damit die Koexistenz-Hauptsteuerung erkennen kann, dass es sich um eine funktionale Synchronisationsmeldung handelt, welche für das funktionale Root Programm bestimmt ist.

Im USER-TEIL TP Daten sind die Daten enthalten, welche im Online Fall mittels TPGET TPINFO angefordert werden (z.B. Niederlassung des Objektes). Diese Daten werden vom Root Programm und von der Schwestertransaktion gebraucht.

Der USER-TEIL Nachrichtenpuffer ist abhängig von der entsprechenden Transaktion und enthält neben dem Benutzer Input auch noch wichtige Schlüsselinformationen.

Die Schwestertransaktion kann über den Funktionscode feststellen, ob es sich um eine über die funktionale Synchronisation (CART) oder Online (Hostlink) eingetroffene Meldung handelt.

Handelt es sich um eine Hostlink Eingangsnachricht, so führt die Schwestertransaktion die volle Validierung der Nachricht inklusive eventuelle Zusatz-Autorisierung durch und löst die Mutation der Datenbank via Kapselungsmodul aus. Die Eingangsnachricht wird via TP-Primitive TPGET IMSG abgeholt und der entsprechende (Miss-) Erfolg ebenfalls mittels TP-Primitives dem Benutzer wieder mitgeteilt. Das Kapselungmodul führt die Aktualisierung der zweiten Datenbank mit Hilfe von DB-Makros direkt aus, die Koexistenz-Hauptsteuerung wird für die Aktualisierung der Koexistenz-Elemente bzw. der Koexistenz-Dienstprogramme und/oder der Applikationssoftware-Programme (z.B. Partner) verwendet.

Bei der funktionalen Synchronisation wurde die Verarbeitung bereits auf der ersten Datenbank ausgeführt und werden nun noch in der zweiten Datenbank und den Applikationssoftware-Programme nachgeführt werden. Daher werden sämtliche Validierungen / Autorisierungen übergangen. Die Nachricht wird direkt verarbeitet und die Mutationen werden via Kapselungsmodul ausgelöst. Da bei einer funktionalen Synchronitions-Nachricht keine Hostlink-Verbindung zur Arbeitsstation des Benutzers besteht, können auch keine TP Primitives verwendet werden. Darum liest die Schwestertransaktion alle notwendigen Informationen aus dem übergebenen TP Primitive (T371TPINFO) sowie dem Nachrichten-Buffer.

Zwischen der ersten und der zweiten Datenbank wird ein Vergleich ausgeführt, um eine Aussage über den Gleichstand des Informationsgehaltes der beiden Datenbanken zu erhalten. Ausgehend von dem Datenvergleich wird erfindungsgemäß ein Bericht (Fehlerlog-Datei) über die fehlerhaften bzw. fehlenden Datensätze erstellt. Schließlich wird auch eine Funktion zur Verfügung gestellt, um die fehlerhaften bzw. fehlenden Datensätze zu korrigieren.

Welche Verarbeitungseinheit der ersten Datenbank im Verhältnis zur zweiten Datenbank überprüft werden soll wird anhand eines Planes täglich anhand einer ReferenzTabelle gesteuert. Diese Referenztabelle wird automatisch zwischen den beiden Datenbanken synchronisiert. Soll nichts verarbeitet werden, ist die Referenztabelle anzupassen. In der Referenztabelle steht, welche Verarbeitungseinheit an welchem Tag verglichen werden kann. Der Aufbau und die Logik ist wie folgt:

Die Tasks laufen JEDEN Tag um 05:00 Uhr. Die Programme rufen die Referenztabelle mit Key "CI/0005/wt/1/RECON" auf ("wt" ist der aktuelle Wochen-Tag (01 bis 07)) Die Struktur der Referenztabelle ist wie folgt:
Verarbeitungseinheit:
   01/02/03/04/05/06/07/08/09/10/11/12/13/14/15/16/17/18/34
Wenn die Verarbeitungseinheit auf der ersten Datenbank, in der das Programm läuft, vorhanden ist, gibt es eine Verarbeitung. Auf der zweiten Datenbank werden im Unload-Programm die entsprechenden Verarbeitungseinheiten in Partition Criteria umgewandelt und entsprechend selektiert. Die zu verarbeitenden Record-Typen befinden sich in der Referenztabelle und sind pro Area aufgeteilt::
   AL:D101/D111
   KD:D201/D211/D212/D214/D215/D216/D217/D219/D220/D222/D225/D226/D535
   AD:D311/D321/D322
   DP:F101/F111/F112/F113/F114/F115/F116/F117
   SF:F201/F213/F214/F216/F217/F219
   SV:F230
   KT:K001/K002/K004/K005/K006/K007/K010/K011/K012/K013/K016
   Es werden nur die jeweiligen Records, die selektiert wurden, verarbeitet. Insgesamt ist nur je ein Referenztabellenzugriff pro System und Reconciliationlauf notwendig.

Dazu ist ein Datencontainer vorgesehen, der eine Kontroll- und eine Datentabelle aufweist. Er dient dazu, die Transaktionsklammer im Kontext der ersten Datenbank im Kontext der zweiten Datenbank nachzubilden. Fehlerhafte Datensätze aus dem Datenvergleich werden ebenfalls in diesen Container geschrieben.

Diese Fehlererkennung und -behandlung basiert auf der Infrastruktur der Fehlerlog-Datei und des Datencontainers. Während der Synchronisation werden alle Nachrichten in den Datencontainer geschrieben und von da aus abgearbeitet. Entsteht bei der Synchronisation ein Fehler, werden die Daten als solche gekennzeichnet. Anschließend wird vom Datencontainer eine Verbindung zur Fehlerlog-Datei hergestellt und dann die Fehler angezeigt.

Dazu werden die Software-Programm-Komponenten Fehlerlog-Datei, Datencontainer, Fehlerbehandlung bei der Synchronisation, Nachlieferung und Datenabgleich in eine logische Einheit zusammengefaßt. dabei werden GUIs zur Verfügung gestellt, die ein konsolidiertes Berichtwesen der Komponenten Synchronisation, Erstbefüllung (Initial Load) und Datenabgleich erlauben. Dabei ist auch die Möglichkeit vorgesehen, eine Nachlieferung für die Datenkorrektur aufgrund eines Eintrages manuell auszulösen.

Mit einer Wiederholen-Funktion kann sofort eine festgestellte Differenz zwischen der ersten und der zweiten Datenbank Korrigiert werden. Eine weitere Funktion, die Nachlieferungs-Funktion umfaßt einen Satz von Funktionen, um einen fehlerhaften oder fehlenden Datensatz im Kontext der zweiten Datenbank in einer Tabelle zu selektieren, eine entsprechende Mutation zu erzeugen und über den Synchronisationsprozess wieder nach in den Kontext der zweiten Datenbank zu propagieren. Die Nachlieferungs-Funktion korrigiert drei Fehlermöglichkeiten:
- Ein Datensatz ist in der ersten Datenbank nicht vorhanden, ist aber in der zweiten Datenbank vorhanden
- Ein Datensatz ist in der ersten Datenbank vorhanden, ist aber in der zweiten Datenbank nicht vorhanden
- Ein Datensatz ist in der ersten Datenbank vorhanden, ist aber in der zweiten Datenbank mit falschem Inhalt vorhanden

Das Datenvergleichs-System vergleicht die Datenbestände beiden Datenbanken miteinander und deckt dabei soviele Abweichungen wie nur möglich auf. Wenn die Datenstrukturen auf beiden Systemen nahezu identisch sind, ist ein Vergleich einfach auszuführen. Ein wesentliches Problem sind die sehr hohen Datenbestände, die miteinander zu einem bestimmten (zeitlichen) Stichpunkt zu vergleichen sind.

Die Fehlererkennung umfaßt einerseits den Abzug und die Aufbereitung der Daten aus den beiden Datenbanken. Dazu werden Hashwerte berechnet und miteinander verglichen. Bei Differenzen werden die Daten aus den jeweiligen Datenbanken geholt. Ebenfalls Bestandteil der Fehlererkennung ist ein Vergleichs-Programm, welches die korrumpierten Daten aus der ersten und er zweiten Datenbank im Detail vergleicht und Abweichungen in die Fehlerlog-Datei der Synchronisation (und die Daten dazu in den Datencontainer) dokumentiert. Im Datencontainer wird dann unmittelbar versucht, die neuen Daten auf die entsprechende Datenbank durch Ausführen der Wiederholen-Funktion zu applizieren.

Die Fehleranalyse umfaßt Aufbereitungs-Funktionen der Fehlerbehandlung, um die Daten aus der Fehlerlog-Datei und dem Datencontainer zu analysieren und in Verbindung zueinander bringen. Diese Daten werden dann von einem GUI (Graphical User Interface) angezeigt. Die Analyse, um welche Fehler es sich handelt, kann dann ggf. manuell vorgenommen werden. Ebenfalls aus diesem GUI können dann sogenannte Nachlieferungsfunktionen Batch und eine Wiederholen-Funktion (Retry) angestossen werden.

Bei der Fehlerbehebung gibt es 3 Ausprägungen:
- Eine Nachlieferung von Einzel-Records bzw. die Wiederholen-Funktion (Retry). Die Fehlerbehebung schreibt die fehlerhaften Daten in den Datencontainer, von wo aus die Behebungs-Funktionen angestossen werden.
- Ein Teil-Initial-Load oder ein Massenaktualisierung ist identisch mit dem Initial Load.
- Bei einem Initial Load werden die betreffenden Tabellen zuerst gelöscht.

Im Rahmen der Fehlerbehebung werden unter Anderem folgende Datenstrukturen gelesen und geschrieben:
- Datencontainer
- Errorlogs
- Unload-Dateien
- Hash-Files
- Umsetz-Datei
- Vergleichs-Datei
- Nachlieferungsfile
- Q1-Datenbank

Für die Unload-Dateien werden dieselben Datenstukturen wie die der Initial-Load-Unload-Files verwendet.

Die Hash-Datei hat folgende Struktur:

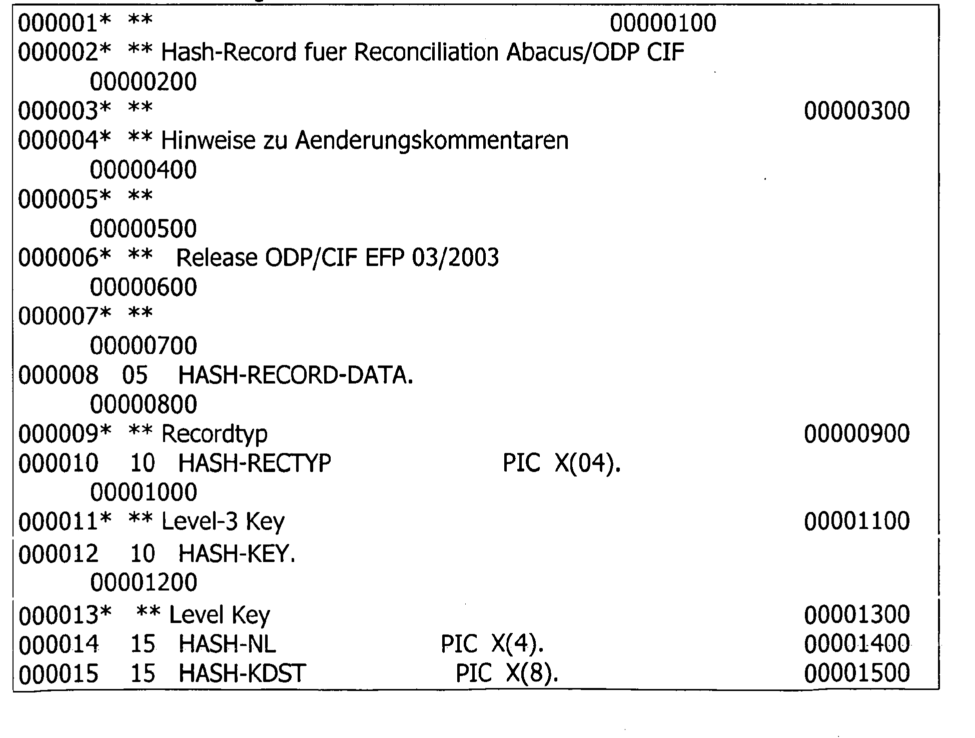

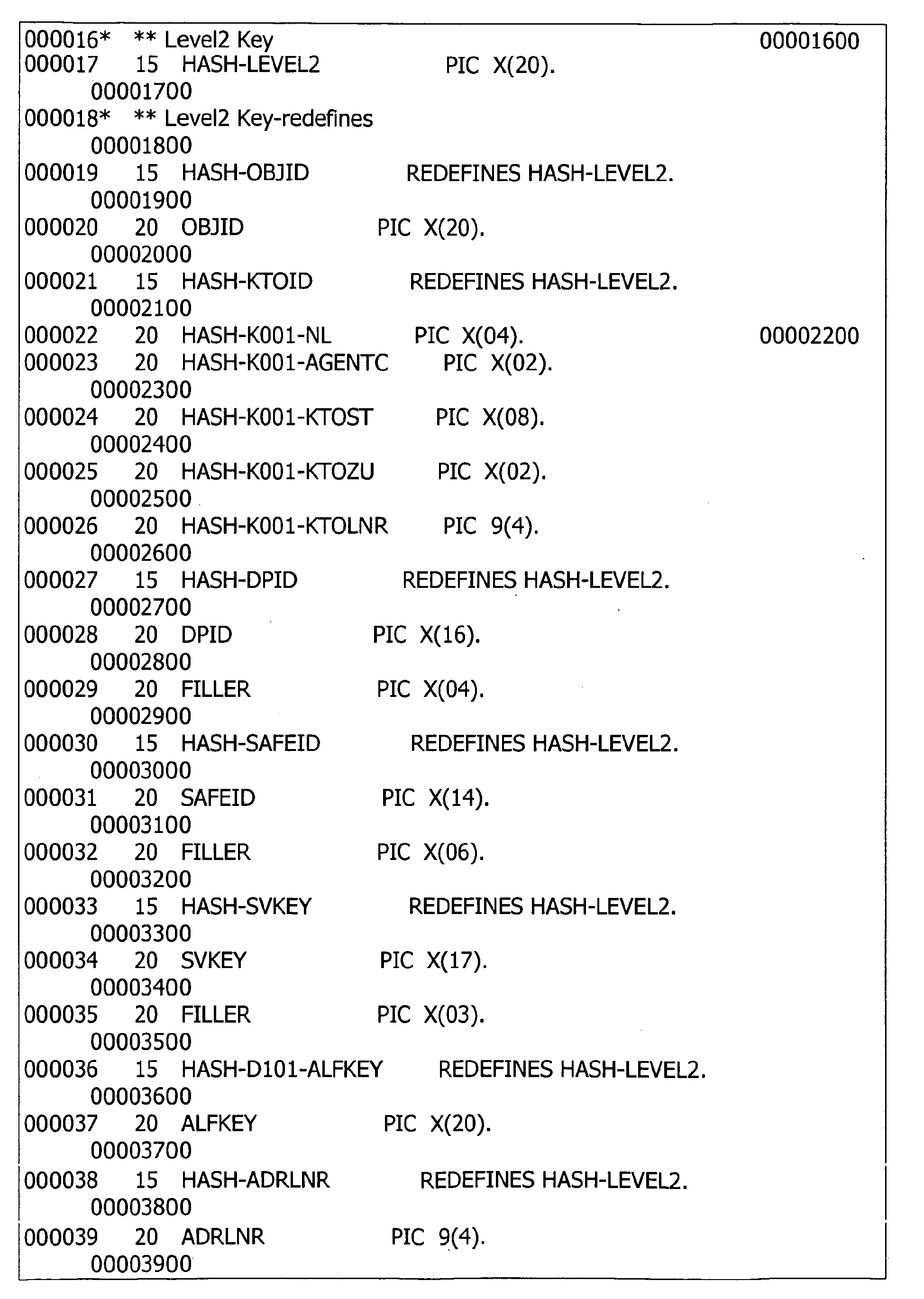

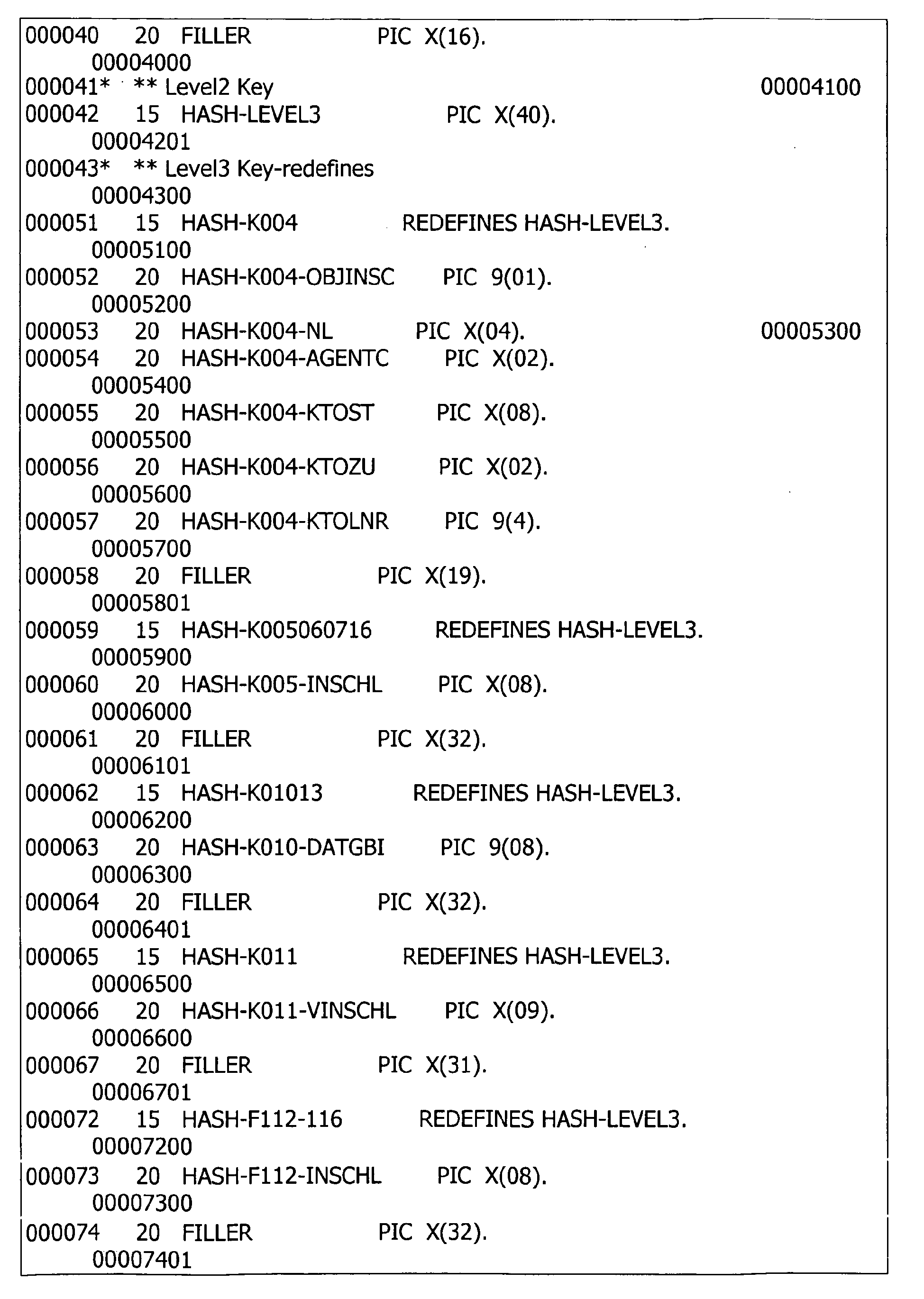

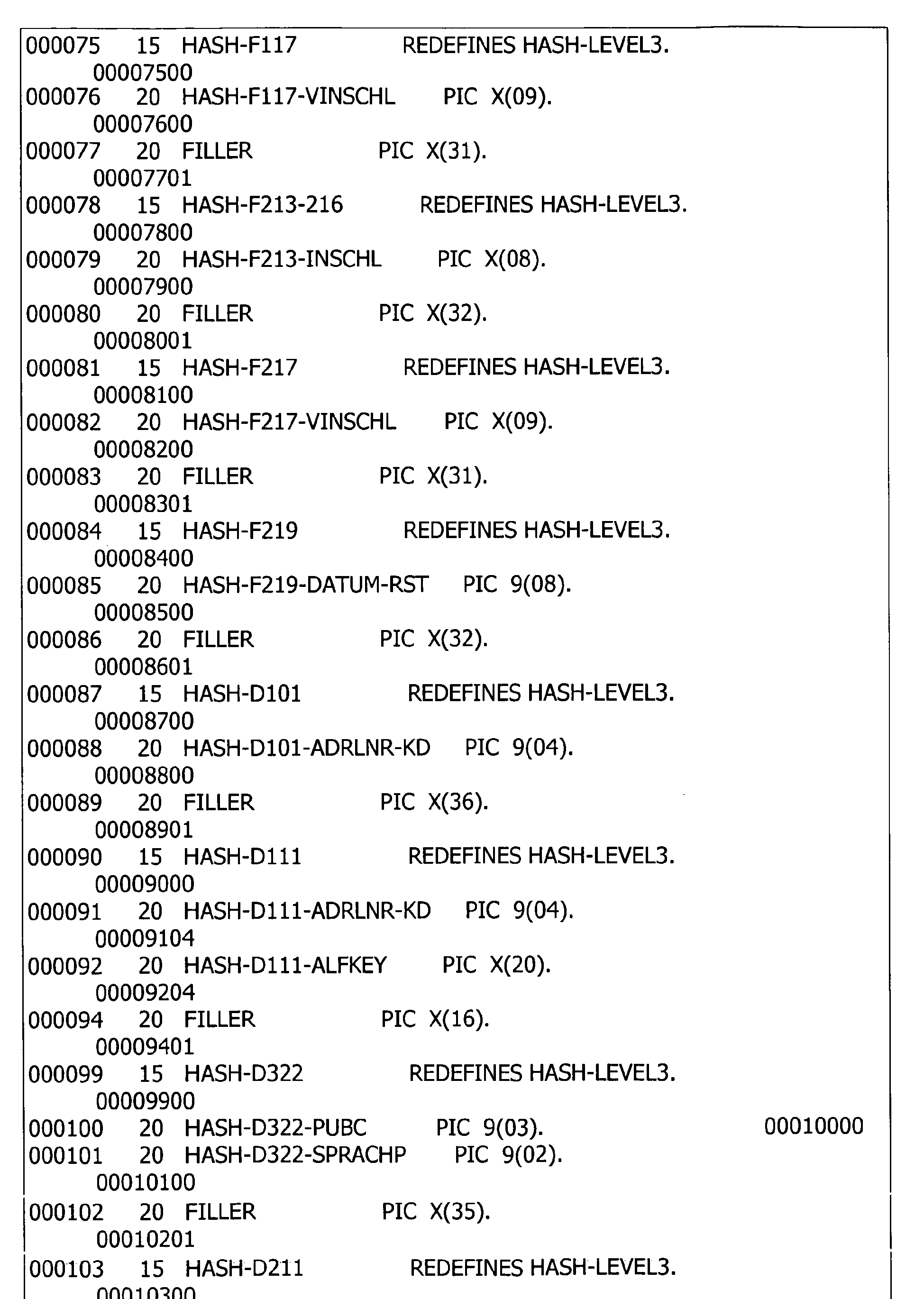

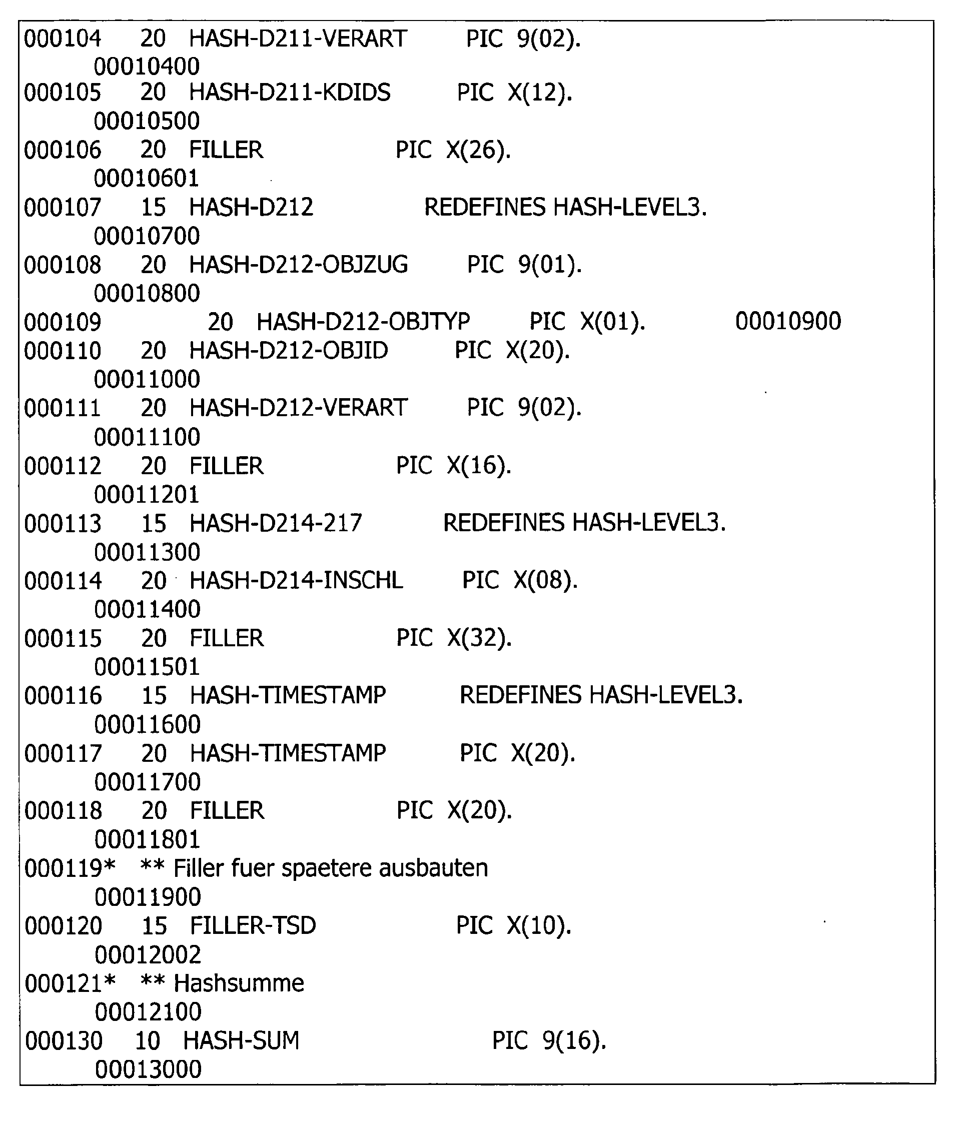

Die Umsetz-Datei hat folgende Struktur:

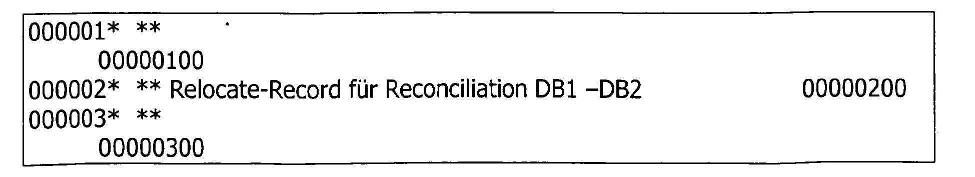

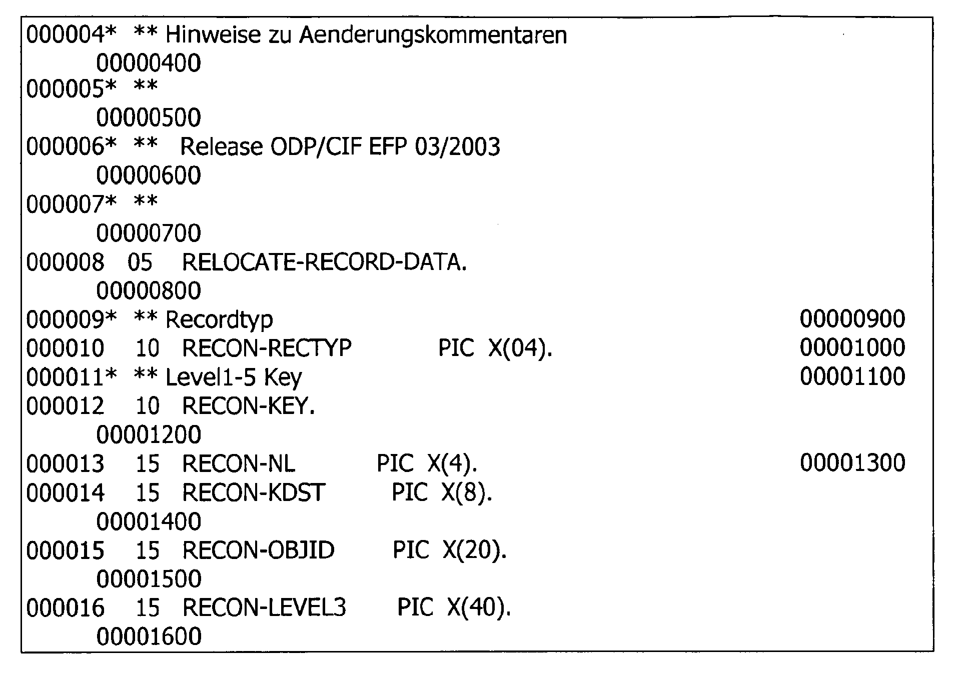

Die Vergleichs-Datei verwendet dieselben Datenstrukturen wie sie für die sonstige Synchronisation verwendet werden. Nachstehend ist der Kopfteil der Vergleichs-Datei im Detail erläutert:

| Name | Inhalt | | | Länge |
|---|---|---|---|---|
| COEX-MUTPRG | Programm-Name des Mutationsprogrammes | | | PIC X(08). |
| COEX-AGENTC | Agenturcode | | | PIC X(02). |
| COEX-APCDE | Applikationscode | | | PIC X(02). |
| COEX-NL | Verarbeitungsniederlassung | | | PIC X(04). |
| COEX-UFCC-E | Programmfunktionscode | | | PIC X(03). |
| COEX-UPTYP | Update-Typ | | | PIC X(01). |
| | S | = | STORE / SPEICHERN | |
| | M | = | MODIFY / VERÄNDERN | |
| | D | = | DELETE (ERASE) / LÖSCHEN | |
| COEX-USERID | USERID des Sachbearbeiters | | | PIC X(06). |
| COEX-PAKET-TIME-STAMP | Datum und Zeit (JJJJMMTThhmmssuuuuuu) des Pakets | | | PIC X(20). |
| COEX-REC-TIME-STAMP | Datum und Zeit (JJJJMMTThhmmssuuuuuu) der Mutation | | | PIC X(20). |
| COEX-NL-KD | Niederlassung | | | PIC X(04). |
| COEX-KDST | Kundenstammnummer | | | PIC X(08). |
| COEX-OBJID | Objektidentifikation / DB1 Key Felder | | | PIC X(20). |
| COEX-RECTYP | Record-Typ (Recordtyp aus Datenbank 1 resp. TERM, TERM-Records enthalten keinen Datenteil) | | | PIC X(04). |
| COEX-REC-SEQUENZ | Record-Sequenznummer (innerhalb eines Paketes, bei TERM = höchste Sequenz pro Paket) | | | PIC 9(08). |
| COEX-ORIGIN | Herkunft des Records | | | PIC X(1) |
| | 0 = Initial Load (BC) | | | |
| | 1 = Nachlieferung (DB1) | | | |
| | 2 = Synchronisation | | | |
| | 3 = Reconciliation (DB2) | | | |
| | 5 = Online Schwester (DB2) | | | |
| | 6 = Reconciliation (BC) | | | |
| COEX-REQUEST-TYPE | O = Online Verarbeitung | | | PIC X(1) |
| | B = Batch Verarbeitung | | | |
| COEX-RESYNC-ID | Primärschlüssel von TAPCPACKAGE, respektive TAPCDATA für die Nachlieferung | | | PIC X(32) |
| COEX-RESYNC-STATUS | Enthält den Returncode der Datenbank 1 Nachlieferfunktion | | | PIC X(2) |
| COEX-LEVEL3-KEY | Datenbank 1 Key Felder | | | PIC X(40) |
| COEX-RESERVED | Reserve | | | PIC X(6) |
| COEX-DATA | Record alt und neu | | | PIC X(10600). |

| | | | |
|---|---|---|---|
| Tabellenname | Insert (Einfügen) | Mutation (Verändern) | Delete (Löscen) |
| Datencontainer | Business-Service Fehlerbehandlung | Business-Service Fehlerbehandlung | Reorg-Job |
| Fehlerlog-Datei | Business-Service Allgemeine Dienste | Business-Service Allgemeine Dienste | Reorg-Job |
| Unload-Files DB2 | Unload-Jobs DB2 | Keine | Unload-Jobs DB2 |
| Hash-Datei | Hash-Programm DB1 Hash-Programm DB2 | Keine | Netz-Job, vor Start Reconcilierungs-Lauf |
| Umsetz-Datei | Compare-Programm | Keine | Netz-Job, vor Start Reconcilierungs-Lauf |
| Vergleichs-Datei | Selektions-Programm DB1 Selektions-Programm DB2 | Keine | Netz-Job, vor Start Reconcilierungs-Lauf |
| Nachlieferungs-Datei | Nachlieferungsfunktion Fehlerbehandlung | Keine | Datei wird jeweils überschrieben oder nach Transfer gelöscht |
| Q1-Datenbank | Nachlieferungsmodul | Keine | Monitor |

Das Koexistenz-Steuerungsprogramm legt die Programme oder Programmkomponenten fest, welche für eine bestimmte Recordart aufgerufen werden. Das Koexistenz-Steuerungsprogramm wird dazu benötigt, die zu korrigierenden Daten aus der ersten Datenbank in den Kontext der zweiten Datenbank zu laden.

Bei erfolgreichen Nachlieferungen werden durch das Das Koexistenz-Steuerungsprogramm die fehlerhaften Einträge im Datencontainer auf "erledigt" gesetzt.

Die Fehlermeldungen und die fehlerhaften Daten können (ggf. sortiert) angezeigt werden. Es werden Funktionen zur Verfügung gestellt, um die Nachlieferservices anzustossen.

Im Datencontainer können die Fehler, die aus der Reconciliation der zweiten Datenbank stammen von denen unterschieden werden, die aus der Synchronisation zwischen den beiden Datenbank stammen. Außerdem sind Funktionen zur Visualisierung, zur Korrektur und zur Nachlieferung bzw. Retry der Daten zur Verfügung gestellt.

Durch die erfindungsgemäße Funktion reduzieren sich die Mengen und Fehlerarten, je länger die Systeme der beiden Datenbankumgebungen parallel geführt werden. Es kann nach Verarbeitungsende (Tag, Woche, oder dergl.) und nach Recordtyp rekonziliert werden. Weiterhin ist es möglich nur die Records zu überprüfen, die auf Seiten der zweiten Datenbank bereits benötigt (abgefragt) werden. Die noch nicht in Benutzung befindlichen Records können beispielsweise nur einmal monatlich geprüft werden.

Die Reconciliation deckt Ungleichheiten zwischen den Systemen der beiden Datenbanken auf behebt sie. Dabei werden in erster Linie Fehler erkannt, die nicht bereits durch die Synchronisation entdeckt wurden. Dies können sein:
- Nicht-Kapselung eines Batch-/Online-Programmes auf dem System der ersten Datenbank
- Verlorengehende Nachrichten bzw. Dateien auf dem Transportweg
- Programmfehler in dem Umfeld des zweiten Datenbanksystems.
- Wiederherstellung auf einem der beiden Systeme
- Nachrichten Datensätze, welche im Kontext der zweiten Datenbank nicht appliziert werden können

Es wird davon ausgegangen, dass die meisten Fehler durch die Nachlieferungsfunktion behoben werden können. Alternativ ist es auch möglich, durch einen weiteren Initial Load oder Teil-Initial Load (Massenupdate) die zweite Datenbank neu zu laden.

Von den zu vergleichenden Datenbankeinträgen und deren Attributen werden in einem ersten Schritt die Hashwerte ermittelt und miteinander verglichen. Sind diese unterschiedlich, werden in einem zweiten Schritt die originären Daten miteinander verglichen. Dazu werden zunächst die Hashwerte und in einem zweiten Schritt ggf. die originären Daten von dem Kapselungsmodul an die zweite Datenbank gesendet und dort verglichen.

| **DB1 Record** | **Beschreibung** |
|---|---|
| D101 | Alfasearch (Area) |
| D111 | Nebenalfasearch |
| D201 | Kunde |
| D211 | Kundenverbindung |
| D212 | Kundenobjekte |
| D214 | Avis |
| D215 | Sperre |
| D216 | Instruktion |
| D217 | Avor |
| D219 | Scorewerte |
| D220 | Antrag |
| D222 | Kundenstammdaten für Scoring |
| D225 | Kundenstammdaten für Antragscoring für Unternehmerlinie |
| D226 | Bewegungsdaten für Scoring Unternehmerlinie |
| D311 | Kundenadresse |
| D321 | Rückadresse |
| D322 | Publikation |
| D535 | Kundenstamm für nachrichtenlose Kunden |
| F101 | Depotstamm |
| F111 | Verfügungsnachweis |
| F112 | Auslösung |
| F113 | Sperre |
| F114 | Instruktionen |
| F115 | Avisierung |
| F116 | Hinweis |
| F117 | Versandinstruktion |
| F201 | Save |
| F213 | Sperre |
| F214 | Instruktionen |
| F216 | Hinweis |
| F217 | Versandinstruktion |
| F219 | Offene Rechnungen Safe |
| F230 | Safe Verwaltung |
| K001 | Kontostamm externe Konti |
| K002 | Verfügungsnachweis |
| K004 | Unterkontoverbindung |
| K005 | Individuelle Auslöseinstruktionen |
| K006 | Sperrinstruktionen |
| K007 | Instruktionen |
| K010 | Individuelle Konditionen |
| K011 | Versandinstruktionen |
| K012 | Basis Staffel externe Konto Area |
| K013 | Konditionen für Markzinsmethode |
| K016 | Avisierung |

## Patentansprüche

1. Rechnernetzwerksystem zum Aufbauen und/oder Synchronisieren einer zweiten Datenbank (DB2) aus/mit einer ersten Datenbank (DB1), wobei wenigstens auf die erste Datenbank (DB1) Zugriffe durch Arbeitseinheiten (UOW) von wenigstens einer Applikations-Arbeitsstation ausgeführt werden um Inhalte der Datenbank (DB1) zu erzeugen, zu verändern oder zu löschen, mit
1.1. wenigstens einem ersten Server (S1) zum Vorhalten und Pflegen der ersten Datenbank (DB1), der mit der wenigstens einen Applikations-Arbeitsstation verbunden ist,
1.2. wenigstens einem zweiten Server (S2) zum Vorhalten und Pflegen der zweiten Datenbank (DB2),
1.3. wenigstens einer die beiden Server (S1, S2) verbindenden Datenverbindung, wobei
1.4. eine Steuerung (HS) der zweiten Datenbank (DB2) dazu eingerichtet und programmiert ist,
1.4.1. die an sie gesendeten Nachrichten (M1 .. Mn) aus einer Eingangswarteschlange (Qin) zu lesen,
1.4.2. zu prüfen, ob alle zu einer Arbeitseinheit (UOW) gehörenden Nachrichten (M1 .. Mn) in der Eingangswarteschlange (Qin) angekommen sind,
1.4.3. die entsprechenden Mutationen in der zweiten Datenbank (DB2) auszuführen, wenn alle zu einer Arbeitseinheit (UOW) gehörenden Nachrichten (M1 .. Mn) in der Eingangswarteschlange (Qin) angekommen sind, und ggf.
1.4.4. die entsprechenden Mutationen oder die sie enthaltenden, zu einer Arbeitseinheit (UOW) gehörenden Nachrichten (M1 .. Mn) abhängig von Bedingungsvorgaben zumindest teilweise an weitere Datenbank- oder Anwendungsprogramme zu verteilen.

2. Rechnernetzwerksystem nach einem der vorhergehenden Ansprüche, bei dem
2.1. ein Kapselungsmodulprogramm (KM) dazu eingerichtet und programmiert ist, abhängig von dem Erreichen eines vorbestimmten Parameters von einem Stapelverarbeitungslauf kommende Arbeitseinheiten (UOW) in entsprechende Nachrichten (M1 .. Mn) aufzulösen und in eine Transferdatenbank (Q1) zu schreiben, und
2.2. ein Monitorsoftwaremodul vorgesehen ist, das dazu eingerichtet und programmiert ist, nach dem Erreichen des vorbestimmten Parameters den Inhalt der Transferdatenbank (Q1) an die zweite Datenbank (DB2) zu übertragen.

3. Rechnernetzwerksystem nach einem der vorhergehenden Ansprüche, bei dem 3.1. der vorbestimmte Parameter eine vorbestimmte Zeit, eine vorbestimmte Datenmenge, oder dergl. ist.

4. Rechnernetzwerksystem nach einem der vorhergehenden Ansprüche, bei dem 4.1. der Inhalt der Transferdatenbank (Q1) als geschlossene Stapeltransportdatei an die zweite Datenbank (DB2) übertragen wird.

5. Rechnernetzwerksystem nach einem der vorhergehenden Ansprüche, bei dem 5.1. der Inhalt der Transferdatenbank (Q1) an die Steuerung (HS) der zweiten Datenbank (DB2) übertragen wird.

6. Rechnernetzwerksystem nach einem der vorhergehenden Ansprüche, bei dem 6.1. die Steuerung (HS) der zweiten Datenbank (DB2) zu jedem Datenbank- oder Anwendungsprogramm, das Daten aus der ersten Datenbank (DB1) empfängt, ein Koexistenz-Elementprogramm-Modul mit Daten speist, das dazu eingerichtet und programmiert ist,
6.1.1. diese Daten für das jeweilige Datenbank- oder Anwendungsprogramm spezifisch zu synchronisieren, und
6.1.2. entsprechend den zu einer Arbeitseinheit (UOW) gehörenden Nachrichten (M1 .. Mn) in der Eingangswarteschlange (Qin) Mutationen in der zweiten Datenbank (DB2) oder dem Anwendungsprogramm bzw. der zu dem jeweiligen Anwendungsprogramm gehörenden Datenbank, auszuführen.

7. Rechnernetzwerksystem nach einem der vorhergehenden Ansprüche, bei dem 7.1. die Steuerung (HS) dazu eingerichtet und programmiert ist, aus Tabellen die Information zu entnehmen, aus der sich ergibt, welches der Koexistenz-Elementprogramme mit welchen Inhalten zu beliefern ist.

8. Rechnernetzwerksystem nach einem der vorhergehenden Ansprüche, bei dem für
8.1. die Steuerung (HS) eine erste, zweidimensionale Tabelle geführt wird, und die Steuerung (HS) dazu eingerichtet und programmiert ist, diese Tabelle zu lesen, in der
8.1.1. zu jedem Koexistenz-Elementprogramm-Modul eine Zeile existiert, in der das zugehörige Datenbank- oder Anwendungsprogramm vorzugsweise mit seiner Bezeichnung identifiziert ist, und
8.1.2. für jede Mutation bzw. Nachricht eine Spalte existiert, in die drei unterschiedliche Werte eingetragen werden können, wobei ein erster Wert bezeichnet, dass das entsprechende Datenbank- oder Anwendungsprogramm dieses in der Mutation bzw. Nachricht übermittelte Attribut nicht benötigt oder verarbeiten kann, ein zweiter Wert bezeichnet, dass das entsprechende Datenbank- oder Anwendungsprogramm dieses in der Mutation bzw. Nachricht übermittelte Attribut verarbeiten kann, jedoch nur damit beliefert wird, falls sich dessen Wert geändert hat, und ein dritter Wert bezeichnet, dass das entsprechende Datenbank- oder Anwendungsprogramm dieses Attribut verarbeiten kann, und in jedem Fall damit zu beliefern ist.

9. Rechnernetzwerksystem nach einem der vorhergehenden Ansprüche, bei dem für
9.1. die Steuerung (HS) eine zweite, dreidimensionale Tabelle geführt wird, und die Steuerung (HS) dazu eingerichtet und programmiert ist, diese Tabelle zu lesen, wobei in der Tabelle
9.1.1. der "Nachrichten-Typ", das " Datenbank- oder Anwendungsprogramm" und das "Attribut der Datenbank" geführt werden, wobei
9.1.2. für jeden Nachrichten-Typ eine zweidimensionale Untertabelle existiert,
9.1.3. für jedes Datenbank- oder Anwendungsprogramm, zu dem es ein Koexistenz-Elementprogramm-Modul gibt, in der zweidimensionalen Untertabelle eine Spalte geführt ist, in der das Datenbank- oder Anwendungsprogramm mit seiner Bezeichnung identifiziert ist, und für
9.1.4. jedes in der Mutation bzw. Nachricht übermittelte Attribut in der zweidimensionalen Untertabelle eine Zeile existiert, in der zwei unterschiedliche Werte eingetragen werden können, von denen der erste bedeutet, dass das Datenbank- oder Anwendungsprogramm von diesem Attribut der Nachricht nicht betroffen ist, und der zweite bedeutet, dass das Datenbank- oder Anwendungsprogramm von diesem Attribut der Nachricht betroffen ist.

10. Rechnernetzwerksystem nach einem der vorhergehenden Ansprüche, bei dem 10.1. die Steuerung (HS) der zweiten Datenbank (DB2) dazu eingerichtet und programmiert ist, die zu einer Arbeitseinheit (UOW) gehörenden Nachrichten (M1 .. Mn) an die jeweiligen Koexistenz-Elementprogramm-Module zu übertragen, von denen diese Nachrichten (M1 .. Mn) weiterverarbeitet werden, wobei die jeweiligen Koexistenz-Elementprogramm-Module dazu eingerichtet und programmiert sind,
10.1.1. nach einer erfolgreichen Weiterverarbeitung durch ein jeweiliges Koexistenz-Elementprogramm ein OK-Flag in einer Tabelle zu setzen, und/oder
10.1.2. ein NOK-Flag zusammen mit der Bezeichnung des jeweiligen Koexistenz-Elementprogramms in einer Fehlerbehandlungstabelle einzutragen, damit sie einer Visualisierung und/oder Nacharbeitung bzw. Fehlerbehebung zur Verfügung stehen.

11. Rechnernetzwerksystem nach einem der vorhergehenden Ansprüche, bei dem
11.1. die Nacharbeitung bzw. Fehlerbehebung von nicht erfolgreich durch Koexistenz-Elementprogramme weiterverarbeiteten Nachrichten (M1 .. Mn) durch
11.1.1. ein wiederholtes Versenden der nicht erfolgreich durch Koexistenz-Elementprogramme weiterverarbeiteten Nachrichten (M1 .. Mn) durch die Steuerung (HS) der zweiten Datenbank (DB2) an das jeweilige Koexistenz-Elementprogramm zur erneuten Weiterverarbeitung,
11.1.2. eine Nachlieferung der nicht erfolgreich durch Koexistenz-Elementprogramme weiterverarbeiteten Nachrichten (M1 .. Mn) aus der ersten Datenbank (DB1) an das jeweilige Koexistenz-Elementprogramm zur erneuten Weiterverarbeitung, oder
11.1.3. ein Löschen der nicht erfolgreich durch Koexistenz-Elementprogramme weiterverarbeiteten Nachrichten (M1 .. Mn) aus der zweiten Datenbank (DB2) erfolgt.

12. Rechnernetzwerksystem nach einem der vorhergehenden Ansprüche, bei dem 12.1. die Zugriffe durch die Arbeitseinheiten (UOW) auf die erste Datenbank (DB1) vermittels eines Kapselungsmoduls (KM) erfolgen, das dazu eingerichtet und programmiert ist, dass
12.1.1. ihm die Arbeitseinheiten (UOW) übergeben werden,
12.1.2. von ihm übernommene Arbeitseinheiten (UOW) in eine oder mehrere Nachrichten (M1 .. Mn) aufgelöst werden,
12.1.3. die Nachrichten (M1 .. Mn) in der ersten Datenbank (DB1) eingetragen werden und
12.1.4. die Nachrichten (M1 .. Mn) an die zweite Datenbank (DB2) versendet werden.

13. Rechnernetzwerksystem nach einem der vorhergehenden Ansprüche , bei dem 13.1. das Kapselungsmodulprogramm (KM) dazu eingerichtet und programmiert ist, die erste Datenbank mutierende Zugriffe von Applikationssoftwareprogrammen und anderen Programmen für diese auszuführen, indem diese Programme ihre für die erste Datenbank (DB1) bestimmten Mutationsbefehle an das Kapselungsmodulprogramm (KM) richten, welches die eigentlichen Zugriffe auf die erste Datenbank (DB1) ausführt.

14. Rechnernetzwerksystem nach einem der vorhergehenden Ansprüche, bei dem 14.1. das Kapselungsmodulprogramm (KM) dazu eingerichtet und programmiert ist, zu prüfen, ob es insbesondere hinsichtlich Übertragungsdauer und Übertragungsmenge bzw. Verarbeitungsaufwand im Kontext der zweiten Datenbank (DB2) effizienter ist, entweder
14.1.1. die aus der Anwendung der Arbeitseinheit (UOW) auf die erste Datenbank (DB1) resultiernden mutierten Einträge mittels einzelner Funktionen (F1 .. Fn) aus der ersten Datenbank (DB2) an die zweite Datenbank (DB1) abzusenden, oder
14.1.2. die aus der Anwendung der Arbeitseinheit (UoW) auf die erste Datenbank (DB1) resultierenden mutierten Einträge mittels einzelner Nachrichten (M1 .. Mn) aus der ersten Datenbank (DB1) an die zweite Datenbank (DB2) zu versenden.

15. Rechnernetzwerksystem nach einem der vorhergehenden Ansprüche, bei dem 15.1. das Kapselungsmodulprogramm (KM) dazu eingerichtet und programmiert ist, die Nachrichten (M1 .. Mn) mit einem die jeweilige Nachricht kennzeichnenden ersten Bezeichner (B1) zu versehen, bevor sie durch das Kapselungsmodulprogramm (KM) an die zweite Datenbank (DB2) versendet werden.

16. Rechnernetzwerksystem nach einem der vorhergehenden Ansprüche, bei dem 16.1. das Kapselungsmodulprogramm (KM) dazu eingerichtet und programmiert ist, den ersten Bezeichner (B1) von einer vorzugsweise zentralen Instanz zu holen, die den ersten Bezeichner als Zeitstempel oder als Laufnummer ausgestaltet.

17. Rechnernetzwerksystem nach einem der vorhergehenden Ansprüche, bei dem 17.1. die jeweilige Nachricht (M1.. Mn), den zu mutierenden oder zu erzeugenden Inhalt der ersten Datenbank (DB1), und/oder den mutierten oder erzeugten Inhalt der ersten Datenbank (DB1) enthält und in der ersten und/oder der zweiten Datenbank (DB2) abgelegt wird.

18. Rechnernetzwerksystem nach einem der vorhergehenden Ansprüche, bei dem 18.1.die jeweilige Nachricht (M1.. Mn), eine Kennung der auszuführenden Aktion (S, M, D), den zu mutierenden oder zu erzeugenden Inhalt der ersten Datenbank (DB1), und/ oder den mutierten oder erzeugten Inhalt der ersten Datenbank (DB1) abhängig von der auszuführenden Aktion (S, M, D) enthält.

19. Rechnernetzwerksystem nach einem der vorhergehenden Ansprüche, bei dem 19.1. das Kapselungsmodulprogramm (KM) dazu eingerichtet und programmiert ist, die Anzahl der Nachrichten (M1 .. Mn), in die eine jeweilige Arbeitseinheit (UOW) aufgelöst wird, und einen ersten Bezeichner (B1) in einer Abschlussnachricht (ER) abzulegen, die dann durch das Kapselungsmodulprogramm (KM) an die zweite Datenbank (DB2) versendet wird.

20. Rechnernetzwerksystem nach einem der vorhergehenden Ansprüche, bei dem 20.1. das Kapselungsmodulprogramm (KM) dazu eingerichtet und programmiert ist, die auszusendenden Nachrichten (M1 .. Mn) sowie die Abschlussnachricht (ER) in eine Ausgangswarteschlange (Qout) zu stellen, von wo sie an eine Eingangswarteschlange (Qin) einer Steuerung (HS) der zweiten Datenbank (DB2) gesendet werden.

21. Rechnernetzwerksystem nach einem der vorhergehenden Ansprüche, bei dem 21.1. das Kapselungsmodulprogramm (KM) dazu eingerichtet und programmiert ist, seine Funktionalität (KM) durch Referenzdaten zu steuern.

22. Rechnernetzwerksystem nach einem der vorhergehenden Ansprüche, bei dem die Referenzdaten das Kapselungsmodulprogramm (KM) so steuern, dass 22.1. die erste Datenbank (DB1) mutiert wird, und/oder 22.2. eine oder mehrere Nachrichten (M1 .. Mn) an die zweite Datenbank (DB2) versendet wird.

23. Rechnernetzwerksystem nach einem der vorhergehenden Ansprüche, bei dem 23.1. eine Sotftwareprogramm-Komponente vorgesehen ist, durch die bei einer von einer Applikations-Arbeitsstation auf die erste Datenbank (DB1) initiierten Transaktion eine Schwester-Transaktion auf zweite Datenbank (DB2) aufgerufen werden kann und umgekehrt, wobei sich aus der Sicht der Applikations-Arbeitsstation die Schwester-Transaktion auf der Seite der zweiten Datenbank (DB2) analog zu ihrem Pendant auf der Seite der ersten Datenbank (DB1) verhält.

24. Rechnernetzwerksystem nach einem der vorhergehenden Ansprüche, bei dem 24.1. bei der Datenbankeintrags-orientierten Synchronisation durch eine Transaktion der ersten Datenbank (DB1) mutierte Einträge durch das Kapselungsmodul zur Koexistenz-Hauptsteuerung übermittelt werden, wobei
24.2. die Koexistenz-Hauptsteuerung Koexistenz-Dienstprogramme des Koexistenz-Elementes der zweiten Datenbankumgebung aufruft, um die Einträge bzw. Mutationen der ersten Datenbank (DB1) in die zweite Datenbankumgebung zu bringen, und wobei
24.3. nach einer Mutation der zweiten Datenbankeinträge von der Koexistenz-Hauptsteuerung das oder die Koexistenz-Elemente bzw. Koexistenz-Dienstprogramme der Applikationssoftware-Programme aufgerufen werden, welche Adaptionsregeln von der ersten auf die zweite Datenbank bzw. auf die Applikationssoftware-Programme in der zweiten Datenbankumgebung enthalten.

25. Rechnergestütztes Verfahren zum Aufbauen und/oder Synchronisieren einer r zweiten Datenbank (DB2) aus/mit einer ersten Datenbank (DB1), wobei wenigstens auf die erste Datenbank (DB1) Zugriffe durch Arbeitseinheiten (UOW) von wenigstens einer Applikations-Arbeitsstation ausgeführt werden um Inhalte der Datenbank (DB1) zu erzeugen, zu verändern oder zu löschen, mit den Schritten
25.1. Vorhalten und Pflegen der ersten Datenbank (DB1) mit wenigstens einem ersten Server (S1), der mit der wenigstens einen Applikations-Arbeitsstation verbunden ist,
25.2.Vorhalten und Pflegen der zweiten Datenbank (DB2) mit wenigstens einem zweiten Server (S2),
25.3. Bereitstellen wenigstens einer die beiden Server (S1, S2) verbindenden Datenverbindung,
25.4. Bereitstellen einer Steuerung (HS) der zweiten Datenbank (DB2), die dazu eingerichtet und programmiert ist,
25.4.1. die an sie gesendeten Nachrichten (M1 .. Mn) aus einer Eingangswarteschlange (Qin) zu lesen,
25.4.2. zu prüfen, ob alle zu einer Arbeitseinheit (UOW) gehörenden Nachrichten (M1 .. Mn) in der Eingangswarteschlange (Qin) angekommen sind,
25.4.3. die entsprechenden Mutationen in der zweiten Datenbank (DB2) auszuführen, wenn alle zu einer Arbeitseinheit (UOW) gehörenden Nachrichten (M1 .. Mn) in der Eingangswarteschlange (Qin) angekommen sind, und ggf.
25.4.4. die entsprechenden Mutationen oder die sie enthaltenden, zu einer Arbeitseinheit (UOW) gehörenden Nachrichten (M1 .. Mn) abhängig von Bedingungsvorgaben zumindest teilweise an weitere Datenbank- oder Anwendungsprogramme zu verteilen.

26. Rechnergestütztes Verfahren nach dem vorhergehenden Anspruch, bei dem
26.1. ein Kapselungsmodulprogramm (KM) dazu eingerichtet und programmiert ist, abhängig von dem Erreichen eines vorbestimmten Parameters von einem Stapelverarbeitungslauf kommende Arbeitseinheiten (UOW) in entsprechende Nachrichten (M1 .. Mn) aufzulösen und in eine Transferdatenbank (Q1) zu schreiben, und
26.2. ein Monitorsoftwaremodul vorgesehen ist, das dazu eingerichtet und programmiert ist, nach dem Erreichen des vorbestimmten Parameters den Inhalt der Transferdatenbank (Q1) an die zweite Datenbank (DB2) zu übertragen.

27. Rechnergestütztes Verfahren nach einem der vorhergehenden Ansprüche, bei dem
27.1. die Steuerung (HS) der zweiten Datenbank (DB2) zu jedem Datenbank- oder Anwendungsprogramm, das Daten aus der ersten Datenbank (DB1) empfängt, ein Koexistenz-Elementprogramm-Modul mit Daten speist, das dazu eingerichtet und programmiert ist,
27.1.1. diese Daten für das jeweilige Datenbank- oder Anwendungsprogramm spezifisch zu synchronisieren, und
27.1.2. entsprechend den zu einer Arbeitseinheit (UOW) gehörenden Nachrichten (M1 .. Mn) in der Eingangswarteschlange (Qin) Mutationen in der zweiten Datenbank (DB2) oder dem Anwendungsprogramm bzw. der zu dem jeweiligen Anwendungsprogramm gehörenden Datenbank, auszuführen.

28. Rechnergestütztes Verfahren nach einem der vorhergehenden Ansprüche, bei dem für
28.1. die Steuerung (HS) eine erste, zweidimensionale Tabelle geführt wird, und die Steuerung (HS) dazu eingerichtet und programmiert ist, diese Tabelle zu lesen, in der
28.1.1. zu jedem Koexistenz-Elementprogramm-Modul eine Zeile existiert, in der das zugehörige Datenbank- oder Anwendungsprogramm vorzugsweise mit seiner Bezeichnung identifiziert ist, und
28.1.2. für jede Mutation bzw. Nachricht eine Spalte existiert, in die drei unterschiedliche Werte eingetragen werden können, wobei ein erster Wert bezeichnet, dass das entsprechende Datenbank- oder Anwendungsprogramm dieses in der Mutation bzw. Nachricht übermittelte Attribut nicht benötigt oder verarbeiten kann, ein zweiter Wert bezeichnet, dass das entsprechende Datenbank- oder Anwendungsprogramm dieses in der Mutation bzw. Nachricht übermittelte Attribut verarbeiten kann, jedoch nur damit beliefert wird, falls sich dessen Wert geändert hat, und ein dritter Wert bezeichnet, dass das entsprechende Datenbank- oder Anwendungsprogramm dieses Attribut verarbeiten kann, und in jedem Fall damit zu beliefern ist.

29. Rechnergestütztes Verfahren nach einem der vorhergehenden Ansprüche, bei dem für
29.1. die Steuerung (HS) eine zweite, dreidimensionale Tabelle geführt wird, und die Steuerung (HS) dazu eingerichtet und programmiert ist, diese Tabelle zu lesen, wobei in der Tabelle
29.1.1. der "Nachrichten-Typ", das " Datenbank- oder Anwendungsprogramm" und das "Attribut der Datenbank" geführt werden, wobei
29.1.2. für jeden Nachrichten-Typ eine zweidimensionale Untertabelle existiert,
29.1.3. für jedes Datenbank- oder Anwendungsprogramm, zu dem es ein Koexistenz-Elementprogramm-Modul gibt, in der zweidimensionalen Untertabelle eine Spalte geführt ist, in der das Datenbank- oder Anwendungsprogramm mit seiner Bezeichnung identifiziert ist, und für
29.1.4. jedes in der Mutation bzw. Nachricht übermittelte Attribut in der zweidimensionalen Untertabelle eine Zeile existiert, in der zwei unterschiedliche Werte eingetragen werden können, von denen der erste bedeutet, dass das Datenbank- oder Anwendungsprogramm von diesem Attribut der Nachricht nicht betroffen ist, und der zweite bedeutet, dass das Datenbank- oder Anwendungsprogramm von diesem Attribut der Nachricht betroffen ist.

30. Rechnergestütztes Verfahren nach einem der vorhergehenden Ansprüche, bei dem
30.1. das Kapselungsmodulprogramm (KM) dazu eingerichtet und programmiert ist, die erste Datenbank mutierende Zugriffe von Applikationssoftwareprogrammen und anderen Programmen für diese auszuführen, indem diese Programme ihre für die erste Datenbank (DB1) bestimmten Mutationsbefehle an das Kapselungsmodulprogramm (KM) richten, welches die eigentlichen Zugriffe auf die erste Datenbank (DB1) ausführt.

31. Rechnergestütztes Verfahren nach einem der vorhergehenden Ansprüche, bei dem
31.1. das Kapselungsmodulprogramm (KM) dazu eingerichtet und programmiert ist, zu prüfen, ob es insbesondere hinsichtlich Übertragungsdauer und Übertragungsmenge bzw. Verarbeitungsaufwand im Kontext der zweiten Datenbank (DB2) effizienter ist, entweder
31.1.1. die aus der Anwendung der Arbeitseinheit (UOW) auf die erste Datenbank (DB1) resultiernden mutierten Einträge mittels einzelner Funktionen (F1 .. Fn) aus der ersten Datenbank (DB2) an die zweite Datenbank (DB1) abzusenden, oder
31.1.2. die aus der Anwendung der Arbeitseinheit (UoW) auf die erste Datenbank (DB1) resultierenden mutierten Einträge mittels einzelner Nachrichten (M1 .. Mn) aus der ersten Datenbank (DB1) an die zweite Datenbank (DB2) zu versenden.

32. Computerprogramm-Trägeremedium mit einem darauf befindlichen Computer-Programmcode, der, wenn er in einem Computer ausgeführt wird, dazu eingerichtet ist, das rechnergestützte Verfahren nach einem der vorhergehenden Ansprüche zu bewirken.

33. Computerprogrammprodukt mit einem Computer-ausführbaren Programmcode, der, wenn er in einem Computer ausgeführt wird, dazu eingerichtet ist, das rechnergestützte Verfahren nach einem der vorhergehenden Ansprüche zu bewirken.

## Geänderte Patentansprüche

### Geänderte Patentansprüche gemäss Regel 86(2) EPÜ.

**1.** Rechnernetzwerksystem zum Aufbauen und/oder Synchronisieren einer zweiten Datenbank (DB2) aus/mit einer ersten Datenbank (DB1), wobei wenigstens auf die erste Datenbank (DB1) Zugriffe durch Arbeitseinheiten (UOW) von wenigstens einer Applikations-Arbeitsstation ausgeführt werden um Inhalte der Datenbank (DB1) zu erzeugen, zu verändern oder zu löschen, mit
1.1. wenigstens einem ersten Server (S1) zum Vorhalten und Pflegen der ersten Datenbank (DB1), der mit der wenigstens einen Applikations-Arbeitsstation verbunden ist,
1.2. einem Kapselungsmodulprogramm (KM), das dazu eingerichtet und programmiert ist, abhängig von dem Erreichen eines vorbestimmten Parameters von einem Stapelverarbeitungslauf kommende Arbeitseinheiten (UOW) in entsprechende Nachrichten (M1 .. Mn) aufzulösen und in eine Transferdatenbank (Q1) zu schreiben, und wobei
1.3. die Nachrichten (M1 .. Mn) jeweils eine Kennung einer auszuführenden Aktion (S, M, D), den zu mutierenden oder zu erzeugenden Inhalt der ersten Datenbank (DB1), und/oder den mutierten oder erzeugten Inhalt der ersten Datenbank (DB1) abhängig von der auszuführenden Aktion (S, M, D) aufweisen,
1.4. wenigstens einem zweiten Server (S2) zum Vorhalten und Pflegen der zweiten Datenbank (DB2)1.5. wenigstens einer die beiden Server (S1, S2) verbindenden Datenverbindung, wobei
1.6. ein Monitorsoftwaremodul vorgesehen ist, das dazu eingerichtet und programmiert ist, nach dem Erreichen eines vorbestimmten Parameters den Inhalt der Transferdatenbank (Q1) an die zweite Datenbank (DB2) zu übertragen,
1.7. eine Steuerung (HS) der zweiten Datenbank (DB2) dazu eingerichtet und programmiert ist,
1.7.1. an die Steuerung (HS) von der ersten Datenbank (DB1) gesendete Nachrichten (M1 .. Mn) aus einer Eingangswarteschlange (Qin) zu lesen, und
1.7.2. zu prüfen, ob alle zu einer Arbeitseinheit (UOW) gehörenden Nachrichten (M1 .. Mn) in der Eingangswarteschlange (Qin) angekommen sind,
1.7.3. die entsprechenden Mutationen in der zweiten Datenbank (DB2) auszuführen, wenn alle zu einer Arbeitseinheit (UOW) gehörenden Nachrichten (M1 .. Mn) in der Eingangswarteschlange (Qin) angekommen sind, und ggf.
1.7.4. die entsprechenden Mutationen oder die sie enthaltenden, zu einer Arbeitseinheit (UOW) gehörenden Nachrichten (M1 .. Mn) abhängig von Bedingungsvorgaben zumindest teilweise an weitere Datenbank- oder Anwendungsprogramme zu verteilen, wobei
1.8. das Kapselungsmodulprogramm (KM) dazu eingerichtet und programmiert ist, zu prüfen, ob es insbesondere hinsichtlich Übertragungsdauer und Übertragungsmenge bzw. Verarbeitungsaufwand im Kontext der zweiten Datenbank (DB2) effizienter ist, entweder
1.8.1 die aus der Anwendung der Arbeitseinheit (UOW) auf die erste Datenbank (DB1) resultierenden mutierten Einträge mittels einzelner Funktionen (F1 .. Fn) aus der ersten Datenbank (DB2) an die zweite Datenbank (DB1) abzusenden, oder
1.8.2 die aus der Anwendung der Arbeitseinheit (UoW) auf die erste Datenbank (DB1) resultierenden mutierten Einträge mittels einzelner Nachrichten (M1 .. Mn) aus der ersten Datenbank (DB1) an die zweite Datenbank (DB2) zu versenden.

**2.** Rechnernetzwerksystem nach dem vorhergehenden Anspruch, bei dem
2.1. der vorbestimmte Parameter eine vorbestimmte Zeit, eine vorbestimmte Datenmenge, oder dergl. ist.

**3.** Rechnernetzwerksystem nach einem der vorhergehenden Ansprüche, bei dem
3.1. der Inhalt der Transferdatenbank (Q1) als geschlossene Stapeltransportdatei an die zweite Datenbank (DB2) übertragen wird.

**4.** Rechnernetzwerksystem nach einem der vorhergehenden Ansprüche, bei dem
4.1. der Inhalt der Transferdatenbank (Q1) an die Steuerung (HS) der zweiten Datenbank (DB2) übertragen wird.

**5.** Rechnernetzwerksystem nach einem der vorhergehenden Ansprüche, bei dem
5.1. die Steuerung (HS) der zweiten Datenbank (DB2) zu jedem Datenbank- oder Anwendungsprogramm, das Daten aus der ersten Datenbank (DB1) empfängt, ein Koexistenz-Elementprogramm-Modul mit Daten speist, das dazu eingerichtet und programmiert ist,
5.1.1. diese Daten für das jeweilige Datenbank- oder Anwendungsprogramm spezifisch zu synchronisieren, und
5.1.2, entsprechend den zu einer Arbeitseinheit (UOW) gehörenden Nachrichten (M1 .. Mn) in der Eingangswarteschlange (Qin) Mutationen in der zweiten Datenbank (DB2) oder dem Anwendungsprogramm bzw. der zu dem jeweiligen Anwendungsprogramm gehörenden Datenbank, auszuführen.

**6.** Rechnernetzwerksystem nach einem der vorhergehenden Ansprüche, bei dem 6.1. die Steuerung (HS) dazu eingerichtet und programmiert ist, aus Tabellen die Information zu entnehmen, aus der sich ergibt, welches der Koexistenz-Elementprogramme mit welchen Inhalten zu beliefern ist.

**7.** Rechnernetzwerksystem nach einem der vorhergehenden Ansprüche, bei dem für
7.1. die Steuerung (HS) eine erste, zweidimensionale Tabelle geführt wird, und die Steuerung (HS) dazu eingerichtet und programmiert ist, diese Tabelle zu lesen, in der
7.1.1. zu jedem Koexistenz-Elementprogramm-Modul eine Zeile existiert, in der das zugehörige Datenbank- oder Anwendungsprogramm vorzugsweise mit seiner Bezeichnung identifiziert ist, und
7.1.2. für jede Mutation bzw. Nachricht eine Spalte existiert, in die drei unterschiedliche Werte eingetragen werden können, wobei ein erster Wert bezeichnet, dass das entsprechende Datenbank- oder Anwendungsprogramm dieses in der Mutation bzw. Nachricht übermittelte Attribut nicht benötigt oder verarbeiten kann, ein zweiter Wert bezeichnet, dass das entsprechende Datenbank- oder Anwendungsprogramm dieses in der Mutation bzw. Nachricht übermittelte Attribut verarbeiten kann, jedoch nur damit beliefert wird, falls sich dessen Wert geändert hat, und ein dritter Wert bezeichnet, dass das entsprechende Datenbank- oder Anwendungsprogramm dieses Attribut verarbeiten kann, und in jedem Fall damit zu beliefern ist.

**8.** Rechnernetzwerksystem nach einem der vorhergehenden Ansprüche, bei dem für
8.1. die Steuerung (HS) eine zweite, dreidimensionale Tabelle geführt wird, und die Steuerung (HS) dazu eingerichtet und programmiert ist, diese Tabelle zu lesen, wobei in der Tabelle
8.1.1. der "Nachrichten-Typ", das" Datenbank- oder Anwendungsprogramm" und das "Attribut der Datenbank" geführt werden, wobei
8.1.2. für jeden Nachrichten-Typ eine zweidimensionale Untertabelle existiert,
8.1.3. für jedes Datenbank- oder Anwendungsprogramm, zu dem es ein Koexistenz-Elementprogramm-Modul gibt, in der zweidimensionalen Untertabelle eine Spalte geführt ist, in der das Datenbank- oder Anwendungsprogramm mit seiner Bezeichnung identifiziert ist, und für
8.1.4. jedes in der Mutation bzw. Nachricht übermittelte Attribut in der zweidimensionalen Untertabelle eine Zeile existiert, in der zwei unterschiedliche Werte eingetragen werden können, von denen der erste bedeutet, dass das Datenbank- oder Anwendungsprogramm von diesem Attribut der Nachricht nicht betroffen ist, und der zweite bedeutet, dass das Datenbank- oder Anwendungsprogramm von diesem Attribut der Nachricht betroffen ist.

**9.** Rechnernetzwerksystem nach einem der vorhergehenden Ansprüche, bei dem
9.1. die Steuerung (HS) der zweiten Datenbank (DB2) dazu eingerichtet und programmiert ist, die zu einer Arbeitseinheit (UOW) gehörenden Nachrichten (M1 .. Mn) an die jeweiligen Koexistenz-Elementprogramm-Module zu übertragen, von denen diese Nachrichten (M1 .. Mn) weiterverarbeitet werden, wobei die jeweiligen Koexistenz-Elementprogramm-Module dazu eingerichtet und programmiert sind,
9.1.1. nach einer erfolgreichen Weiterverarbeitung durch ein jeweiliges Koexistenz-Elementprogramm ein OK-Flag in einer Tabelle zu setzen, und/oder
9.1.2. ein NOK-Flag zusammen mit der Bezeichnung des jeweiligen Koexistenz-Elementprogramms in einer Fehlerbehandlungstabelle einzutragen, damit sie einer Visualisierung und/oder Nacharbeitung bzw. Fehlerbehebung zur Verfügung stehen.

**10.** Rechnernetzwerksystem nach einem der vorhergehenden Ansprüche, bei dem
10.1. die Nacharbeitung bzw. Fehlerbehebung von nicht erfolgreich durch Koexistenz-Elementprogramme weiterverarbeiteten Nachrichten (M1 .. Mn) durch
10.1.1. ein wiederholtes Versenden der nicht erfolgreich durch Koexistenz-Elementprogramme weiterverarbeiteten Nachrichten (M1 .. Mn) durch die Steuerung (HS) der zweiten Datenbank (DB2) an das jeweilige Koexistenz-Elementprogramm zur erneuten Weiterverarbeitung,
10.1.2. eine Nachlieferung der nicht erfolgreich durch Koexistenz-Elementprogramme weiterverarbeiteten Nachrichten (M1 .. Mn) aus der ersten Datenbank (DB1) an das jeweilige Koexistenz-Elementprogramm zur erneuten Weiterverarbeitung, oder
10.1.3. ein Löschen der nicht erfolgreich durch Koexistenz-Elementprogramme weiterverarbeiteten Nachrichten (M1 .. Mn) aus der zweiten Datenbank (DB2) erfolgt.

**11.** Rechnernetzwerksystem nach einem der vorhergehenden Ansprüche, bei dem
11.1. die Zugriffe durch die Arbeitseinheiten (UOW) auf die erste Datenbank (DB1) vermittels eines Kapselungsmoduls (KM) erfolgen, das dazu eingerichtet und programmiert ist, dass
11.1.1. ihm die Arbeitseinheiten (UOW) übergeben werden,
11.1.2. von ihm übernommene Arbeitseinheiten (UOW) in eine oder mehrere Nachrichten (M1 .. Mn) aufgelöst werden,
11.1.3. die Nachrichten (M1 .. Mn) in der ersten Datenbank (DB1) eingetragen werden und
11.1.4. die Nachrichten (M1 .. Mn) an die zweite Datenbank (DB2) versendet werden.

**12.** Rechnernetzwerksystem nach einem der vorhergehenden Ansprüche, bei dem
12.1. das Kapselungsmodulprogramm (KM) dazu eingerichtet und programmiert ist, die erste Datenbank mutierende Zugriffe von Applikationssoftwareprogrammen und anderen Programmen für diese auszuführen, indem diese Programme ihre für die erste Datenbank (DB1) bestimmten Mutationsbefehle an das Kapselungsmodulprogramm (KM) richten, welches die eigentlichen Zugriffe auf die erste Datenbank (DB1) ausführt.
12.1.1.

**13.** Rechnernetzwerksystem nach einem der vorhergehenden Ansprüche, bei dem
13.1.das Kapselungsmodulprogramm (KM) dazu eingerichtet und programmiert ist, die Nachrichten (M1 .. Mn) mit einem die jeweilige Nachricht kennzeichnenden ersten Bezeichner (B1) zu versehen, bevor sie durch das Kapselungsmodulprogramm (KM) an die zweite Datenbank (DB2) versendet werden.

**14.** Rechnernetzwerksystem nach einem der vorhergehenden Ansprüche, bei dem
14.1. das Kapselungsmodulprogramm (KM) dazu eingerichtet und programmiert ist, den ersten Bezeichner (B1) von einer vorzugsweise zentralen Instanz zu holen, die den ersten Bezeichner als Zeitstempel oder als Laufnummer ausgestaltet.

**15.** Rechnernetzwerksystem nach einem der vorhergehenden Ansprüche, bei dem
15.1.die jeweilige Nachricht (M1.. Mn), den zu mutierenden oder zu erzeugenden Inhalt der ersten Datenbank (DB1), und/oder den mutierten oder erzeugten Inhalt der ersten Datenbank (DB1) enthält und in der ersten und/oder der zweiten Datenbank (DB2) abgelegt wird.

**16.** Rechnernetzwerksystem nach einem der vorhergehenden Ansprüche, bei dem
16.1.die jeweilige Nachricht (M1.. Mn), eine Kennung der auszuführenden Aktion (S, M, D), den zu mutierenden oder zu erzeugenden Inhalt der ersten Datenbank (DB1), und/ oder den mutierten oder erzeugten Inhalt der ersten Datenbank (DB1) abhängig von der auszuführenden Aktion (S, M, D) enthält.

**17.** Rechnernetzwerksystem nach einem der vorhergehenden Ansprüche, bei dem
17.1. das Kapselungsmodulprogramm (KM) dazu eingerichtet und programmiert ist, die Anzahl der Nachrichten (M1 .. Mn), in die eine jeweilige Arbeitseinheit (UOW) aufgelöst wird, und einen ersten Bezeichner (B1) in einer Abschlussnachricht (ER) abzulegen, die dann durch das Kapselungsmodulprogramm (KM) an die zweite Datenbank (DB2) versendet wird.

**18.** Rechnernetzwerksystem nach einem der vorhergehenden Ansprüche, bei dem
18.1. das Kapselungsmodulprogramm (KM) dazu eingerichtet und programmiert ist, die auszusendenden Nachrichten (M1 .. Mn) sowie die Abschlussnachricht (ER) in eine Ausgangswarteschlange (Qout) zu stellen, von wo sie an eine Eingangswarteschlange (Qin) einer Steuerung (HS) der zweiten Datenbank (DB2) gesendet werden.

**19.** Rechnernetzwerksystem nach einem der vorhergehenden Ansprüche, bei dem
19.1. das Kapselungsmodulprogramm (KM) dazu eingerichtet und programmiert ist, seine Funktionalität (KM) durch Referenzdaten zu steuern.

**20.** Rechnernetzwerksystem nach einem der vorhergehenden Ansprüche, bei dem die Referenzdaten das Kapselungsmodulprogramm (KM) so steuern, dass
20.1.die erste Datenbank (DB1) mutiert wird, und/oder
20.2. eine oder mehrere Nachrichten (M1 .. Mn) an die zweite Datenbank (DB2) versendet wird.

**21.** Rechnernetzwerksystem nach einem der vorhergehenden Ansprüche, bei dem
21.1. eine Softwareprogramm-Komponente vorgesehen ist, durch die bei einer von einer Applikations-Arbeitsstation auf die erste Datenbank (DB1) initiierten Transaktion eine Schwester-Transaktion auf zweite Datenbank (DB2) aufgerufen werden kann und umgekehrt, wobei sich aus der Sicht der Applikations-Arbeitsstation die Schwester-Transaktion auf der Seite der zweiten Datenbank (DB2) analog zu ihrem Pendant auf der Seite der ersten Datenbank (DB1) verhält.

**22.** Rechnernetzwerksystem nach einem der vorhergehenden Ansprüche, bei dem
22.1. bei der Datenbankeintrags-orientierten Synchronisation durch eine Transaktion der ersten Datenbank (DB1) mutierte Einträge durch das Kapselungsmodul zur Koexistenz-Hauptsteuerung übermittelt werden, wobei
22.2. die Koexistenz-Hauptsteuerung Koexistenz-Dienstprogramme des Koexistenz-Elementes der zweiten Datenbankumgebung aufruft, um die Einträge bzw. Mutationen der ersten Datenbank (DB1) in die zweite Datenbankumgebung zu bringen, und wobei
22.3. nach einer Mutation der zweiten Datenbankeinträge von der Koexistenz-Hauptsteuerung das oder die Koexistenz-Elemente bzw. Koexistenz-Dienstprogramme der Applikationssoftware-Programme aufgerufen werden, welche Adaptionsregeln von der ersten auf die zweite Datenbank bzw. auf die Applikationssoftware-Programme in der zweiten Datenbankumgebung enthalten.

**23.** Rechnergestütztes Verfahren zum Aufbauen und/oder Synchronisieren einer zweiten Datenbank (DB2) aus/mit einer ersten Datenbank (DB1), wobei wenigstens auf die erste Datenbank (DB1) Zugriffe durch Arbeitseinheiten (UOW) von wenigstens einer Applikations-Arbeitsstation ausgeführt werden um Inhalte der Datenbank (DB1) zu erzeugen, zu verändern oder zu löschen, mit den Schritten
23. 1. Vorhalten und Pflegen der ersten Datenbank (DB1) mit wenigstens einem ersten Server (S1), der mit der wenigstens einen Applikations-Arbeitsstation verbunden ist,23.2. Einrichten und Programmieren eines Kapselungsmodulprogramms (KM) derart, dass, abhängig von dem Erreichen eines vorbestimmten Parameters, von einem Stapelverarbeitungslauf kommende Arbeitseinheiten (UOW) in entsprechende Nachrichten (M1 .. Mn) aufgelöst und in eine Transferdatenbank (Q1) geschrieben werden, und wobei
23.3. die Nachrichten (M1 .. Mn) jeweils eine Kennung einer auszuführenden Aktion (S, M, D), den zu mutierenden oder zu erzeugenden Inhalt der ersten Datenbank (DB1), und/oder den mutierten oder erzeugten Inhalt der ersten Datenbank (DB1) abhängig von der auszuführenden Aktion (S, M, D) aufweisen,
23.4. Vorhalten und Pflegen der zweiten Datenbank (DB2) mit wenigstens einem zweiten Server (S2),
23.5. Bereitstellen wenigstens einer die beiden Server (S1, S2) verbindenden Datenverbindung,
23.6. Einrichten und Programmieren eines Monitorsoftwaremoduls, das nach dem Erreichen eines vorbestimmten Parameters den Inhalt der Transferdatenbank (Q1) an die zweite Datenbank (DB2) überträgt,
23.7. Bereitstellen einer Steuerung (HS) der zweiten Datenbank (DB2), die dazu eingerichtet und programmiert ist,
23.7.1 an die Steuerung (HS) gesendete Nachrichten (M1 .. Mn) aus einer Eingangswartexhlange (Qin) zu lesen, und
23.7.2 zu prüfen, ob alle zu einer Arbeitseinheit (UOW) gehörenden Nachrichten (M1 .. Mn) in der Eingangswarteschlange (Qin) angekommen sind,
23.7.3 die entsprechenden Mutationen in der zweiten Datenbank (DB2) auszuführen, wenn alle zu einer Arbeitseinheit (UOW) gehörenden Nachrichten (M1 .. Mn) in der Eingangswarteschlange (Qin) angekommen sind, und ggf.
23.7.4 die entsprechenden Mutationen oder die sie enthaltenden, zu einer Arbeitseinheit (UOW) gehörenden Nachrichten (M1 .. Mn) abhängig von Bedingungsvorgaben zumindest teilweise an weitere Datenbank- oder Anwendungsprogramme zu verteilen, und
23.8. Einrichten und Programmieren des Kapselungsmodulprogramms (KM) derart, dass es prüft, ob es insbesondere hinsichtlich Übertragungsdauer und Übertragungsmenge bzw. Verarbeitungsaufwand im Kontext der zweiten Datenbank (DB2) effizienter ist, entweder
23.8.1. die aus der Anwendung der Arbeitseinheit (UOW) auf die erste Datenbank (DB1) resultierenden mutierten Einträge mittels einzelner Funktionen (F1 .. Fn) aus der ersten Datenbank (DB2) an die zweite Datenbank (DB1) abzusenden, oder
23.8.2. die aus der Anwendung der Arbeitseinheit (UoW) auf die erste Datenbank (DB1) resultierenden mutierten Einträge mittels einzelner Nachrichten (M1 .. Mn) aus der ersten Datenbank (DB1) an die zweite Datenbank (DB2) zu versenden.

**24.** Rechnergestütztes Verfahren nach einem der vorhergehenden Verfahrensansprüche, bei dem
24.1. die Steuerung (HS) der zweiten Datenbank (DB2) zu jedem Datenbank- oder Anwendungsprogramm, das Daten aus der ersten Datenbank (DB1) empfängt, ein Koexistenz-Elementprogramm-Modul mit Daten speist, das dazu eingerichtet und programmiert ist,
24.1.1.diese Daten für das jeweilige Datenbank- oder Anwendungsprogramm spezifisch zu synchronisieren, und
24.1.2 entsprechend den zu einer Arbeitseinheit (UOW) gehörenden Nachrichten (M1 .. Mn) in der Eingangswarteschlange (Qin) Mutationen in der zweiten Datenbank (DB2) oder dem Anwendungsprogramm bzw. der zu dem jeweiligen Anwendungsprogramm gehörenden Datenbank, auszuführen.

**25.** Rechnergestütztes Verfahren nach einem der vorhergehenden Verfahrensansprüche, bei dem für
25.1. die Steuerung (HS) eine erste, zweidimensionale Tabelle geführt wird, und die Steuerung (HS) dazu eingerichtet und programmiert ist, diese Tabelle zu lesen, in der
25.1.1 zu jedem Koexistenz-Elementprogramm-Modul eine Zeile existiert, in der das zugehörige Datenbank- oder Anwendungsprogramm vorzugsweise mit seiner Bezeichnung identifiziert ist, und
25.1.2. für jede Mutation bzw. Nachricht eine Spalte existiert, in die drei unterschiedliche Werte eingetragen werden können, wobei ein erster Wert bezeichnet, dass das entsprechende Datenbank- oder Anwendungsprogramm dieses in der Mutation bzw. Nachricht übermittelte Attribut nicht benötigt oder verarbeiten kann, ein zweiter Wert bezeichnet, dass das entsprechende Datenbank- oder Anwendungsprogramm dieses in der Mutation bzw. Nachricht übermittelte Attribut verarbeiten kann, jedoch nur damit beliefert wird, falls sich dessen Wert geändert hat, und ein dritter Wert bezeichnet, dass das entsprechende Datenbank- oder Anwendungsprogramm dieses Attribut verarbeiten kann, und in jedem Fall damit zu beliefern ist.

**26.** Rechnergestütztes Verfahren nach einem der vorhergehenden Verfahrensansprüche, bei dem für
26.1 die Steuerung (HS) eine zweite, dreidimensionale Tabelle geführt wird, und die Steuerung (HS) dazu eingerichtet und programmiert ist, diese Tabelle zu lesen, wobei in der Tabelle
26.1.1. der "Nachrichten-Typ", das "Datenbank- oder Anwendungsprogramm" und das "Attribut der Datenbank" geführt werden, wobei
26.1.2. für jeden Nachrichten-Typ eine zweidimensionale Untertabelle existiert,
26.1.3. für jedes Datenbank- oder Anwendungsprogramm, zu dem es ein Koexistenz-Elementprogramm-Modul gibt, in der zweidimensionalen Untertabelle eine Spalte geführt ist, in der das Datenbank- oder Anwendungsprogramm mit seiner Bezeichnung identifiziert ist, und für
26.1.4. jedes in der Mutation bzw. Nachricht übermittelte Attribut in der zweidimensionalen Untertabelle eine Zeile existiert, in der zwei unterschiedliche Werte eingetragen werden können, von denen der erste bedeutet, dass das Datenbank- oder Anwendungsprogramm von diesem Attribut der Nachricht nicht betroffen ist, und der zweite bedeutet, dass das Datenbank- oder Anwendungsprogramm von diesem Attribut der Nachricht betroffen ist.

**27.** Rechnergestütztes Verfahren nach einem der vorhergehenden Verfahrensansprüche, bei dem
27.1. das Kapselungsmodulprogramm (KM) dazu eingerichtet und programmiert ist, die erste Datenbank mutierende Zugriffe von Applikationssoftwareprogrammen und anderen Programmen für diese auszuführen, indem diese Programme ihre für die erste Datenbank (DB1) bestimmten Mutationsbefehle an das Kapselungsmodulprogramm (KM) richten, welches die eigentlichen Zugriffe auf die erste Datenbank (DB1) ausführt.

**28.** Computerprogramm-Trägermedium mit einem darauf befindlichen Computer-Programmcode, der, wenn er in einem Computer ausgeführt wird, dazu eingerichtet ist, das rechnergestützte Verfahren nach einem der vorhergehenden Verfahrensansprüche zu bewirken.

**29.** Computerprogrammprodukt mit einem Computer-ausführbaren Programmcode, der, wenn er in einem Computer ausgeführt wird, dazu eingerichtet ist, das rechnergestützte Verfahren nach einem der vorhergehenden Verfahrensansprüche zu bewirken.
